# EUROPEAN PATENT APPLICATION

(11) **EP 4 832 385 A1**
(43) Date of publication of application: **28.10.2026**
(21) Application number: 25745468.6
(22) Date of filing: 17.01.2025
(51) Int. Cl.: H04L 1/00

(54) **METHOD AND DEVICE FOR ENCODING AND DECODING DATA IN COMMUNICATION OR BROADCASTING SYSTEM**

(30) Priority: 22.01.2024 KR 20240009674; 23.02.2024 KR 20240026738
(71) Applicant: Samsung Electronics Co., Ltd., Suwon-si, Gyeonggi-do 16677 (KR)
(72) Inventor: MYUNG, Seho, Suwon-si, Gyeonggi-do 16677 (KR); JANG, Min, Suwon-si, Gyeonggi-do 16677 (KR); JUNG, Euichang, Suwon-si, Gyeonggi-do 16677 (KR)
(74) Representative: Gulde & Partner
(86) International application number: PCT/KR2025/000987
(87) International publication number: WO 2025/159451

(57) **Abstract**

The present disclosure provides an efficient encoding and decoding method and device, the method and device: reducing a decoding latency; providing algebraic characteristics to be satisfied by a parity check matrix of a low density parity check (LDPC) code for reducing encoding complexity; and using the LDPC code having the algebraic characteristics.

## Description

### Technical Field

The present disclosure relates to a method and device for encoding and decoding data in a communication or broadcasting system.

### Background Art

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mecahnisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### Disclosure

### Technical Problem

The present disclosure provides an algebraic characteristic that a parity check matrix of a low density parity check (LDPC) code should satisfy to reduce a decoding latency and lower an encoding complexity. In addition, an efficient encoding and decoding method and device using the LDPC code having the algebraic characteristic are provided.

The present disclosure provides an algebraic characteristic that a parity check matrix of an LDPC code should satisfy to lower a block error rate or block error probability (BLER). In addition, an efficient encoding and decoding method and device using the LDPC code having the algebraic characteristic are provided.

The present disclosure provides an algebraic characteristic that a parity check matrix of an LDPC code should satisfy by appropriately combining the algebraic characteristics to simultaneously lower a decoding latency, an encoding complexity, and a BLER. In addition, an efficient encoding and decoding method and device using the LDPC code having the combined algebraic characteristic are provided.

The present disclosure provides a method for variably applying puncturing of LDPC encoded bits to support a trade-off between an encoding performance and a decoding latency. In addition, an efficient encoding and decoding method and device supporting the variable puncturing method are provided.

The present disclosure provides a device and method for efficiently decoding a low-density parity-check (LDPC) code in a communication or broadcasting system.

In addition, the present invention provides an LDPC decoding device and method for improving a decoding performance without an increase in a decoding complexity by applying suitable decoding scheduling according to the encoding method for the LDPC code in performing decoding of the LDPC code using a layered scheduling or a method corresponding thereto.

### Technical Solution

In a communication system according to an embodiment of the present disclosure, a data transmission method for a base station or a terminal may include: LDPC encoding data bits based on a base matrix and/or a parity check matrix; applying rate matching to the encoded bits; modulating the rate-matched encoded bits; and transmitting a modulated signal through a transmitting device, wherein the method is variably applied such that a part of the data bits is not included or is included in the encoded bits according to a configuration of a system.

In a communication system according to an embodiment of the present disclosure, a data reception method for a base station or a terminal may include: receiving a modulated signal corresponding to at least a part of encoded bits through a receiving device; performing demodulation to determine values for decoding based on the received signal; performing LDPC decoding based on the determined values and a base matrix and/or a parity check matrix; appropriately applying rate dematching to the LDPC decoded result; and determining data bits from the rate-dematched result, wherein the method is variably applied such that a part of the data bits is not included or is included in the encoded bits according to a configuration of a system.

In a method performed by a transmitting apparatus in a communication system according to an embodiment of the present disclosure, the method includes: determining a number of input bits; determining a base matrix based on the number of the input bits; determining a lifting size (Z) based on at least one of the number of the input bits or the base matrix; determining a parity check matrix based on at least one of the base matrix or the lifting size (Z); determining encoded bits by performing encoding based on the parity check matrix and the input bits; and transmitting at least a part of the encoded bits to a receiving apparatus, wherein, in case that a first configuration is indicated, an input bit of a first length among the input bits is not included in the encoded bits, and in case that a second configuration is indicated, an input bit of a second length among the input bits is not included in the encoded bits, and the second length is 0 or smaller than the first length.

In a method performed by a receiving apparatus in a communication system according to an embodiment of the present disclosure, the method includes: receiving a signal corresponding to at least a part of encoded bits; determining a number of input bits based on the signal; determining a base matrix based on the number of the input bits; determining a lifting size (Z) based on at least one of the number of the input bits or the base matrix; determining a parity check matrix based on at least one of the base matrix or the lifting size (Z); and performing decoding of the signal based on the parity check matrix, wherein, in case that a first configuration is indicated, an input bit of a first length among the input bits is not included in the encoded bits, and in case that a second configuration is indicated, an input bit of a second length among the input bits is not included in the encoded bits, and the second length is 0 or smaller than the first length.

In a transmitting apparatus in a communication system according to an embodiment of the present disclosure, the transmitting apparatus includes: a transmitter; and a controller coupled with the transmitter and configured to: determine a number of input bits, determine a base matrix based on the number of the input bits, determines a lifting size (Z) based on at least one of the number of the input bits or the base matrix, determine a parity check matrix based on at least one of the base matrix or the lifting size (Z), determine encoded bits by performing encoding based on the parity check matrix and the input bits, and transmit at least a part of the encoded bits to a receiver, wherein, in case that a first configuration is indicated, an input bit of a first length among the input bits is not included in the encoded bits, and in case that a second configuration is indicated, an input bit of a second length among the input bits is not included in the encoded bits, and the second length is 0 or smaller than the first length.

In a receiver in a communication system according to an embodiment of the present disclosure, the receiving apparatus includes: a receiver; and a controller coupled with the transceiver and configured to: receive a signal corresponding to at least a part of encoded bits, determine a number of input bits based on the signal, determine a base matrix based on the number of the input bits, determine a lifting size (Z) based on at least one of the number of the input bits or the base matrix, determine a parity check matrix based on at least one of the base matrix or the lifting size (Z), and perform decoding of the signal based on the parity check matrix, wherein, in case that a first configuration is indicated, an input bit of a first length among the input bits is not included in the encoded bits, and in case that a second configuration is indicated, an input bit of a second length among the input bits is not included in the encoded bits, and the second length is 0 or smaller than the first length.

In a method performed by a receiving apparatus in a communication system according to an embodiment of the present disclosure, the method includes: receiving a signal corresponding to at least a part of encoded bits; determining a number of input bits based on the signal; determining a base matrix based on the number of the input bits; determining a lifting size (Z) based on at least one of the number of the input bits or the base matrix; determining a parity check matrix based on at least one of the base matrix or the lifting size (Z); and performing decoding of the signal based on the parity check matrix, wherein, for a first configuration, an input bit of a first length among the input bits is not included in the encoded bits, and for a second configuration, an input bit of a second length among the input bits is not included in the encoded bits, and the second length is 0 or smaller than the first length, and a layered decoding order related to the first configuration is different from a layered decoding order related to the second configuration.

In a receiver in a communication system according to an embodiment of the present disclosure, the receiving apparatus includes: a receiver; and a controller coupled with the receiver and configured to: receive a signal corresponding to at least a part of encoded bits, determine a number of input bits based on the signal, determine a base matrix based on the number of the input bits, determine a lifting size (Z) based on at least one of the number of the input bits or the base matrix, determine a parity check matrix based on at least one of the base matrix or the lifting size (Z), and perform decoding of the signal based on the parity check matrix, wherein, for a first configuration, an input bit of a first length among the input bits is not included in the encoded bits, and for a second configuration, an input bit of a second length among the input bits is not included in the encoded bits, and the second length is 0 or smaller than the first length, and a layered decoding order related to the first configuration is different from a layered decoding order related to the second configuration.

### Advantageous Effects

The present disclosure applies a method for variably applying puncturing of data bits when determining encoded bits. The present disclosure may support an efficient LDPC encoding method and device by enabling a method for maximizing an encoding gain or minimizing a decoding latency to be variably applied according to a situation of a system.

### Description of Drawings

FIG. 1 is a structural diagram of a systematic LDPC codeword.
FIG. 2 is a diagram illustrating a graph representation method for an LDPC code.
FIG. 3A is an exemplary diagram for explaining a cycle characteristic of a QC-LDPC code.
FIG. 3B is an exemplary diagram for explaining a cycle characteristic of a QC-LDPC code.
FIG. 4 is a structural diagram of a transport block according to an embodiment of the present disclosure.
FIG. 5 is an exemplary diagram of an LDPC encoding process according to an embodiment of the present disclosure.
FIG. 6 is an exemplary diagram of an LDPC decoding process according to an embodiment of the present disclosure.
FIG. 7 is a block configuration diagram of a transmitting device according to an embodiment of the present disclosure.
FIG. 8 is a block configuration diagram of a receiving device according to an embodiment of the present disclosure.
FIG. 9 is a structural diagram of an LDPC decoder according to an embodiment of the present disclosure.
FIG. 10 is an exemplary diagram of a structural diagram of a parity check matrix of an LDPC code.
FIG. 11A is an exemplary diagram of a parity check matrix for an LDPC code satisfying the characteristics proposed in the present disclosure.
FIG. 11B is an exemplary diagram of a parity check matrix for an LDPC code satisfying the characteristics proposed in the present disclosure.
FIG. 12A is an exemplary diagram showing cases where one or two punctured bit nodes are connected to one check node, respectively.
FIG. 12B is an exemplary diagram showing cases where one or two punctured bit nodes are connected to one check node, respectively.
FIG. 13 is a diagram illustrating a rate matching method according to the present disclosure.

### Mode for Disclosure

Hereinafter, preferred embodiments of the present disclosure will be described in detail with reference to the accompanying drawings. In addition, in describing the present disclosure, when it is determined that a detailed description of a related known function or configuration may unnecessarily obscure the subject matter of the present disclosure, the detailed description thereof will be omitted. In addition, terms to be described later are terms defined in consideration of functions in the present disclosure, which may vary according to intentions or customs of users or operators. Therefore, the definitions should be made based on the contents throughout the present specification.

The main subject matter of the present disclosure may be applied to other systems having a similar technical background with a slight modification within a range that does not greatly depart from the scope of the present disclosure, which will be possible by the judgment of a person having skilled technical knowledge in the technical field of the present disclosure. For reference, a communication system is generally a term including the meaning of a broadcasting system, but in the present disclosure, when a broadcasting service is a main service among communication systems, it may be more clearly named a broadcasting system.

Advantages and characteristics of the present disclosure, and methods for achieving them will become clear with reference to embodiments described later in detail together with the accompanying drawings. However, the present disclosure is not limited to the embodiments disclosed below, but may be implemented in various different forms, and only the present embodiments are provided to make the disclosure of the present disclosure complete, and to completely inform a person having ordinary knowledge in the technical field to which the present disclosure belongs of the scope of the invention, and the present disclosure is only defined by the scope of the claims. The same reference numerals refer to the same components throughout the specification.

A low density parity check (hereinafter, LDPC) code, first introduced by Gallager in the 1960s, has been forgotten for a long time due to a complexity that was difficult to implement at the technical level at that time. However, as a turbo code proposed by Berrou, Glavieux, and Thitimajshima in 1993 showed a performance close to Shannon's channel capacity, many interpretations of the performance and characteristics of the turbo code have been made, and many studies on iterative decoding and graph-based channel encoding have been progressed. With this as a momentum, as the LDPC code was re-studied in the late 1990s, it was revealed that, if decoding is performed by applying iterative decoding based on a sum-product algorithm on a Tanner graph corresponding to the LDPC code, the LDPC code also has a performance close to Shannon's channel capacity.

The LDPC code is generally defined by a parity check matrix and may be expressed using a bipartite graph commonly referred to as a Tanner graph. In general, the LDPC code is a kind of a parity check code, and was named a 'low-density' parity check code because it has a characteristic that a ratio of the number of 1s (i.e., density) in a parity check matrix for a case where a length is very long is very low. Therefore, in the present disclosure, for convenience, technologies proposed based on the LDPC code may be easily extended to a general parity check matrix code.

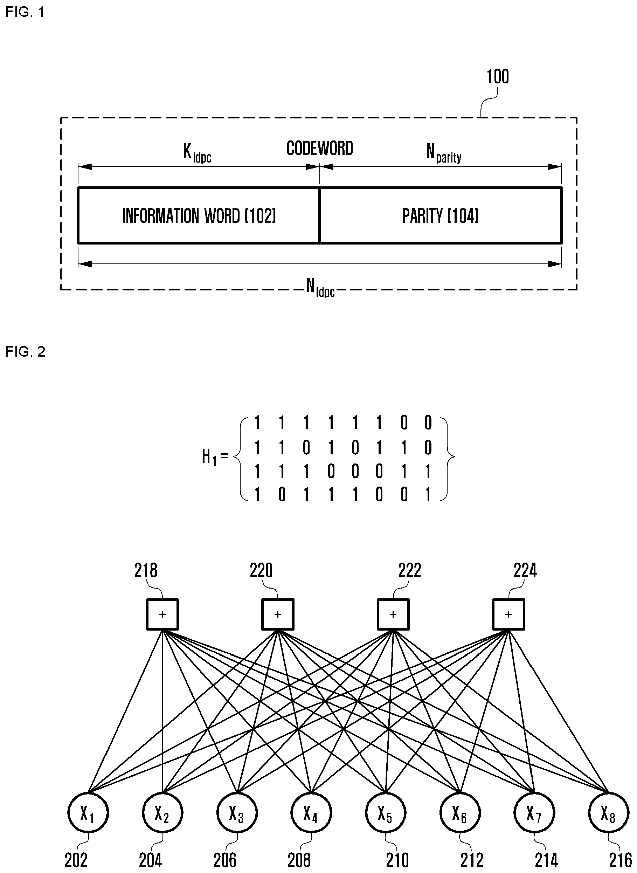

FIG. 1 is a diagram illustrating a structural diagram of a systematic LDPC codeword.

According to FIG. 1, a device where LDPC encoding is performed receives an information word 102 consisting of K_{ldpc} bits or symbols, performs encoding, and generates a codeword 100 consisting of N_{ldpc} bits or symbols. For convenience of description hereinafter, it is assumed that the codeword 100 consisting of N_{ldpc} bits is generated by receiving the information word 102 including K_{ldpc} bits. That is, if the information word i *=* (*i₀, i₁, i₂,*..., *i_{K_{ldpc}}-1*) 102, which is K_{ldpc} input bits, is encoded, the codeword *c* = (*c₀,c₁,c₂,* ..., *c_{Nldpc}-1*) 100 is generated. That is, the information word and the codeword are bit strings consisting of a plurality of bits, and an information word bit and a codeword bit mean each bit constituting the information word and the codeword. In general, when the LDPC encoded bits include an information word as
${c}_{¯} = \left({c}_{0},{c}_{1},{c}_{2},…,{c}_{{N}_{ldpc} - 1}\right) = \left({i}_{¯}, {w}_{¯}\right) = \left({i}_{0},{i}_{1},{i}_{2},…,{i}_{{K}_{ldpc} - 1},{w}_{0},{w}_{1},{w}_{2},…,{w}_{{N}_{ldpc} - {K}_{ldpc} - 1}\right)$
it is called a systematic code. Here, ***w** =* [*w₀ w₁ w₂* ... *w_{N_{ldpc}}-_{Kldpc}-1*] is a parity bit 104, and the number of parity bits N_{parity} may be expressed as N_{parity} = N_{ldpc} - K_{ldpc}.

The LDPC code is a kind of a linear block code, and includes a process of determining a codeword satisfying a condition such as Equation 1 below. [Equation 1] $H ⋅ {{c}_{¯}}^{T} = \left[{h}_{0} {h}_{1} {h}_{2} … {h}_{{N}_{ldpc} - 1}\right] ⋅ {{c}_{¯}}^{T} = {\sum }_{i = 0}^{{N}_{ldpc} - 1} {c}_{i} ⋅ {h}_{i} = {0}_{¯}$

Here, ***c** =* [*c₀ c₁ c₂* ... *c_{N_{ldpc}}-1*].

In Equation 1, H means a parity check matrix, c means a codeword, cᵢ means an i-th bit of the codeword, N_{ldpc} means an LDPC codeword length, and **h***ᵢ* means an i-th column of the parity check matrix H.

The parity check matrix H consists of N_{ldpc} columns identical to the number of bits of the LDPC codeword. Since Equation 1 means that a sum of products of the i-th column (**h***ᵢ*) of the parity check matrix and the i-th codeword bit cᵢ becomes '0', it means that the i-th column (**h***ᵢ*) has a relationship with the i-th codeword bit cᵢ.

FIG. 2 is a diagram illustrating a graph representation method for an LDPC code.

With reference to FIG. 2, a graph representation method for an LDPC code will be described.

FIG. 2 is a diagram illustrating an example of a parity check matrix H₁ of an LDPC code consisting of 4 rows and 8 columns and a Tanner graph thereof. With reference to FIG. 2, since the columns of the parity check matrix H₁ are 8, a codeword having a length of 8 is generated, a code generated through the H₁ means the LDPC code, and each column corresponds to encoded 8 bits.

With reference to FIG. 2, the Tanner graph of the LDPC code encoding and decoding based on the parity check matrix H₁ consists of 8 variable nodes, that is, x₁ 202, x₂ 204, x₃ 206, x₄ 208, x₅ 210, x₆ 212, x₇ 214, and x₈ 216, and 4 check nodes 218, 220, 222, and 224. Here, an i-th column and a j-th row of the parity check matrix H₁ of the LDPC code correspond to a variable node xi and a j-th check node, respectively. In addition, a value of 1, that is, a non-zero value, at a point where the i-th column and the j-th row of the parity check matrix H₁ of the LDPC code intersect means that a line segment (edge) connecting the variable node xᵢ and the j-th check node exists on the Tanner graph as shown in FIG. 2.

In the Tanner graph of the LDPC code, a degree of a variable node and a check node means the number of line segments connected to each node, which is identical to the number of non-zero elements (entries) in a column or row corresponding to the corresponding node in the parity check matrix of the LDPC code. For example, in FIG. 2, degrees of the variable nodes x₁ 202, x₂ 204, x₃ 206, x₄ 208, x₅ 210, x₆ 212, x₇ 214, and x₈ 216 are 4, 3, 3, 3, 2, 2, 2, and 2, respectively, and degrees of the check nodes 218, 220, 222, and 224 are 6, 5, 5, and 5, respectively. In addition, the number of non-zero elements in each column of the parity check matrix H₁ of FIG. 2 corresponding to the variable node of FIG. 2 matches sequentially with 4, 3, 3, 3, 2, 2, 2, and 2, which are the degrees of the variable nodes described above, and the number of non-zero elements in each row of the parity check matrix H₁ of FIG. 2 corresponding to the check nodes of FIG. 2 matches sequentially with 6, 5, 5, and 5, which are the degrees of the check nodes described above. For this reason, a degree of each variable node is also called a column degree or a column weight, and a degree of a check node is also called a row degree or a row weight.

The LDPC encoded codeword bits may be decoded based on an iterative decoding algorithm based on a sum-product algorithm on the bipartite graph listed in FIG. 2. Here, the sum-product algorithm is a kind of a message passing algorithm, and the message passing algorithm indicates an algorithm that exchanges messages through edges on a bipartite graph, and calculates and updates an output message from messages input to a variable node or a check node.

Here, a value of an i-th encoded bit may be determined based on a message of an i-th variable node. As a method for determining a value of the i-th encoded bit, both a hard decision and a soft decision are possible. Therefore, a performance of cᵢ, which is an i-th bit of the LDPC codeword, corresponds to a performance of an i-th variable node of the Tanner graph, which may be determined according to locations and the number of 1s in an i-th column of the parity check matrix. In other words, a performance of N_{ldpc} codeword bits of a codeword may be dependent on locations and the number of 1s in a parity check matrix, which means that a performance of an LDPC code is greatly affected according to the parity check matrix. Therefore, to design an LDPC code having excellent performance, a method for designing a good parity check matrix is required.

As a parity check matrix used in communication and broadcasting systems, a quasi-cyclic LDPC code (or QC-LDPC code, hereinafter QC-LDPC code) using a parity check matrix of a quasi-cyclic form is commonly used for ease of implementation. Depending on a communication and broadcasting system, there is also a case of using a parity check matrix having a form almost similar to a quasi-cyclic structure although a structure is not a perfectly quasi-cyclic structure, and such an LDPC code may not be classified as a QC-LDPC code strictly algebraically, but is also classified as a QC-LDPC code for convenience.

A typical QC-LDPC code is characterized by having a parity check matrix consisting of zero matrices having a form of a small square matrix or circulant permutation matrices or circular permutation matrices. In this case, a permutation matrix means a matrix where each row or column includes only one 1, and all other elements are 0. In addition, a circulant permutation matrix means a matrix obtained by circularly shifting each element of an identity matrix to the right or left. In general, an identity matrix itself is also included in a circulant permutation matrix, because it is considered that each element of the identity matrix is circularly shifted 0 times. Therefore, a circulant permutation matrix basically includes an identity matrix, but for convenience of description, an identity matrix and a circulant permutation matrix that is not an identity matrix may be expressed separately.

Hereinafter, the QC-LDPC code will be described specifically.

First, a circulant permutation matrix P = (*P_{i,j}*) of a size Z × Z is defined as in Equation 2. Here, *P_{i,j}* means an element (entry) of an i-th row and a j-th column in the matrix, the matrix P. ( *0* ≤ *i,j < Z)* [Equation 2-1] ${P}_{i , j} = \left\{\begin{matrix}1 & if i + 1 ≡ j \left(mod Z\right) \\ 0 & otherwise .\end{matrix}\right.$

With respect to the permutation matrix P defined as described above, *Pⁱ* (0 ≤ i < Z) is a circulant permutation matrix of a form in which each element of an identity matrix of a size *Z*×*Z* is circularly shifted by i times in a right direction. A circulant permutation matrix may also be defined as in [Equation 2-2], in which case is a circulant permutation matrix of a form in which *Pⁱ* circularly shifts each element of an identity matrix of a size Z × Z by i times in a left direction: [Equation 2-2] ${P}_{i , j} = \left\{\begin{matrix}1 & if i ≡ j + 1 \left(mod Z\right) \\ 0 & otherwise .\end{matrix}\right.$

In the present disclosure, for convenience, various embodiments are described using a circulant permutation matrix defined based on [Equation 2-1], but circulant permutation matrices defined in [Equation 2-1] and [Equation 2-2] have the same basic algebraic properties only with different expressions, so a circulant permutation matrix defined based on Equation 2-2 may be used in an embodiment of the present disclosure, or circulant permutation matrices of various methods having the same algebraic properties may be used.

The simplest parity check matrix H of a QC-LDPC code may be expressed in a form such as Equation 3 below. [Equation 3] $H = \left[\begin{matrix}{P}^{{V}_{1,1}} & {P}^{{V}_{1,2}} & ⋯ & {P}^{{V}_{1 , {n}_{b}}} \\ {P}^{{V}_{2,1}} & {P}^{{V}_{2,2}} & ⋯ & {P}^{{V}_{2 , {n}_{b}}} \\ ⋮ & ⋮ & ⋱ & ⋮ \\ {P}^{{V}_{{m}_{b} , 1}} & {P}^{{V}_{{m}_{b} , 2}} & ⋯ & {P}^{{V}_{{m}_{b} , {n}_{b}}}\end{matrix}\right]$

When a zero-matrix of a size Z × Z is defined as *P⁻¹* for convenience, each exponent *V_{i,j}* of the circulant permutation matrix or the zero-matrix in Equation 3 has one of {-1, 0, 1, 2, ..., Z-1} values. An identity matrix may be expressed as *P⁰* or *I,* and a zero-matrix may be expressed as *P⁻¹* or *0*. In addition, since the parity check matrix H of Equation 3 has *n_{b}* column blocks and *m_{b}* row blocks, a size of the parity check matrix H is *n_{b}Z* × *m_{b}Z.*

If the parity check matrix of Equation 3 has a full rank (or full coefficient), a length of information word bits of the QC-LDPC code corresponding to the parity check matrix is (*n_{b}* - *m_{b}*)*Z.* For convenience, *k_{b} =* (*n_{b} - m_{b}*) column blocks corresponding to information word bits are called information word column blocks, and the number of information word bits may be called *k_{b}Z,* and *m_{b}* column blocks corresponding to the remaining parity bits may be called parity column blocks. In this case, the number of parity bits is *m_{b}Z.* For reference, when the parity check matrix of Equation 3 does not have a full rank, the information word bits are larger than (*n_{b} - m_{b}*)*Z,* and the number of information word bits has a value larger than *k_{b}Z,* and the number of parity bits has a value smaller than *m_{b}Z.*

Commonly, a binary matrix of a size *m_{b}* × *n_{b}* obtained by replacing each circulant permutation matrix and zero-matrix with 1 and 0, respectively, in the parity check matrix H of Equation 3 is called a mother matrix or a base matrix or a base graph of the parity check matrix **H,** and is expressed as M(H) or **H**_{BG} . In addition, an integer matrix of a size *m_{b}* × *n_{b}* obtained by selecting an exponent of each circulant permutation matrix or zero-matrix as in Equation 4 is called an exponent matrix *V*(**H**) of the parity check matrix H. [Equation 4] $V \left(H\right) = \left[\begin{matrix}{V}_{1,1} & {V}_{1,2} & ⋯ & {V}_{1 , {n}_{b}} \\ {V}_{2,1} & {V}_{2,2} & ⋯ & {V}_{2 , {n}_{b}} \\ ⋮ & ⋮ & ⋱ & ⋮ \\ {V}_{{m}_{b} , 1} & {V}_{{m}_{b} , 2} & ⋯ & {V}_{{m}_{b} , {n}_{b}}\end{matrix}\right]$

Of course, the name of such a matrix is only an example, and the exponent matrix *V*(**H**) may be called by another name. For example, since an exponent of each circulant permutation matrix corresponds to a value for circularly shifting an identity matrix as in [Equation 2-1] or [Equation 2-2], each exponent may be called a shift value or circular shift value, and *V*(**H**) may be called a circular shift value matrix or a shift value matrix. In general, when a value *Z* corresponding to a size of an exponent matrix or a shift value matrix and a circulant permutation matrix or a zero-matrix is given, a parity check matrix may be determined or identified. For this reason, according to a mathematical definition, a parity check matrix means a binary matrix H satisfying the condition of Equation 1, but in some cases, for convenience, an exponent matrix or a shift value matrix may be named a parity check matrix.

Since one integer included in an exponent matrix or a shift value matrix corresponds to a circulant permutation matrix in a parity check matrix, the exponent matrix may be expressed as sequences consisting of integers for convenience. In general, a parity check matrix can be expressed not only by an exponent matrix but also by various sequences capable of expressing algebraically identical characteristics. In the present disclosure, for convenience, a parity check matrix is expressed as an exponent matrix, a sequence indicating a location of 1 in a parity check matrix, or the like, but since a sequence notation method capable of distinguishing locations of 1 or 0 included in a parity check matrix is various, it is not limited to the method expressed in the present specification, and may be expressed in forms of various sequences or matrices exhibiting algebraically identical effects. To distinguish the sequence from other sequences, the sequence may be called in various ways, such as an LDPC sequence or an LDPC code sequence or an LDPC sequence or a parity check matrix sequence or a (circulant) shift value sequence.

In addition, a transmitting and receiving device may also directly generate a parity check matrix to perform LDPC encoding and decoding, but according to structural characteristics, LDPC encoding and decoding may be performed based on an exponent matrix or a shift value matrix or a sequence that produces an algebraically identical effect to the parity check matrix. Therefore, although encoding and decoding using a parity check matrix are described for convenience in the present disclosure, an actual transmitting and receiving device can implement encoding and decoding through various methods capable of obtaining the same effect as the parity check matrix.

For reference, an algebraically identical effect means that, with respect to two or more different expressions, it can be explained or transformed to be completely identical to each other logically or mathematically. In particular, in a case of a code that can be defined by a matrix such as an LDPC code, it may mean that algebraic values that can be defined by a matrix, such as a minimum distance, a rank, and a cycle characteristic on a Tanner graph, are identical, and it may mean that a basic structure or operation is identical in an encoding/decoding process. For example, if the same matrix is obtained through an appropriate column permutation, a row permutation, and the like, the two matrices can be considered as algebraically identical matrices from a code perspective. In addition, various transpose transforms that do not change substantial characteristics of a code can also provide an algebraically identical effect.

As a specific example, when there is a matrix A as follows, examples of various transforms providing an algebraically identical effect are shown in A1 to A8.$A = \left[\begin{matrix}{P}^{{a}_{1,1}} & {P}^{{a}_{1,2}} & {P}^{{a}_{1,3}} & {p}^{{a}_{1,4}} \\ {P}^{{a}_{2,1}} & {P}^{{a}_{2,2}} & {P}^{{a}_{2,3}} & {P}^{{a}_{2,4}} \\ {P}^{{a}_{3,1}} & {P}^{{a}_{3,2}} & {P}^{{a}_{3,3}} & {P}^{{a}_{3,4}} \\ {P}^{{a}_{4,1}} & {P}^{{a}_{4,2}} & {P}^{{a}_{4,3}} & {P}^{{a}_{4,4}}\end{matrix}\right]$${A}_{1} = \left[\begin{matrix}{P}^{{a}_{1,1}} & {P}^{{a}_{1,3}} & {P}^{{a}_{1,2}} & {p}^{{a}_{1,4}} \\ {P}^{{a}_{2,1}} & {P}^{{a}_{2,3}} & {P}^{{a}_{2,2}} & {P}^{{a}_{2,4}} \\ {P}^{{a}_{3,1}} & {P}^{{a}_{3,3}} & {P}^{{a}_{3,2}} & {P}^{{a}_{3,4}} \\ {P}^{{a}_{4,1}} & {P}^{{a}_{4,3}} & {P}^{{a}_{4,2}} & {P}^{{a}_{4,4}}\end{matrix}\right] , {A}_{2} = \left[\begin{matrix}{P}^{{a}_{3,1}} & {P}^{{a}_{3,3}} & {P}^{{a}_{3,2}} & {P}^{{a}_{3,4}} \\ {P}^{{a}_{2,1}} & {P}^{{a}_{2,3}} & {P}^{{a}_{2,2}} & {P}^{{a}_{2,4}} \\ {P}^{{a}_{1,1}} & {P}^{{a}_{1,3}} & {P}^{{a}_{1,2}} & {P}^{{a}_{1,4}} \\ {P}^{{a}_{4,1}} & {P}^{{a}_{4,3}} & {P}^{{a}_{4,2}} & {P}^{{a}_{4,4}}\end{matrix}\right] ,$${A}_{3} = \left[\begin{matrix}{P}^{{a}_{1,1} + x} & {P}^{{a}_{1,2}} & {P}^{{a}_{1,3} + y} & {p}^{{a}_{1,4}} \\ {P}^{{a}_{2,1} + x} & {P}^{{a}_{2,2}} & {P}^{{a}_{2,3} + y} & {P}^{{a}_{2,4}} \\ {P}^{{a}_{3,1} + x} & {P}^{{a}_{3,2}} & {P}^{{a}_{3,3} + y} & {P}^{{a}_{3,4}} \\ {P}^{{a}_{4,1} + x} & {P}^{{a}_{4,2}} & {P}^{{a}_{4,3} + y} & {P}^{{a}_{4,4}}\end{matrix}\right] ,$${A}_{4} = \left[\begin{matrix}{P}^{{a}_{1,1} + x} & {P}^{{a}_{1,2}} & {P}^{{a}_{1,3} + y} & {P}^{{a}_{1,4}} \\ {P}^{{a}_{2,1} + x + z} & {P}^{{a}_{2,2} + z} & {P}^{{a}_{2,3} + y + z} & {P}^{{a}_{2,4 + z}} \\ {P}^{{a}_{3,1 + x}} & {P}^{{a}_{3,2}} & {P}^{{a}_{3,3} + y} & {P}^{{a}_{3,4}} \\ {P}^{{a}_{4,1} + x + w} & {P}^{{a}_{4,2} + w} & {P}^{{a}_{4,3} + y + w} & {P}^{{a}_{4,4} + w}\end{matrix}\right] ,$${A}_{5} = \left[\begin{matrix}{P}^{- {a}_{1,1}} & {P}^{- {a}_{2,1}} & {P}^{- {a}_{3,1}} & {p}^{- {a}_{4,1}} \\ {P}^{- {a}_{1,2}} & {P}^{- {a}_{2,2}} & {P}^{- {a}_{3,2}} & {P}^{- {a}_{4,2}} \\ {P}^{- {a}_{1,3}} & {P}^{- 2,3} & {P}^{- {a}_{3,3}} & {P}^{- {a}_{4,3}} \\ {P}^{- {a}_{1,4}} & {P}^{- {a}_{2,4}} & {P}^{- {a}_{3,4}} & {P}^{- {a}_{4,4}}\end{matrix}\right] ,$${A}_{6} = \left[\begin{matrix}{P}^{{a}_{1,1}} & {P}^{{a}_{2,1}} & {P}^{{a}_{3,1}} & {p}^{{a}_{4,1}} \\ {P}^{{a}_{1,2}} & {P}^{{a}_{2,2}} & {P}^{{a}_{3,2}} & {P}^{{a}_{4,2}} \\ {P}^{{a}_{1,3}} & {P}^{{a}_{2,3}} & {P}^{{a}_{3,3}} & {P}^{{a}_{4,3}} \\ {P}^{{a}_{1,4}} & {P}^{{a}_{2,4}} & {P}^{{a}_{3,4}} & {P}^{{a}_{4,4}}\end{matrix}\right] ,$ ${A}_{7} = \left[\begin{matrix}{P}^{- {a}_{1,1}} & {P}^{- {a}_{1,2}} & {P}^{- {a}_{1,3}} & {p}^{- {a}_{1,4}} \\ {P}^{- {a}_{2,1}} & {P}^{- {a}_{2,2}} & {P}^{- {a}_{2,3}} & {P}^{- {a}_{2,4}} \\ {P}^{- {a}_{3,1}} & {P}^{- {a}_{3,2}} & {P}^{- {a}_{3,3}} & {P}^{- {a}_{3,4}} \\ {P}^{- {a}_{4,1}} & {P}^{- {a}_{4,2}} & {P}^{- {a}_{4,3}} & {P}^{- {a}_{4,4}}\end{matrix}\right] ,$${A}_{8} = \left[\begin{matrix}{P}^{{ka}_{1,1}} & {P}^{{ka}_{1,2}} & {P}^{{ka}_{1,3}} & {p}^{{ka}_{1,4}} \\ {P}^{{ka}_{2,1}} & {P}^{{ka}_{2,2}} & {P}^{{ka}_{2,3}} & {P}^{{ka}_{2,4}} \\ {P}^{{ka}_{3,1}} & {P}^{{ka}_{3,2}} & {P}^{{ka}_{3,3}} & {P}^{{ka}_{3,4}} \\ {P}^{{ka}_{4,1}} & {P}^{{ka}_{4,2}} & {P}^{{ka}_{4,3}} & {P}^{{ka}_{4,4}}\end{matrix}\right] ,$ (where, k is an integer relatively prime to Z)

*A₁* is an example of a block-unit permutation in which a second column block and a third column block of A are replaced (i.e., substituted). *A₂* is an example of a block-unit permutation in which a first row block and a third row block are additionally replaced with *A1*. *A₃* is an example in which a circulant permutation is applied only to a first column block and a third column block of A, respectively. *A₄* is an example in which a circulant permutation is applied only to a second row block and a fourth row block additionally in *A₃*. *A₅* is an example in which a transpose transform is applied to *A. A₆* is an example in which a block-unit transpose transform is applied to *A. A₇* is an example in which signs of each exponent (or circular shift value) are inversely transformed with respect to A (where, for convenience, when a zero-matrix of a size Z × Z is expressed as *P⁻¹*, the use of a negative exponent (or shift value) may cause confusion, so (-*a_{i,j}*) may be expressed as a positive value such as (Z - *a_{i,j}*)). *A₈* is an example in which an affine transform with a constant term of 0 is applied to A (In general, a case where a constant term is not 0 is also applicable). For reference, the above examples have been described for a case where there is no element where *P^{a_{i,j}}* is a zero-matrix of a size Z × Z for convenience, but when a zero-matrix is included, a part corresponding to the zero-matrix is always a zero-matrix regardless of a transform. For example, if *P^{a_{2,3}}* is a zero-matrix in A, *P^{a_{2,3}}* is a zero-matrix in *A₁, A₂,* and *A₆*, and *P^{a_{2,3}+y}* and *P^{a_{2,3}+y+z}* are zero matrices in *A₃* and *A₄*, respectively, and *P^{-a_{2,3}}* is a zero-matrix in *A₅* and *A₇*, and *P^{ka_{2,3}}* is a zero-matrix in *A₈*.

The above transforms are only examples, and various other transforms may exist. In addition, each transform may be applied independently, but may be applied by being appropriately duplicated and combined. Here, a characteristic of each transform or a combination of transforms can be transformed to an original matrix through an appropriate invertible transform process.

Since the various transforms or combinations of transforms described above are substantially invertible transforms in which arrangements of bits (or variable nodes) or check nodes are merely changed or a symmetrical transform or specific structures are maintained on a Tanner graph, an instantaneous performance may vary according to a given channel situation in terms of performance of a code, but the same performance can be provided on average. As such, in the present disclosure, parity check matrices that can be obtained through a transform that can obtain an algebraically identical effect are all regarded as the same parity check matrix.

Up to now, for convenience, only a case where one circulant permutation matrix corresponds to one square block of a size Z × Z has been described, but hereinafter, the same invention may be applied to a case where a plurality of circulant permutation matrices are included in one block. For example, as in Equation 5 below, when two circulant permutation matrices ${P}^{{V}_{ij}^{\left(1\right)}} , {P}^{{V}_{ij}^{\left(2\right)}}$ correspond to a location of an i-th row block and a j-th column block, it can be simply expressed in a sum form such as ${P}^{{V}_{ij}^{\left(1\right)}} + {P}^{{V}_{ij}^{\left(2\right)}}$, and its exponent matrix (or circular shift value matrix) can be expressed as in Equation 6. Looking at Equation 6, it can be seen that it is a matrix in which two integers correspond to an i-th row and a j-th column corresponding to the row blocks and column blocks including a sum of the plurality of circulant permutation matrices. [Equation 5] $H = \left[{P}^{{V}_{i , j}^{\left(1\right)}}+{P}^{{V}_{i , j}^{\left(2\right)}}\right]$ [Equation 6] $V \left(H\right) = \left[\left({V}_{i , j}^{\left(1\right)}, {V}_{i , j}^{\left(2\right)}\right)\right]$

As in the above embodiment, in general, a QC-LDPC code may have one or a plurality of circulant permutation matrices corresponding to one row block and column block in a parity check matrix, and for reference, a matrix of a size Z × Z in which a plurality of circulant permutation matrices are duplicated in one row block and column block is called a circulant or a circulant matrix or a circular matrix. In general, a circulant matrix has each entry of a matrix having an arbitrary number as an element as well as a binary number, but in the present disclosure, since a binary code is described for convenience, the circulant matrix means a binary circulant matrix. Of course, the algebraic structures and characteristics proposed in the present disclosure can be extended in a similar manner to a case of a non-binary code, but detailed descriptions thereof are omitted in the present disclosure.

On the other hand, a base matrix (or a mother matrix or a base graph) for the parity check matrix and the exponent matrix (or circular shift value matrix) of Equation 5 and Equation 6 means a binary matrix obtained by replacing each circulant permutation matrix and zero-matrix with 1 and 0, respectively, similarly to the definition used in Equation 3, and a circulant matrix included in one block (that is, a sum of a plurality of circulant permutation matrices) may also be replaced with 1.

A simple example of a relationship among a parity check matrix, an exponent matrix (or circular shift value matrix), a base matrix, and the like is shown in [Equation 7] below. [Equation 7] $\begin{matrix}{H}_{1} = \left[\begin{matrix}{P}^{159} & O & {P}^{0} & {P}^{0} & O & O \\ {P}^{117} & {P}^{109} & O & {P}^{0} & {P}^{0} & O \\ O & {P}^{225} & {P}^{1} & O & {P}^{0} & {P}^{0} \\ {P}^{84} & {P}^{211} & {P}^{0} & O & O & {P}^{0}\end{matrix}\right] \left(=\left[\begin{matrix}{P}^{159} & O & I & I & O & O \\ {P}^{117} & {P}^{109} & O & I & I & O \\ O & {P}^{225} & {P}^{1} & O & I & I \\ {P}^{84} & {P}^{211} & I & O & O & I\end{matrix}\right]\right) , \\ M \left({H}_{1}\right) = \left[\begin{matrix}1 & 0 & 1 & 1 & 0 & 0 \\ 1 & 1 & 0 & 1 & 1 & 0 \\ 0 & 1 & 1 & 0 & 1 & 1 \\ 1 & 1 & 1 & 0 & 0 & 1\end{matrix}\right] , \\ V \left({H}_{1}\right) = \left[\begin{matrix}159 & - 1 & 0 & 0 & - 1 & - 1 \\ 117 & 109 & - 1 & 0 & 0 & - 1 \\ - 1 & 225 & 1 & - 1 & 0 & 0 \\ 84 & 211 & 0 & - 1 & - 1 & 0\end{matrix}\right] .\end{matrix}$

In [Equation 7], notation of an exponent (or shift value) of a zero-matrix of a size Z × Z as -1 is only an example, and can be expressed in various ways. In addition, the matrix expression method for [Equation 7] can be noted through various other methods, and as a specific example, a method for expressing a parity check matrix of an LDPC code defined in 3GPP TS 38.212, which is a 3GPP 5G standard specification, may be used. In 3GPP TS 38.212, since sizes of parity check matrices of an LDPC code corresponding to BG1 (Base Graph 1) and BG2 (Base Graph 2) are too large, they are shown using a table, and a result of applying the corresponding expression method to the matrices of [Equation 7] is as shown in [Table 1] below.

**H_{BG1}** is a matrix of a size 4 × 8, and **H₁** is a matrix of a size *4Z* × 8Z. Elements (entries) of a base matrix (or a base graph) and parity check matrices not expressed in Table 1 below correspond to 0 or a zero-matrix of a size Z × *Z.*

**[Table 1]**

| **H_{BG1}** | ***V_{i,j}*** | |
|---|---|---|
| Row index *i* | Column index *j* | |
| 0 | 0 | 159 |
| | 2 | 0 |
| | 3 | 0 |
| 1 | 0 | 117 |
| | 1 | 109 |
| | 3 | 0 |
| | 4 | 0 |
| 2 | 1 | 225 |
| | 2 | 1 |
| | 4 | 0 |
| | 5 | 0 |
| 3 | 0 | 84 |
| | 1 | 211 |
| | 2 | 0 |
| | 5 | 0 |

If the base matrix and the exponent matrix in [Equation 7] are expressed using a sequence, they can be expressed in the following manner.

**M**(**H₁**):
0 2 3
0 1 3 4
1 2 4 5
0 1 2 5

*V*(**H₁**):
159 00
117 109 00
225 1 0 0
84 211 0 0

When the exponent matrix *V*(**H₁**) is expressed as a sequence as described above, it may be named in various ways such as a shift sequence or a shift value sequence, an LDPC sequence, for convenience. In the above sequence expression method, *M*(**H₁**) is a method for listing locations of columns whose elements are not 0 for each row, and *V*(**H₁**) is a method for listing exponents or shift values of each circulant permutation matrix that is not a zero-matrix for each row. From the above sequences, an exponent matrix (or a shift value matrix) can be accurately defined, and if information on a value Z is acquired, a parity check matrix can also be accurately defined.

Another simple example of a relationship among a parity check matrix, an exponent matrix (or circular shift value matrix), a base matrix, and the like is shown in [Equation 8] below. The example of [Equation 8] illustrates a case where a parity check matrix includes a circulant matrix in which two or more circulant permutation matrices correspond to at least one block of a size *Z* × *Z*. [Equation 8] $\begin{matrix}{H}_{2} = \left[\begin{matrix}{P}^{117} + {P}^{159} & {P}^{109} & {P}^{0} & {P}^{0} \\ {P}^{84} & {P}^{211} + {P}^{225} & {P}^{1} + {P}^{3} & {P}^{0}\end{matrix}\right] , \\ M \left({H}_{2}\right) = \left[\begin{matrix}1 & 1 & 1 & 1 \\ 1 & 1 & 1 & 1\end{matrix}\right] , \\ V \left({H}_{2}\right) = \left[\begin{matrix}117,159 & 109 & 0 & 0 \\ 84 & 211,225 & 1,3 & 0\end{matrix}\right] , \\ W \left({H}_{2}\right) = \left[\begin{matrix}2 & 1 & 1 & 1 \\ 1 & 2 & 2 & 1\end{matrix}\right] .\end{matrix}$

For reference, in [Equation 8], *W*(**H₂**) is a weight matrix (Weight Matrix) for a base matrix or an exponent matrix or a parity check matrix, and is a matrix expressing how many circulant permutation matrices correspond to an i-th row, a j-th column in a base matrix and an exponent matrix, or an i-th row block, a j-th column block in a parity check matrix. For example, *W*(**H₂**) means a matrix expressing circulants of a size *Z* × *Z* corresponding to an i-th row block, a j-th column block in a parity check matrix as elements of an i-th row, a j-th column of a matrix, the number of circulant permutation matrices constituting the circulants. That is, *W*(**H₂**) is a matrix expressing 0 as an element when a zero-matrix corresponds, and expressing w as an element when w circulant permutation matrices correspond, respectively. (For reference, a zero-matrix can be regarded as a circulant matrix in a broad sense, but it is not a circulant 'permutation' matrix.)

When a base matrix or a parity check matrix or a circular shift value matrix (or an exponent matrix) defined in [Equation 8] is expressed by applying a method for expressing parity check matrices of an LDPC code in 3GPP TS 38.212 like [Table 1], it can be expressed as shown in [Table 2] below.

**H**_{BG2} is a matrix of a size *2* × *4*, and **H₂** is a matrix of a size *2Z* × *4Z.* Elements of a base matrix (or base graph) and parity check matrices not expressed in Table 2 below correspond to 0 or a zero-matrix of a size *Z* × *Z*.

**[Table 2]**

| **H_{BG2}** | | ***V_{i,j}*** |
|---|---|---|
| Row index *i* | Column index *j* | |
| 0 | 0 | 117,159 |
| | 1 | 109 |
| | 2 | 0 |
| | 3 | 0 |
| 1 | 0 | 84 |
| | 1 | 211, 225 |
| | 2 | 1, 3 |
| | 3 | 0 |

If the base matrix and the exponent matrix of [Equation 8] are expressed using a sequence, they can be expressed in the following manner.

*M*(**H₂**):
0 1 2 3
0 1 2 3

*V*(**H₂**):
(117, 159) 109 0 0
84 (211, 225) (1, 3) 0

As an alternative expression method, a form consisting solely of a sequence can be expressed using a weight matrix as follows.

*M*(**H₂**):
0 1 2 3
0 1 2 3

*W*(**H₂**):
2 1 1 1
1 2 2 1

*V*(**H₂**):
117 159 109 0 0
84 211 225 1 3 0

In the above expression method, *W*(**H₂**) is a method for listing locations of columns whose elements are not 0 for each row, and *W*(**H₂**) is a matrix defined based on the number of circulant permutation matrices constituting circulant matrices corresponding to a base matrix or an exponent matrix or a parity check matrix, and *V*(**H₂**) is a method for listing exponents or shift values of each circulant matrix that is not a zero-matrix for each row. From the above sequences, an exponent matrix can be accurately defined, and if information on a value *Z* is acquired, a parity check matrix can also be accurately defined.

Since a performance of an LDPC code is determined according to a parity check matrix, it is necessary to design a parity check matrix for an LDPC code having excellent performance. In addition, an LDPC encoding or decoding method capable of supporting various input lengths and code rates is required.

Lifting means a method used not only for an efficient design of a QC-LDPC code, but also used to generate a parity check matrix of various lengths or to generate an LDPC codeword using a given base matrix and exponent matrix. That is, the lifting is applied to efficiently design a very large parity check matrix by setting a Z value determining a size of a circulant permutation matrix or a zero-matrix from a given small mother matrix according to a specific rule, or means a method for generating a parity check matrix of various lengths or generating an LDPC codeword by applying an appropriate Z value to a given exponent matrix or a sequence corresponding thereto.

An existing lifting method and characteristics of a QC-LDPC code designed through such lifting will be briefly described with reference to the following reference document [Myung2006].

### Reference [Myung2006]

S. Myung, K. Yang, and Y. Kim, "Lifting Methods for Quasi-Cyclic LDPC Codes," IEEE Communications Letters. vol. 10, pp. 489-491, June 2006.

First, when an LDPC code C₀ is given, S QC-LDPC codes to be designed through a lifting method are called C₁, ..., C_{S}, and a value corresponding to a size of a row block and a column block of a parity check matrix of each QC-LDPC code is called Lₖ. Here, C₀ corresponds to the smallest LDPC code having a mother matrix of C₁, ..., C_{S} codes as a parity check matrix, and a Z₀ value corresponding to a size of a row block and a column block is 1. In addition, for convenience, a parity check matrix **H*ₖ*** of each code Cₖ has an exponent matrix $V \left({H}_{k}\right) = \left({V}_{ij}^{\left(k\right)}\right)$ of a size *m* ×*n*, and each exponent ${V}_{i , j}^{\left(k\right)}$ is selected as one of {-1, 0, 1, 2, ..., Zₖ - 1} values.

The existing lifting method consists of steps such as C₀ -> C₁ ->...-> C_{S}, and has a characteristic of satisfying a condition such as Zₖ₊₁ = qₖ₊₁Zₖ (qₖ₊₁ is a positive integer, k=0,1,..., S-1). In addition, due to a characteristic of a lifting process, if only the parity check matrix **H*ₛ*** of Cₛ is stored, the QC-LDPC codes C₀, C₁, ..., C_{S} can all be expressed using Equation 9 or Equation 10 below according to a lifting method. [Equation 9] $V \left({H}_{k}\right) ≡ \left⌊\frac{{Z}_{k}}{{Z}_{S}}V\left({H}_{S}\right)\right⌋$
or

[Equation 10] $V \left({H}_{k}\right) ≡ V \left({H}_{S}\right) \left(mod {Z}_{k}\right)$

As described above, a method for generating a small code Cᵢ(i=k-1, k-2, ... 1, 0) using an appropriate method such as Equation 9 or Equation 10 from a large code Cₖ, as well as a method for designing a larger QC-LDPC code C₁, ..., C_{S} from C₀, may be called lifting. For reference, in 3GPP TS 38.212, an LDPC code of various lengths can be generated using the lifting method for [Equation 10].

In the lifting method for Equation 9 or 10, Zₖ corresponding to a size of a row block or a column block in a parity check matrix of each QC-LDPC code Cₖ has a multiple relationship with each other, so an exponent matrix is also selected by a specific method. Such an existing lifting method helps to easily design a QC-LDPC code with an improved error floor characteristic by improving algebraic or graph characteristics of each parity check matrix designed through lifting.

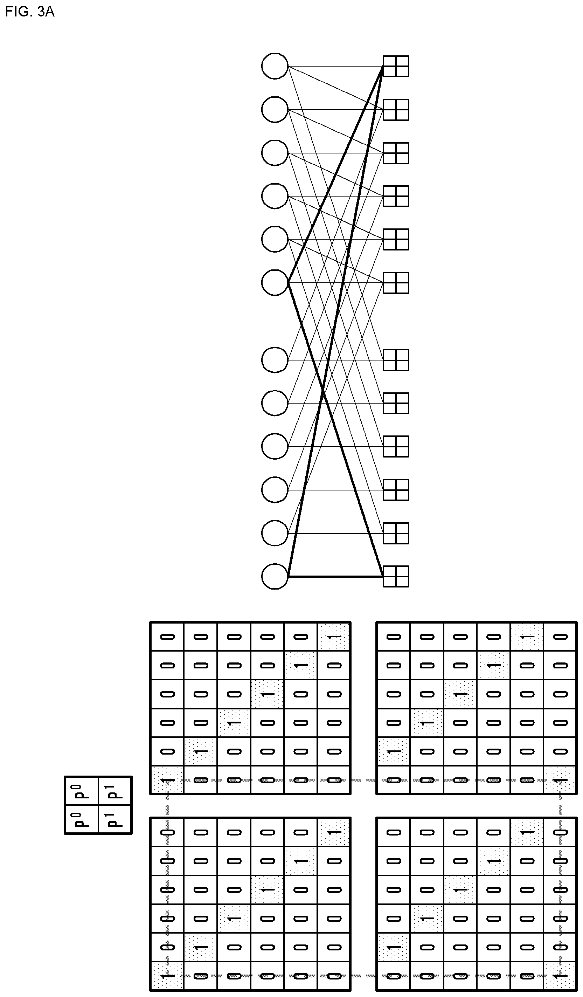

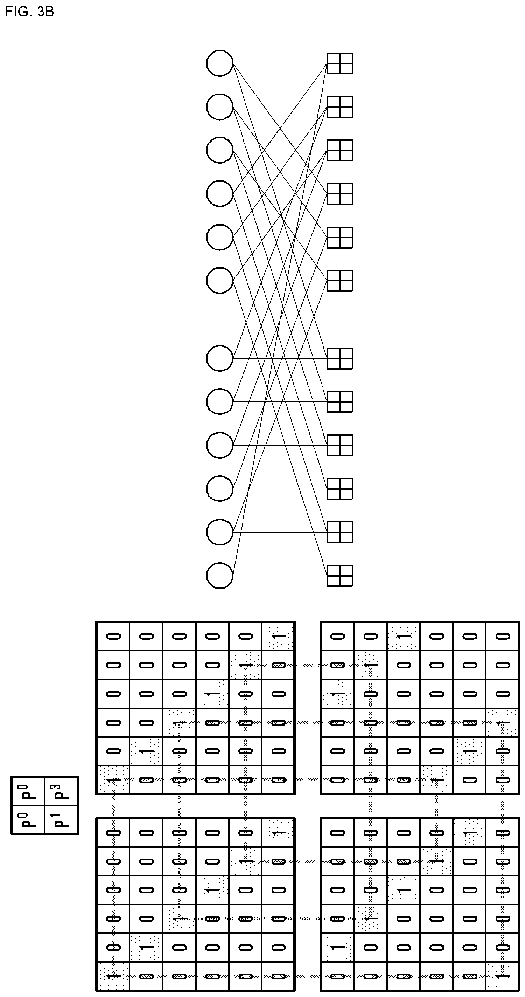

FIGS. 3A and 3B are exemplary diagrams for briefly explaining that cycle characteristics can vary significantly depending on an exponent matrix of a QC-LDPC code.

FIG. 3A is a diagram for explaining a cycle characteristic of a QC-LDPC code.

The exponent matrix of FIG. 3A is ${\left[\begin{matrix}{P}^{0} & {P}^{0} \\ {P}^{1} & {P}^{1}\end{matrix}\right]}_{\left(Z=6\right)}$, and in this case, many 4-cycles may exist on a Tanner graph. A code having many such short cycles may cause severe degradation in decoding performance.

FIG. 3B is a diagram for explaining a cycle characteristic of a QC-LDPC code.

The exponent matrix of FIG. 3B is ${\left[\begin{matrix}{P}^{0} & {P}^{0} \\ {P}^{1} & {P}^{3}\end{matrix}\right]}_{\left(Z=6\right)}$, and in this case, the shortest cycle length on the Tanner graph is 12. As described above, even by changing only one exponent of a circulant permutation matrix, the cycle characteristics on the Tanner graph can be significantly changed, and thus selection of the exponent matrix plays an important role in improving performance of the LDPC code. A lifting method may also be considered as one of design methods considering such cycle characteristics.

In general, lifting may be considered as using the exponent matrix of Equation 4 for LDPC encoding and decoding by changing values of elements thereof for various Z values. For example, when the exponent matrix of Equation 4 is referred to as V(H) = (*V_{i,j}*), and an exponent matrix transformed according to a Z value is referred to as *V(H(Z))* = (*V_{i,j}*(*Z*)) *,* a transformation equation such as Equation 11 below may be generally applied. [Equation 11] ${V}_{i , j} \left(Z\right) = \left\{\begin{matrix}{V}_{i , j} & {V}_{i , j} < 0 \\ f \left({V}_{i , j}, Z\right) & {V}_{i , j} \geq 0\end{matrix} or {V}_{i , j}\left(Z\right)=\right. \left\{\begin{matrix}{V}_{i , j} & {V}_{i , j} \leq 0 \\ f \left({V}_{i , j}, Z\right) & {V}_{i , j} > 0\end{matrix}\right.$

In Equation 11, *f(x,Z)* may be defined in various forms. For example, [Equation 9] may correspond to $f \left(x, Z\right) = \left⌊\frac{Z}{{Z}_{max}}x\right⌋$ (*Z*ₘₐₓ = *Zₛ*) and [Equation 10] may correspond to *f*(*x, Z*) *=* mod(x,Z) (mod(a,b) means a modulo-b operation on a). In addition, *f(x,Z)* may be defined in various manners as shown in Equation 12 below. [Equation 12] $\begin{matrix}f \left(x, Z\right) = mod \left(x, {2}^{\left⌊{log}_{2}Z\right⌋}\right) \\ or \\ f \left(x, Z\right) = \left⌊\frac{x}{{2}^{D - \left⌊{log}_{2}Z\right⌋}}\right⌋ \\ or \\ f \left(x, Z\right) = \left⌊\frac{Z}{D}x\right⌋\end{matrix}$

In Equation 12, D means a constant which is a predefined positive integer.

For reference, in the transformation equation of Equation 11, a reference value for applying a transformation equation (or transformation function) f (or a reference value of *V_{i,j}* for distinguishing application of *V_{i,j}* and *f*(*V_{i,j}*, *Z*)) is represented as 0 for convenience, but the reference value may be set differently depending on a lifting size Z value to be supported or a method for representing a zero-matrix of a size *Z* × *Z*. For example, when the zero-matrix of the size *Z* × *Z* is defined as another predetermined number or symbol instead of a negative integer - 1, the reference value for applying the transformation equation f may be defined differently. In addition, in the expression of the exponent matrix or the LDPC sequence, when based on a scheme in which an exponent corresponding to the zero-matrix is excluded from the beginning and is not expressed, rules for values where the exponent is less than 0 in Equation 11 may be omitted. Since the transformation equation f is applied to a circulant permutation matrix or a circulant matrix other than the zero-matrix, a method for omitting transformation for the zero-matrix of the size *Z* × *Z* may be generally expressed in various ways.

As an embodiment of the present disclosure, a case where LDPC encoding and decoding are applied based on a plurality of exponent matrices or LDPC sequences based on one determined base matrix will be described. That is, the base matrix is fixed to one, and an exponent matrix or a (circulant) shift value matrix or an LDPC sequence of an LDPC code defined based on the base matrix can be determined, and variable-length LDPC encoding and decoding are performed by applying lifting from the matrix or sequence to match a lifting size included in each lifting size group. This scheme has a feature that although elements or numbers constituting the exponent matrix or the LDPC sequence of the LDPC code may have different values, locations of the elements or numbers exactly match on the base matrix.

An LDPC code defined in TS 38.212, which is the 3GPP 5G standard specification, is also a code designed in this manner, and two base matrices **H_{BG}** are defined, and 8 exponent matrices (or circular shift value matrices) $V \left({H}_{{i}_{Ls}}\right) = \left({V}_{i , j}^{\left({i}_{LS}\right)}\right)$ (*i_{LS} = 0, 1,2*,...,*7*) are defined for each base matrix to be used for LDPC encoding. That is, according to the standard specification, parity check matrices of various LDPC codes can be determined based on a total of 2 base matrices, 16 exponent matrices, and an appropriate lifting size Z. However, in the TS 38.212 specification, a matrix corresponding to *V*(**H***_{i_{LS}}*) is named a parity check matrix, and a matrix corresponding to a conventional parity check matrix is named matrix-H. *V*(**H***_{i_{LS}}*)is a matrix consisting of integers, and a parity check matrix in a strict sense can be configured only when the lifting size Z is given, but as described above, *V*(**H***_{iLS})* may be referred to as a parity check matrix for convenience.

Hereinafter, for convenience of explanation, the LDPC code defined in the 3GPP 5G standard specification TS 38.212 and an expression method thereof are used as much as possible, but may be expressed in a conventional mathematical expression or other manners depending on cases. First, in order to determine a parity check matrix or a matrix-H of an LDPC code, a lifting size (Z) to be supported is shown in [Table 3] below. (Hereinafter, a set index *i_{LS}* for each lifting size set is merely an example and may be rearranged in another order.)

**[Table 3]**

| ***Set index (**i_{LS}**)*** | ***Set of lifting sizes (**Z**)*** |
|---|---|
| 0 | {2, 4, 8, 16, 32, 64, 128, 256} |
| 1 | {3, 6, 12, 24, 48, 96, 192, 384} |
| 2 | {5, 10, 20, 40, 80, 160, 320} |
| 3 | {7, 14, 28, 56, 112, 224} |
| 4 | {9, 18, 36, 72, 144, 288} |
| 5 | {11, 22, 44, 88, 176, 352} |
| 6 | {13, 26, 52, 104, 208} |
| 7 | {15, 30, 60, 120, 240} |

In the present disclosure, lifting sizes or block sizes are basically expressed in the same manner as in [Table 3], but can also be expressed in a manner as in [Table 4] below, and various other manners of expression are also possible.

**[Table 4]**

| ***Set index** (i_{LS})* | ***Set* of** ***lifting sizes** (Z)* |
|---|---|
| 0 | 2 × *2^{k}, k = 0,1,2,...,7* |
| 1 | *3* × *2^{k}, k* = *0,1,2,...,7* |
| 2 | *5* × *2^{k},k = 0,1,2, ...,6* |
| 3 | *7* × *2^{k},k = 0,1,2, ...,5* |
| 4 | *9* × *2^{k},k = 0,1,2, ...,5* |
| 5 | *11* × *2^{k},k = 0,1,2, ...,5* |
| 6 | *13* × *2^{k},k = 0,1,2, ...,4* |
| 7 | *15*× *2^{k},k = 0,1,2, ...,4* |

In 3GPP 5G, the lifting size or block size Z can be used by being divided into a plurality of sets (or groups) as shown in [Table 3] or [Table 4]. (Hereinafter, for convenience, it is named a lifting size set (or group) or a block size set (or group))

In the 3GPP 5G standard, a parity check matrix or a matrix-**H** is determined based on an exponent matrix *V*(**H***_{i-LS}*(*Z*)) ≡ *V*(**H***_{iLS})* (mod Z) obtainable by using the lifting method for [Equation 10]. This means that when $V \left({H}_{{i}_{Ls}}\right) = \left({V}_{i , j}^{\left({i}_{LS}\right)}\right)$ and $V \left({H}_{{i}_{LS}}\left(Z\right)\right) = \left({V}_{i , j}^{\left({i}_{LS}\right)}\left(Z\right)\right)$, for each i and j, ${V}_{i , j}^{\left({i}_{LS}\right)} \left(Z\right) = mod \left({V}_{i , j}^{\left({i}_{LS}\right)}, Z\right)$ . (For reference, in the 3GPP 5G standard specification TS 38.212, ${V}_{i , j}^{\left({i}_{LS}\right)} \left(Z\right)$ is briefly expressed as *P_{i,j}.*)

As described above in [Equation 11], it is noted that in the present disclosure, a special transformation is not applied to a portion corresponding to the zero-matrix of the size Z × Z in the base matrix and the exponent matrix. That is, even in *V*(**H**_{iLS}(*Z*)) ≡ *V*(**H***_{iLS}*) (mod Z), unless otherwise specified, a special transformation is not performed on the portion corresponding to the zero-matrix, and only the size of the zero-matrix can vary depending on a value Z. As a specific example, in the expression method used in the 3GPP 5G standard specification as shown in [Table 1] and [Table 2], since the portion corresponding to the zero-matrix of the size Z × *Z* is not expressed from the beginning, if a predetermined transformation such as modulo is appropriately performed only on *V_{i,j}* included in [Table 1] or [Table 2], the portion corresponding to the zero-matrix naturally does not undergo transformation, which is identical to defining a zero-matrix having a changed size. The above expression method is merely an example for convenience of explanation, and various other expression methods may exist.

For a given exponent matrix (or circular shift value matrix), since a parity check matrix or a matrix-**H** can be variously transformed by the lifting size defined in [Table 3], a required lifting size set may be defined differently depending on a system. That is, [Table 3] and [Table 4] are merely examples, and all lifting size (Z) values included in the lifting size (or block size) group (or set) of [Table 3] and [Table 4] may be used, a part of an appropriate lifting size may be selected and used according to a situation required by the system, and more various lifting size values may be added as needed.

For example, when a transport block size (TBS) has a minimum value of 24, due to this, Z = 2, 3, 4, 5, 6, 9, 13 are not practically used in the system. In this case, it can be defined by excluding some Z values as shown in [Table 5] below.

**[Table 5]**

| ***Set index (**i_{LS}**)*** | ***Set of lifting sizes (**Z**)*** |
|---|---|
| 0 | {8, 16, 32, 64, 128, 256} |
| 1 | {12, 24, 48, 96, 192, 384} |
| 2 | {10, 20, 40, 80, 160, 320} |
| 3 | {7, 14, 28, 56, 112, 224} |
| 4 | {18, 36, 72, 144, 288} |
| 5 | {11, 22, 44, 88, 176, 352} |
| 6 | {26, 52, 104, 208} |
| 7 | {15, 30, 60, 120, 240} |

In an LDPC code-based communication system applying [Table 5] as a lifting size, since a minimum lifting size is 7, each column block constituting a parity check matrix of an LDPC code used for LDPC encoding and decoding can consist of at least 7 or more columns.

If a minimum value of the TBS is 8 or more in consideration of future scalability, and additional other values such as 8, 16 are used, the lifting size set (or block size group) may be changed as shown in [Table 6] below.

**[Table 6]**

| ***Set index (**i_{LS}**)*** | ***Set of lifting sizes (**Z**)*** |
|---|---|
| 0 | {4, 8, 16, 32, 64, 128, 256} |
| 1 | {6, 12, 24, 48, 96, 192, 384} |
| 2 | {(5,) 10, 20, 40, 80, 160, 320} |
| 3 | {7, 14, 28, 56, 112, 224} |
| 4 | {(9,) 18, 36, 72, 144, 288} |
| 5 | {11, 22, 44, 88, 176, 352} |
| 6 | {(13,) 26, 52, 104, 208} |
| 7 | {15, 30, 60, 120, 240} |

[Table 6] excludes only cases of Z = 2, 3 in [Table 3] or [Table 4], because when the TBS is 8 or more, a minimum value of a Z value that can be determined is 4 or more.

As another setting example of a lifting size set, when classifying the lifting size set into A sets *Z₁*, *Z₂, Z₃,* ...*Z_{A},* it can be basically classified in the following manner. (k = 1, 2, ...)
${Z}_{1} = \left\{A,2A,…,{2}^{k}A\right\}$
${Z}_{2} = \left\{\left(A+1\right),2\left(A+1\right),…,{2}^{k}\left(A+1\right)\right\}$
${Z}_{i} = \left\{\left(A+i-1\right),2\left(A+i-1\right),…,{2}^{k}\left(A+i-1\right)\right\}$
${Z}_{A} = \left\{2A-1,2\left(2A-1\right),…,{2}^{k}\left(2A-1\right)\right\}$

For example, examples of cases where A = 4 and A = 8 can be shown as in [Table 7-1] and [Table 7-2] below. (*k = 0, 1, 2,* ...)

**[Table 7-1]**

| ***Set of lifting sizes** (Z)* |
|---|
| 4, 8, 16, 32, ... (= *4* × *2^{k}*) |
| 5, 10, 20, 40, ... (= *5* × *2^{k}*) |
| 6, 12, 24, 48, ... (= *6* × *2^{k}*) |
| 7, 14, 28, 56, ... (= *7* × *2^{k}*) |

**[Table 7-2]**

| ***Set* of** ***lifting sizes** (Z)* |
|---|
| 8, 16, 32, 64, ... (= *8* × *2^{k}*) |
| 9, 18, 36, 72, ... (= *9* × *2^{k}*) |
| 10, 20, 40, 80, ... (= *10* × *2^{k}*) |
| 11, 22, 44, 88, ... (= *11* × *2^{k}*) |
| 12, 24, 48, 96, ... (= *12* × *2^{k}*) |
| 13, 26, 52, 108, ... (= *13* × *2^{k}*) |
| 14, 28, 56, 112, ... (= *14* × *2^{k}*) |
| 15, 30, 60, 120, ... (= *15* × *2^{k}*) |

When a lifting size set is defined in the manner shown in [Table 7-1] and [Table 7-2], there is an advantage that distribution of Z values can be set relatively uniformly. Although the lifting size sets defined in [Table 7-1] and [Table 7-2] all include the same number of Z values, an appropriate Z value may be further added to or subtracted from each set as needed. For example, it is possible to define the lifting size sets of [Table 3] to [Table 6] based on the lifting size set of [Table 7-2].

In addition, by appropriately setting a range of a value *k* in [Table 7-1] and [Table 7-2], Z values suitable for the system may be set. For example, when the value *k* is set to *k* = 0, 1, ... , 6, a lifting size set in which the number of different Z values is 7 in each set is obtained, and when the value *k* is set to *k* = 3, 4, ... , 6, a lifting size set in which the number of different Z values is 4 in each set is obtained. However, the value *k* is an embodiment, and an example of the value *k* does not limit the scope of rights of the present disclosure. In addition, depending on cases, addition of an appropriate Z value or exclusion of a part thereof from the lifting size sets is also possible. For example, if a maximum value of Z set in the system is Zmax, all values greater than Zmax can be removed (e.g., Zmax = 768). In addition, when all Z values supportable in the existing 3GPP 5G standard are included, at least some of values such as 2, 3, 4, 5, 6, 7 may be further included. Of course, even if a 5G or 6G system additionally supports values such as TBS = 8, 16, since values such as Z = 2, 3 are not used, only values such as 4, 6, 7 or 4, 5, 6, 7 may be further included, and values not practically used in 5G may be excluded. A specific example of a lifting size set is shown in [Table 8] below. (In Table 8, numbers in () mean values that may be used as a lifting size or may not be used.)

**[Table 8]**

| ***Set index (**i_{LS}**)*** | ***Set of lifting sizes (**Z**)*** |
|---|---|
| 0 | {(2, 4,) 8, 16, 32, 64, 128, 256, 512} |
| 1 | {(3, 6,) 12, 24, 48, 96, 192, 384, 768} |
| 2 | {(5,) 10, 20, 40, 80, 160, 320, 640} |
| 3 | {7, 14, 28, 56, 112, 224, 448(, 896)} |
| 4 | {(9,) 18, 36, 72, 144, 288, 576} |
| 5 | {11, 22, 44, 88, 176, 352, 704} |
| 6 | {(13,) 26, 52, 104, 208, 416(, 832)} |
| 7 | {15, 30, 60, 120, 240, 480(, 960)} |

Lifting size sets can be defined in various ways other than [Table 3] to [Table 8], but a common feature is that each of a plurality of lifting size sets should not have overlapping lifting sizes, and lifting sizes included in each lifting size set should be in a multiple or divisor relationship with each other. Although [Table 3] to [Table 8] consist of continuous *2^{k}* (*k* = *0, 1, 2*, ...) multiples for a smallest lifting size in each lifting size set, in general, it is possible to consist of non-continuous multiples such as 2*^{k}* (*k* = *0, 1, 3*, *5*, ...), and multiples of other integers in addition to multiples of 2 may also be included.

In a new communication system including a 6G system, in order to support backward compatibility for an existing system (e.g., a 5G system), an existing lifting size set may be maintained as it is (e.g., [Table 3] or [Table 4]), and a new lifting size set may be added (e.g., [Table 5] to [Table 8]). Alternatively, when a lifting size set is defined as one, but a range of a TBS to be used is predetermined differently according to a system configuration such as an application scenario or a target BLER, a range of a Z value to be used also varies. For example, when a first minimum TBS and a first maximum TBS value are set for a service applying a first target BLER, and a second minimum TBS and/or a second maximum TBS value are defined for a service applying a second target BLER, the first minimum TBS and the second minimum TBS value may be different, or the first maximum TBS and the second maximum TBS value may be different (both the minimum value and the maximum value may be different).

In addition, an application service scenario or a target BLER may be determined based on higher layer signaling information. For example, a CQI (channel quality information) table or an MCS (modulation coding scheme) table can be conventionally determined considering target service scenarios or BLERs. (e.g., a first target service or BLER is a first CQI table and/or a first MCS table, a second target service or BLER is a second CQI table and/or a second MCS table, a third target service or BLER is a third CQI table and/or a third MCS table, ...)

Consequently, it means that a range of a lifting size to be used or a lifting size set to be used may be determined from higher layer signaling information, and an intermediate operation thereof may exist in various manners depending on a system. In addition, a lifting size set to be used may be indicated through physical layer signaling or higher layer signaling. A parity check matrix can be determined based on such indicated lifting size set and a determined lifting size Z value.

For reference, in the present invention, a target BLER means a minimum BLER to be achieved in a system, and an average BLER of a terminal or a base station is conventionally set not exceeding the target BLER.

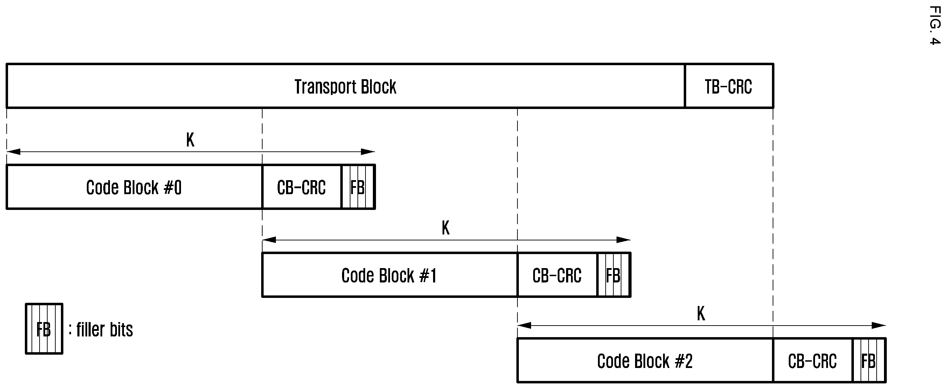

FIG. 4 is a structural diagram of a transport block according to an embodiment of the present disclosure.

With reference to FIG. 4, L bits of CRC bits (TB-CRC bits) are added to a transport block consisting of A bits, and one transport block may become one code block. In addition, when a B = A + L value is greater than a specific threshold value, it may be divided into a plurality of code blocks through an appropriate segmentation process. In this case, sizes K of the code blocks are all identical, and to this end, specific bits called null bits or filler bits may be added to each code block. The null bits or filler bits conventionally correspond to a value of 0, but it is not necessarily required to be limited as such, and configuration with any specific predetermined bits is also possible. An operation of adding predetermined bits such as null bits or fillers in this manner is conventionally called shortening because a size of actual pure information word bits is reduced, and when the values are 0, it may be called zero-padding.

After a transport block size (TBS) to be transmitted is determined, one of two different base matrices of an LDPC code used for LDPC encoding or decoding can be determined based on a code rate indicated in the MCS and the TBS size through a method such as the following [Base Matrix Determination Method].

### [Base Matrix Determination Method]

An LDPC base matrix for LDPC encoding and decoding of a transport block where TBS = A can be determined based on a code rate indicated by an MCS and a TBS size as follows:
When A ≤ 292 (or 288), or when A ≤ 3824 and R ≤ 0.67, or when R ≤ 0.25, LDPC encoding can be performed using LDPC base matrix 2.

Otherwise, LDPC encoding can be performed using LDPC base matrix 1. For reference, base matrix 1 *M*(**H_{BG1}**) and base matrix 2 *M*(**H_{BG2}**) defined in the 3GPP 5G standard are as follows.

*M*(H_{BG1}):
0 1 2 3 5 6 9 10 11 12 13 15 16 18 19 20 21 22 23
02 345 7 8 9 11 12 14 15 16 17 1921 222324
0 1 2 4 5 6 7 8 9 10 13 14 15 17 18 19 20 24 25
01 346 7 8 10 11 12 13 14 16 17 18 20 21 22 25
0 1 26
0 1 3 12 16 21 22 27
0 6 10 11 13 17 18 20 28
01 4 7 8 14 29
0 1 3 12 16 19 21 22 24 30
01 10 11 13 17 18 20 31
1 2 4 7 8 14 32
01 12 16 21 22 23 33
01 10 11 13 18 34
0 3 7 20 23 35
0 12 15 16 17 21 36
0 1 10 13 18 25 37
1 3 11 20 22 38
0 14 16 17 21 39
1 12 13 18 19 40
0 1 7 8 10 41
0 3 9 11 22 42
1 5 16 20 21 43
0 12 13 17 44
1 2 10 18 45
0 3 4 11 22 46
1 6 7 14 47
0 2 4 15 48
1 6 8 49
0 4 19 21 50
1 14 18 25 51
0 10 13 24 52
1 7 22 25 53
0 12 14 24 54
1 2 11 21 55
0 7 15 17 56
1 6 12 22 57
0 14 15 18 58
1 13 23 59
0 9 10 12 60
1 3 7 19 61
0 8 17 62
1 3 9 18 63
0 4 24 64
1 16 18 25 65
0 7 9 22 66
1 6 10 67

*M*(**H_{BG2}**):
0 1 2 3 6 9 10 11
0 3 4 5 6 7 8 9 11 12
0 1 3 4 8 10 12 13
1 2 4 5 6 7 8 9 10 13
0 1 11 14
0 1 5 7 11 15
0 5 7 9 11 16
1 5 7 11 13 17
0 1 12 18
1 8 10 11 19
0 1 6 7 20
0 7 9 13 21
1 3 11 22
0 1 8 13 23
1 6 11 13 24
0 10 11 25
1 9 11 12 26
1 5 11 12 27
0 6 7 28
0 1 10 29
1 4 11 30
0 8 13 31
1 2 32
0 3 5 33
1 2 9 34
0 5 35
2 7 12 13 36
0 6 37
1 2 5 38
0 4 39
2 5 7 9 40
1 13 41
0 5 12 42
2 7 10 43
0 12 13 44
1 5 11 45
0 2 7 46
10 13 47
1 5 11 48
0 7 12 49
2 10 13 50
1 5 11 51

Sizes of base matrix 1 *M*(**H_{BG1}**) and base matrix 2 *M*(**H_{BG2}**) are 46×68 and 42×52, respectively, and sizes of a parity check matrix determined from the base matrix are 46Z×68Z and 42Z×52Z.

In addition, a number of CRC bits (LTB) to be attached to a transport block can be determined according to the determined TBS as follows.

### [Method for Determining Number of Transport Block CRC Bits]

A CRC bit size L_{TB} value for a transport block where TBS = A can be set differently according to a TBS value as follows.

When A > 3824, L_{TB} = 24, and otherwise, L_{TB} = 16.

According to the TBS size (A) determined in this manner or a total number of bits B = A + L in which a CRC is attached to a transport block, an appropriate code block is determined from the transport block, and LDPC encoding and decoding can be performed for each code block. In this case, a process of determining a code block size (CBS) will be described in more detail as follows:

### [CBS Determination Method]

An input bit sequence for code block segmentation can be expressed as b₀, b₁, ..., b_{B-1}. (B > 0) If B is greater than a maximum code block size K_{cb}, segmentation of the input bit sequence is performed, and a CRC of L = 24 bits is additionally attached to each code block. For LDPC base matrix 1, a maximum code block size is K_{cb} = 8448, and for LDPC base matrix 2, a maximum code block size is K_{cb} = 3840.

Specific steps are described as follows.

Step 1: A number of code blocks C can be determined.

If *B* ≤ *K_{cb}, L = 0 and* C = 1, and *B'* = *B.*

Otherwise, *L* = *24,* $C = \left⌈B/\left({K}_{cb}-L\right)\right⌉$, and *B'* = *B* + *C* × *L.*

Step 2: When a bit output from code block segmentation is referred to as cᵣ₀, cᵣ₁,..., cr_{(Kr - 1)}, r means a code block number (0 ≤ r < C), and Kr (= K) may mean a number of bits of a code block for the code block number r. Here, K which is the number of bits included in each code block can be calculated as follows:
$K ′ = B ′ / C ;$

In a case of LDPC base matrix 1, *K_{b}* = *22.*

In a case of LDPC base matrix 2,
If *B > 640, K_{b}* = *10*;
If *560* < *B* ≤ *640, K_{b}* = *9*;
If *192* < *B* ≤ *560, K_{b}* = *8*;
If *B* ≤ *192, K_{b}* = *6.*

Step 3: A minimum value *Z_{c}* satisfying *K_{b}* · *Z_{c}* ≥ *K'* among *Z* values of Table 3 can be determined. For LDPC base matrix 1, *K* = *22Z_{c}* is set, and for LDPC base matrix 2, *K = 10Z_{c}* is set.

In step 2 of the [CBS Determination Method], a value *K_{b}* is a value corresponding to a column or a column block in a base matrix (or a base graph) or a parity check matrix of an LDPC code corresponding to an LDPC information word bit (i.e., information bit), respectively, and may correspond to a maximum value of an LDPC information word bit (= *K_{b}Z_{c}*) without shortening or zero padding. For example, even if the number of columns (or column blocks) corresponding to information word bits in LDPC base matrix 2 or a parity check matrix corresponding to base matrix 2 is 10, if it is set to *K_{b}* = *6*, it substantially means that LDPC encoding/decoding is performed on information word bits of a maximum of *6Z_{c}* bits, and information word bits corresponding to at least (*10* - *K_{b}*)*Z_{c}* = *4Z_{c}* columns in the parity check matrix are shortened or zero-padded. Here, shortening or zero padding may mean that a transmitter and a receiver allocate an agreed bit value such as 0, or may mean that a corresponding portion is not used in the parity check matrix.

A lifting size Z value for LDPC encoding and decoding can be determined based on lifting size sets shown in [Table 3] to [Table 8] or lifting size sets in which specific lifting size values are added and removed. Each of Z values is included in a specific set predetermined according to an index i_{LS}. When a Z value is determined in step 3 of the [CBS Determination Method], a set corresponding to the Z value or an index i_{LS} value of the set is determined, and a parity check matrix of an LDPC code corresponding to each index or a sequence corresponding thereto can also be determined. A modulo operation based on a lifting size Z is applied to the parity check matrix of the LDPC code determined in this manner or a sequence corresponding thereto to transform the parity check matrix or sequence, thereby supporting encoding and decoding of LDPC codes of various lengths. Even in the 3GPP 5G standard, each number included in a parity check matrix or a sequence of an LDPC code means a value corresponding to a circulant permutation matrix.

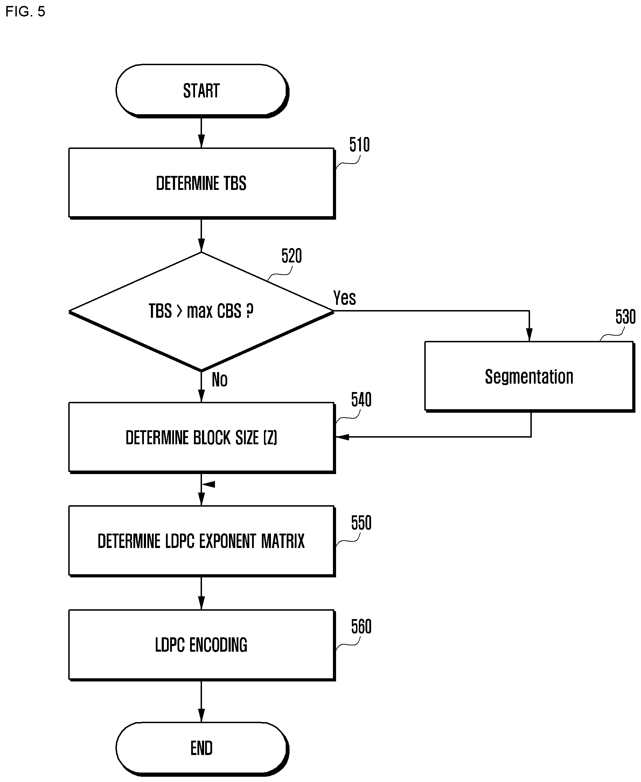

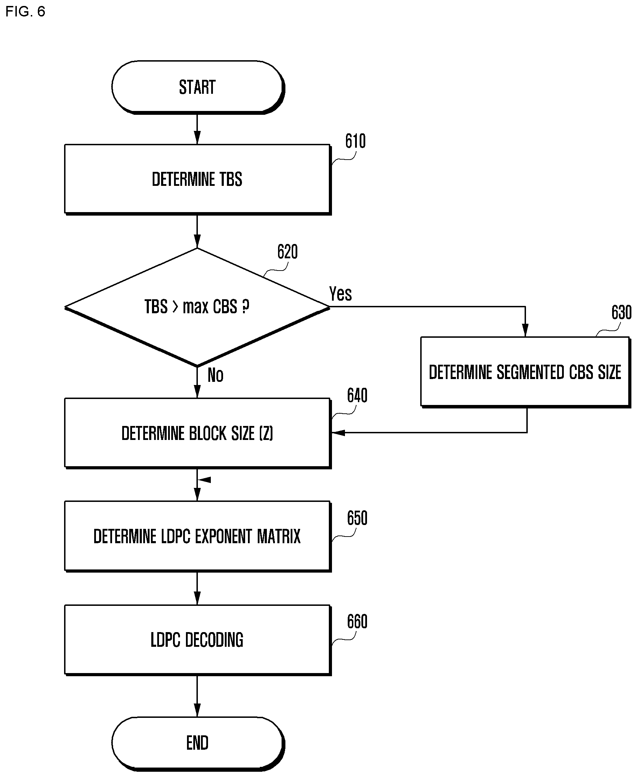

Flowcharts for an embodiment of an LDPC encoding and decoding process based on a designed base matrix or exponent matrix are shown in FIGS. 5 and 6.

FIG. 5 is a diagram illustrating an embodiment of an LDPC encoding process.

First, a transmitter determines a transport block size TBS to be transmitted, as in step 510 of FIG. 5. In step 520, the transmitter determines whether the TBS is greater than max CBS or less than or equal to max CBS.

If the TBS is greater than max CBS, the transmitter can determine a CBS by segmenting the transport block in step 530. If the TBS is less than or equal to max CBS, the transmitter omits a segmentation operation and determines the TBS as a CBS.

In step 540, the transmitter determines a lifting size (Z) value to be applied to LDPC encoding based on the CBS.

Then, in step 550, the transmitter determines a parity check matrix or a sequence according to the TBS or CBS or lifting size (Z) value. Alternatively, the transmitter may determine an LDPC exponent matrix or a sequence having an algebraically identical effect to a parity check matrix.

Then, in step 560, the transmitter performs LDPC encoding based on the parity check matrix or sequence. Alternatively, in step 560, the transmitter may perform LDPC encoding based on an exponent matrix or a sequence. In addition, in step 560, the transmitter may perform LDPC encoding based on a lifting size and an exponent matrix or a sequence.

For reference, step 550 may include a process of transforming the determined LDPC exponent matrix or sequence based on the determined lifting size depending on cases. It is obvious that an LDPC exponent matrix or a sequence or a parity check matrix for LDPC encoding can be determined in various ways based on a TBS or a CBS depending on a system. For example, it is also possible for a transmitter to first determine a base matrix through a TBS, and determine an LDPC exponent matrix or a sequence parity check matrix based on the determined base matrix and a CBS, and various other methods can also be applied. For reference, an additional operation may be included between step 520 and step 540 or between step 530 and step (540) depending on a system. For example, in a case of using base matrix 2 (*M*(**H_{BG2}**)) in a 3GPP 5G system, a process of determining a value *K_{b}* meaning a number of columns to be substantially used in a base matrix or a number of column blocks to be used in a parity check matrix according to a TBS size may be included. (For reference, shortening is applied to column blocks of a parity check matrix corresponding to columns of (10 - *K_{b}*) base matrices.)

An LDPC decoding process can be similarly represented as shown in FIG. 6.

FIG. 6 is a diagram illustrating an embodiment of an LDPC decoding process.

If a TBS is determined in step 610, a receiver determines whether the TBS is greater than max CBS or less than or equal to max CBS in step 620.

If the TBS is greater than max CBS, the receiver determines a size of a CBS to which segmentation is applied in step 630. If it is determined that the TBS is less than or equal to max CBS, the TBS is determined identically to the CBS.

In step 640, the receiver determines a lifting size (Z) value to be applied to LDPC decoding.

Then, in step 650, the receiver determines a parity check matrix or a sequence according to the TBS or CBS or lifting size (Z) value. Alternatively, a transmitter may determine an exponent matrix or a sequence having an algebraically identical effect to a parity check matrix.

Then, in step 660, the receiver can perform LDPC decoding based on the parity check matrix or sequence. Alternatively, in step 660, the receiver may perform LDPC decoding using an exponent matrix or a sequence. For reference, step 650 may include a process of transforming the determined LDPC exponent matrix or sequence based on the determined lifting size depending on cases. It is obvious that an LDPC exponent matrix or a sequence or a parity check matrix for LDPC decoding can be determined in various ways based on a TBS or a CBS depending on a system. For example, a receiver may first determine a base matrix through a TBS, and determine an LDPC exponent matrix or a sequence parity check matrix based on the determined base matrix and a CBS, and various other methods can also be applied.

According to the above embodiment, a process of determining an exponent matrix or a sequence of an LDPC code in steps 550 and 650 of FIGS. 5 and 6 has been described for a case where an exponent matrix or a sequence is determined by one of a TBS, a CBS, or a lifting size (Z), but various other methods may exist. In addition, an additional operation may be included between step 620 and step 640 or between step 630 and step 640 of FIG. 6 depending on a system. For example, in a case of using base matrix 2 (*M*(**H_{BG2}**)) in a 3GPP 5G system, a process of determining a value *K_{b}* meaning a number of columns to be substantially used in a base matrix or a number of column blocks to be used in a parity check matrix according to a TBS size may be included. For reference, since a receiver can know that shortening has been applied in a transmitter to bits corresponding to column blocks of a parity check matrix corresponding to columns of (10 - *K_{b}*) base matrices, the receiver may additionally perform an appropriate operation on shortened bits before performing LDPC decoding.

In the embodiment of the LDPC encoding and decoding process based on a base matrix and an exponent matrix (or an LDPC sequence) of the LDPC code of FIGS. 5 and 6, a part of information word bits is appropriately shortened or punctured for the LDPC code, and a part of codeword bits is punctured and repeated, thereby supporting LDPC encoding and decoding of various code rates and various lengths. For example, like the 3GPP 5G standard technology, in the LDPC encoding process of FIG. 5, shortening is applied to a part of information word bits, information word bits corresponding to the first two columns of a base matrix, i.e., the first *2Z_{c}* columns in a parity check matrix, are punctured, and a part of parity is punctured or a part of an LDPC codeword is repeated, thereby supporting various information word bit lengths (or code block lengths) and various code rates.

When given input bits or code block bits are referred to as *i₀, i₁, i₂*, ... , *i_{K-1}* and encoded bits are represented as *d₀, d₁, d₂, ... , d_{N-1}* (where in a case of base matrix 1, *N* = 66Z*_{c}*, and in a case of base matrix 2, *N* = 50Z*_{c}*), a part of an encoding process may be defined as shown in [Table 9] below.

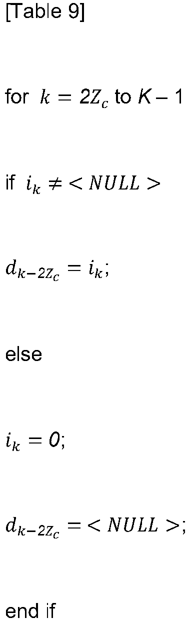

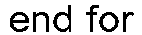

According to the above encoding process, first *2Z_{c}* bits *i₀, i₁, i₂,* ... , *i_{2Z_{c}-1}* among input bits or code block bits are not included in encoded bits. That is, it means that the *2Z_{c}* bits are punctured in a transmitter and are not transmitted to a receiver. For reference, when a part of information word bits is punctured, it means that a transmitter does not transmit a part of the information words 102 of FIG. 1, and therefore, a receiver can perform decoding by treating non-transmitted information word bits as being erased. In other words, since a punctured bit is regarded as being erased and has an equal probability of being 0 and 1, a receiver may perform decoding by inserting a value corresponding thereto.
information word bits punctured in the encoding process may not always be transmitted even in a case of retransmission. When a circular buffer is used for rate matching, when rate matching and retransmission are performed without storing the punctured information word bits in a circular buffer, the punctured information word bits may never be transmitted.

On the other hand, a part of information word bits is punctured in a case of initial transmission, and all or a part of the punctured information word bits may be transmitted in a case of retransmission. All information word bits are stored in a circular buffer, but a redundancy value (RV) value can be appropriately set so that a part of information word bits is punctured in a case of initial transmission (e.g., an RV0 value is set by excluding information word bits to be punctured). Even if a part of the information word bits is punctured in initial transmission, since the bit values are stored in a circular buffer, a part or all of the punctured information word bits can be transmitted according to a circular buffer rate matching operation and selection of an appropriate RV value in a case of retransmission.

In [Table 9], *d₀, d₁, d₂,* ... , *d_{N-1}* is referred to as encoded bits for convenience, but a definition of encoded bits may be changed for convenience of explanation. For example, a bit string after puncturing a part of information word bits as *d₀, d₁, d₂,* ... , *d_{N-1}* in [Table 9] may be defined as encoded bits, but since input bits and code block bits *i₀, i₁, i₂, ... , i_{K-1}* are used to generate a parity bit vector *w* in an actual encoding process, before puncturing information word bits may be defined as encoded bits.$\left({i}_{¯}, {w}_{¯}\right) = \left({i}_{0},{i}_{1},{i}_{2},…,{i}_{{K}_{ldpc} - 1},{w}_{0},{w}_{1},{w}_{2},…,{w}_{{N}_{ldpc} - {K}_{ldpc} - 1}\right)$

In addition, a bit string *e₀, e₁, e₂, ... , e_{E-1}* to which rate matching is applied based on an allocated resource amount may be defined as encoded bits, and a bit string *f₀, f₀, f₂,* ... , *f_{E-1}* to which interleaving is applied to a rate-matched bit string may be defined as encoded bits. Besides, an encoding bit string may be variously defined for convenience of explanation, but conventionally, a bit string related to actual transmission in a system is *d₀, d₁*, *d₂*, ... , *d*_{*N-*1}, but (*i, w*) related to an encoding process can be defined as encoded bits.

In the LDPC decoding process of FIG. 6, decoding can proceed by adding an appropriate operation to shortened information word bits, punctured bits, or repeated bits corresponding to the transmitter operation. Conventionally, since shortened information word bits are 0, a receiver performs decoding by excluding columns corresponding to shortened bits from a parity check matrix, or performs decoding by setting a preset value for shortened bits in a system. (Since it is certain to be 0, a highest value corresponding to 0 set in a system is conventionally set.) Since punctured parity bits are regarded as erasure and have an equal probability of being 0 and 1, a receiver may perform decoding by inserting a value corresponding thereto, and depending on a structure of a parity check matrix, decoding may be performed without using at least a part of rows corresponding to punctured parity bits. In general, when puncturing a parity bit corresponding to a column having a degree of 1, an LDPC decoder can perform decoding without using a part or all of a corresponding portion in a parity check matrix, which has an advantage of reducing decoding complexity.

Furthermore, when variable information word bit lengths or variable code rates are supported by using shortening or zero padding of an LDPC code, performance of a code can be improved according to a shortening order or a shortening method. If a shortening order is set, encoding performance can be improved by appropriately rearranging an order of a part or all of a given base matrix. In addition, performance may be improved by appropriately determining a lifting size or a number of column blocks to apply shortening for a specific information word bit length (or a code block length CBS). Similarly, there is a method capable of improving performance of an LDPC code by adjusting a puncturing order of parity bits or a transmission order of a generated LDPC codeword. For example, supporting a case where a part of information word bits and parity bits are appropriately punctured can support more excellent performance than simply puncturing parity bits to support a variable code rate. In addition, when repeating a part of an LDPC codeword to support a lower code rate, LDPC encoding performance may be improved by appropriately determining an order thereof in advance.

Conventionally, in the LDPC encoding process, a transmitter first determines a size of an input bit (or a code block) to apply LDPC encoding, then determines a lifting size (Z) to apply the LDPC encoding according to the size, determines an appropriate LDPC exponent matrix or a sequence according to the lifting size, and then performs LDPC encoding based on the lifting size (Z) and the determined exponent matrix or LDPC sequence. In this case, the LDPC encoding may be performed by applying the LDPC exponent matrix or sequence to LDPC encoding without transformation, or depending on cases, by appropriately transforming the LDPC exponent matrix or sequence according to a lifting size (Z).

Similarly, in the LDPC decoding process, a receiver determines a size of an input bit (or a code block) for a transmitted LDPC codeword, then determines a lifting size (Z) to apply LDPC decoding according to the size, determines an appropriate LDPC exponent matrix or a sequence according to the lifting size, and then performs LDPC decoding based on the lifting size (Z) and the determined exponent matrix or LDPC sequence. In this case, the LDPC decoding may be performed by applying the LDPC exponent matrix or sequence to LDPC decoding without transformation, or depending on cases, by appropriately transforming the LDPC exponent matrix or sequence according to a lifting size (Z).

A submatrix corresponding to parity bits in a parity check matrix often has a special structure for efficient encoding. In this case, a change in an encoding method or complexity may occur due to lifting. Therefore, in order to maintain the same encoding method or complexity, lifting may not be applied to a part of an exponent matrix for a submatrix corresponding to parity in a parity check matrix, or lifting different from a lifting scheme applied to an exponent matrix for a submatrix corresponding to information word bits may be applied. In other words, a lifting scheme applied to a sequence corresponding to information word bits in an exponent matrix and a lifting scheme applied to a sequence corresponding to parity bits may be set differently, and depending on cases, a fixed value may be used without sequence transformation by not applying lifting to a part or all of the sequence corresponding to parity bits.

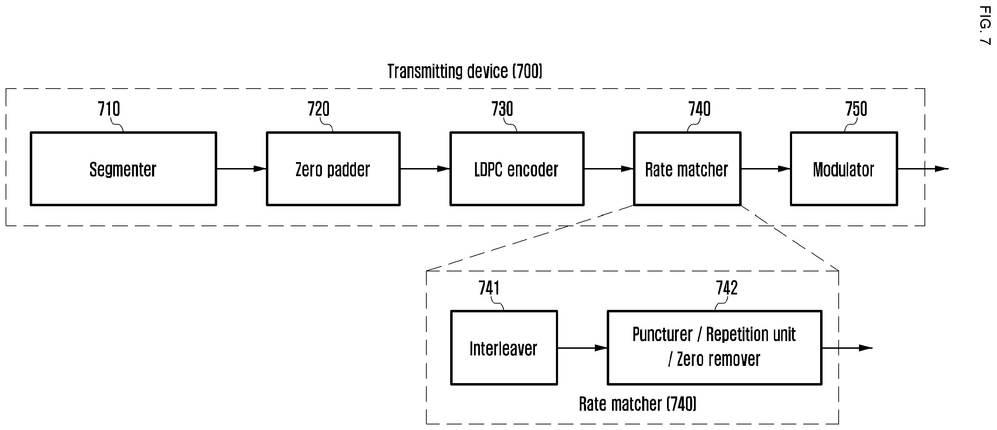

FIG. 7 is a block configuration diagram of a transmitting device according to an embodiment of the present disclosure.

Specifically, as in FIG. 7, a transmitting device 700 may include a segmenter 710, a zero padder 720, an LDPC encoder 730, a rate matcher 740, a modulator 750, and the like, to process variable-length input bits. The rate matcher 740 may include an interleaver 741, a puncturer/repetition unit/zero remover 742, and the like.

Here, components illustrated in FIG. 7 are components that perform encoding and modulation on variable-length input bits, which are merely examples, and depending on cases, some of the components illustrated in FIG. 7 may be omitted or changed, and other components may be further added.

Meanwhile, the transmitting device 700 determines required parameters (for example, at least one of an input bit length, a modulation and code rate (ModCod), a parameter for zero padding (or shortening), a code rate/codeword length of an LDPC code, a parameter for interleaving, a parameter for repetition and puncturing, and a modulation scheme), and can encode input bits based on the determined parameters to transmit them to a receiving device 800.

In terms of a variable number of input bits, when the number of input bits is greater than a preset value, the input bits may be segmented to have a length less than or equal to a preset value. In addition, each of segmented blocks may correspond to one LDPC-coded block. However, when the number of input bits is less than or equal to a preset value, the input bits are not segmented and the input bits may correspond to one LDPC-coded block.

Meanwhile, the transmitting device 700 may store various parameters used for encoding, interleaving, and modulation. Here, parameters used for encoding may include at least one of a code rate of an LDPC code, a codeword length, and information on a parity check matrix. Further, parameters used for interleaving may include information on an interleaving rule, and parameters used for modulation may include information on a modulation scheme. In addition, information on puncturing may include a puncturing length. In addition, information on repetition may include a repetition length. The information on the parity check matrix may include exponent values of a circulant matrix or values algebraically identical thereto when using a parity matrix presented in the present disclosure.

In this case, each component constituting the transmitting device 700 can perform an operation using these parameters.

Meanwhile, although not illustrated, depending on cases, the transmitting device 700 may further include a control unit (not illustrated) for controlling operations of the transmitting device 700.

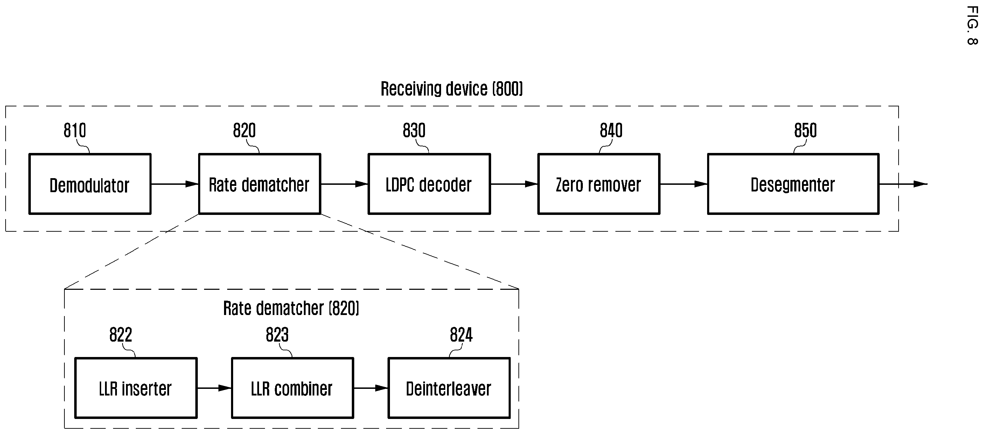

FIG. 8 is a block configuration diagram of a receiving device according to an embodiment of the present disclosure.

Specifically, as illustrated in FIG. 8, the receiving device 800 may include a demodulator 810, a rate dematcher 820, an LDPC decoder 830, a zero remover 840, a desegmentater 850, and the like, to process variable-length information. The rate dematcher 820 may include a log likelihood ratio (LLR) inserter 822, an LLR combiner 823, a deinterleaver 824, and the like.

Here, components illustrated in FIG. 8 are components that perform functions corresponding to the components illustrated in FIG. 8, which are merely examples, and depending on cases, some may be omitted or changed, and other components may be further added.

A parity check matrix in the present disclosure may be read using a memory, may be given in advance in a transmitting device or a receiving device, or may be directly generated in a transmitting device or a receiving device. In addition, a transmitting device can apply to encoding by storing or generating a sequence or an exponent matrix corresponding to the parity check matrix or a value algebraically identical thereto. Similarly, a receiving device can also apply to decoding by storing or generating a sequence or an exponent matrix corresponding to the parity check matrix or a value algebraically identical thereto.

Hereinafter, a detailed description of an operation of a receiver will be given based on FIG. 8.

The demodulator 810 demodulates a signal received from the transmitting device 700.

Specifically, the demodulator 810 is a component corresponding to the modulator 750 of the transmitting device 700, and may generate values corresponding to bits transmitted from the transmitting device 700 by demodulating a signal received from the transmitting device 700.

To this end, the receiving device 800 determines parameters required for demodulation and decoding (for example, at least one of an input bit length, a ModCod (modulation and code rate), a parameter for zero padding (or shortening), a code rate/codeword length of an LDPC code, a parameter for interleaving, a parameter for repetition and puncturing, and a modulation scheme), and based on the determined parameters, the demodulator 810 may perform a decoding process of generating values corresponding to LDPC codeword bits by demodulating a signal received from the transmitting device 700 according to a mode.

Meanwhile, a value corresponding to bits transmitted from the transmitting device 700 may be an LR (likelihood ratio) value or an LLR (log likelihood ratio) value.

Specifically, an LR value means a ratio of a probability that a bit transmitted from the transmitting device 700 is 0 to a probability that it is 1, and an LLR value may be represented as a value obtained by taking a Log of a ratio of a probability that a bit transmitted from the transmitting device 700 is 0 to a probability that it is 1. Alternatively, an LR or LLR value may be hard-decided according to the probability or a ratio of probabilities or a Log value for a ratio of probabilities to be represented as the bit value itself, or may be represented as a representative value defined in advance according to an interval to which the probability or a ratio of probabilities or a Log value for a ratio of probabilities belongs. As an example of a method for determining a representative value defined in advance according to an interval to which the probability or a ratio of probabilities or a Log value for a ratio of probabilities belongs, there is a method considering quantization. Besides, various other values corresponding to the probability or a ratio of probabilities or a Log value for a ratio of probabilities may be used.

In the present disclosure, an operation based on an LLR value is shown for convenience to describe an operation of a receiving method and device, but it is not required to be limited thereto.

The demodulator 810 includes a function of performing multiplexing (not illustrated) on an LLR value. Specifically, a MUX (not illustrated) is a component corresponding to a bit DEMUX (not illustrated) of the transmitting device 700, and can perform an operation corresponding to the bit DEMUX (not illustrated).

To this end, the receiving device 800 may store information on parameters that the transmitting device 700 used for demultiplexing and block interleaving. Accordingly, a MUX (not illustrated) inversely performs demultiplexing and block interleaving operations performed in a bit DEMUX (not illustrated) on an LLR value corresponding to a cell word (information representing a received symbol for an LDPC codeword as a vector value), thereby multiplexing an LLR value corresponding to a cell word in a bit unit.

The rate dematcher 820 may additionally insert an LLR value into LLR values output from the demodulator 810. In this case, the rate dematcher 820 may insert LLR values promised in advance between LLR values output from the demodulator 810.

Specifically, the rate dematcher 820 is a component corresponding to the rate matcher 740 of the transmitting device 700, and may perform operations corresponding to the interleaver 741, zero removal and a puncturer/repetition unit/zero remover 742.

First, the rate dematcher 820 performs deinterleaving to correspond to the interleaver 741 of the transmitter. The LLR inserter 822 may insert an LLR value corresponding to zero bits into locations where zero bits were padded in an LDPC codeword from output values of the deinterleaver 824. In this case, an LLR value corresponding to padded zero bits, i.e., shortened zero bits, may be ∞ or -∞. However, ∞ or -∞ are theoretical values, and may substantially be a maximum value or a minimum value of an LLR value used in the receiving device 800.

To this end, the receiving device 800 may store information on parameters that the transmitting device 700 used to pad zero bits. Accordingly, the rate dematcher 820 determines locations where zero bits were padded in an LDPC codeword, and can insert an LLR value corresponding to shortened zero bits into corresponding locations.

In addition, the LLR inserter 822 of the rate dematcher 820 can insert an LLR value corresponding to punctured bits into locations of punctured bits in an LDPC codeword. In this case, an LLR value corresponding to punctured bits may be 0 or another value determined in advance. In general, when parity bits having a degree of 1 are punctured, there is no effect on performance improvement in an LDPC decoding process, and thus it may not be used in an LDPC decoding process without LLR insertion into a part or all of corresponding puncturing locations. However, in order to increase efficiency of an LDPC decoding process based on a parallel process, the LLR inserter 822 may insert a predetermined LLR value into locations corresponding to a part or all of punctured bits having a degree of 1, regardless of decoding performance improvement.

To this end, the receiving device 800 can store information on parameters used for puncturing in the transmitting device 700. Accordingly, the LLR inserter 822 can insert an LLR value (e.g., LLR = 0) corresponding thereto into locations where LDPC information word bits or parity bits are punctured. However, this process may be omitted at locations of some punctured parity bits.

The LLR combiner 823 may combine, i.e., sum, LLR values output from the LLR inserter 822 and the demodulator 810. Specifically, the LLR combiner 823 is a component corresponding to the puncturer/repetition unit/zero remover 742 of the transmitting device 700, and may perform an operation corresponding to the repetition unit 742. First, the LLR combiner 823 may combine an LLR value corresponding to repeated bits with another LLR value. Here, another LLR value may be an LLR value for bits that became a basis for generating repeated bits in the transmitting device 700, i.e., LDPC information word bits or parity bits selected as a repetition target.

That is, as described above, the transmitting device 700 selects LDPC encoded bits, repeats them between LDPC information word bits and LDPC parity bits, and transmits them to the receiving device 800. Accordingly, an LLR value for LDPC encoded bits may consist of an LLR value for repeated LDPC encoded bits and an LLR value for non-repeated LDPC encoded bits. The LLR combiner 823 may combine LLR values for identical LDPC encoded bits.

To this end, the receiving device 800 may store information on parameters used for repetition in the transmitting device 700. Accordingly, the LLR combiner 823 may determine an LLR value for repeated LDPC encoded bits, and combine this with an LLR value for LDPC encoded bits that became a basis for repetition.

In addition, the LLR combiner 823 may combine an LLR value corresponding to retransmitted or increment redundancy (IR) bits with another LLR value. Here, another LLR value may be an LLR value for a part or all of LDPC codeword bits that became a basis for generating retransmitted or IR bits in the transmitting device 700.

As described above, the transmitting device 700 may transmit some bits or all bits among codeword bits to the receiving device 800 when a NACK occurs for HARQ.

Accordingly, the LLR combiner 823 may combine an LLR value for bits received through retransmission or IR with an LLR value for LDPC codeword bits received through a previous frame.

To this end, the receiving device 800 may store information on parameters used for generation of retransmitted or IR bits in the transmitting device 700. Accordingly, the LLR combiner 823 may determine an LLR value for a number of retransmitted or IR bits, and combine this with an LLR value for LDPC encoded bits that became a basis for generation of retransmitted bits.

The deinterleaver 824 may deinterleave an LLR value output from the LLR combiner 823.

Specifically, the deinterleaver 824 is a component corresponding to the interleaver 741 of the transmitting device 700, and may perform an operation corresponding to the interleaver 741.

To this end, the receiving device 800 may store information on parameters that the transmitting device 700 used for interleaving. Accordingly, the deinterleaver 824 may inversely perform an interleaving operation performed in the interleaver 741 on an LLR value corresponding to transmitted LDPC encoded bits, thereby deinterleaving an LLR value corresponding to the transmitted LDPC encoded bits.

The LDPC decoder 830 may perform LDPC decoding based on an LLR value output from the rate dematcher 820.

Specifically, the LDPC decoder 830 is a component corresponding to the LDPC encoder 730 of the transmitting device 700, and may perform an operation corresponding to the LDPC encoder 730.

To this end, the receiving device 800 may pre-store information on parameters that the transmitting device 700 used to perform LDPC encoding according to a mode. Accordingly, the LDPC decoder 830 may perform LDPC decoding based on an LLR value output from the rate dematcher 820 according to a mode.

For example, the LDPC decoder 830 may perform LDPC decoding based on an LLR value output from the rate dematcher 820 based on an iterative decoding scheme based on a sum-product algorithm, and output error-corrected bits according to the LDPC decoding. The LDPC decoder 830 performs LDPC decoding on an LDPC codeword based on a parity check matrix or an exponent matrix or a sequence corresponding thereto. In addition, LDPC decoding may be performed using parity check matrices differently defined according to a code rate (i.e., a code rate of an LDPC code). The LDPC decoder 830 may generate information word bits by performing LDPC decoding by passing an LLR value corresponding to LDPC codeword bits through an iterative decoding algorithm. Here, an LLR value is a channel value corresponding to LDPC codeword bits and may be expressed in various ways.

The zero remover 840 may remove zero bits from bits output from the LDPC decoder 830.

Specifically, the zero remover 840 is a component corresponding to the zero padder 720 of the transmitting device 700, and may perform an operation corresponding to the zero padder 720.

To this end, the receiving device 800 may pre-store information on parameters that the transmitting device 700 used to pad zero bits. Accordingly, the zero remover 840 may remove zero bits padded in the zero padder 720 from bits output from the LDPC decoder 830.

The desegmentater 850 is a component corresponding to the segmenter 710 of the transmitting device 700, and may perform an operation corresponding to the segmenter 710.

To this end, the receiving device 800 may pre-store information on parameters that the transmitting device 700 used for segmentation. Accordingly, the desegmentater 850 may combine segments for bits output from the zero remover 840, i.e., variable-length input bits, thereby restoring bits before segmentation.

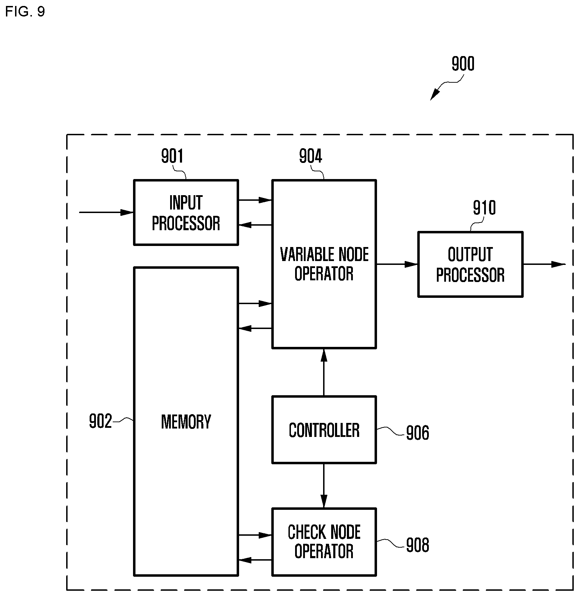

FIG. 9 illustrates a structural diagram of an LDPC decoder according to an embodiment of the present disclosure.

Meanwhile, as described above, an LDPC decoder 830 may perform LDPC decoding using an iterative decoding algorithm, and in this case, the LDPC decoder 830 may be configured with a structure as illustrated in FIG. 9. However, the detailed configuration illustrated in FIG. 9 is also merely an example.

According to FIG. 9, a decoding device 900 includes an input processor 901, a memory 902, a variable node operator 904, a controller 906, a check node operator 908, and an output processor 910.

The input processor 901 stores an input value. Specifically, the input processor 901 may store an LLR value of a received signal received through a channel.

The controller 906 determines the number of values input to the variable node operator 904, an address value in the memory 902, the number of values input to the check node operator 908, and an address value in the memory 902 based on a parity check matrix corresponding to a size of a block of the received signal received through the channel (i.e., a codeword length) and a code rate.

The memory 902 stores input data and output data of the variable node operator 904 and the check node operator 908.

The variable node operator 904 receives data from the memory 902 according to address information of the input data and information on the number of the input data received from the controller 906, and performs a variable node operation. Thereafter, the variable node operator 904 stores variable node operation results in the memory 902 based on address information of output data and information on the number of the output data received from the controller 906. In addition, the variable node operator 904 inputs the variable node operation result to the output processor 910 based on data received from the input processor 901 and the memory 902. Here, the variable node operation has been described above based on FIG. 6.

The check node operator 908 receives data from the memory 902 based on the address information of the input data and the information on the number of the input data received from the controller 906, and performs a check node operation. Thereafter, the check node operator 908 stores check node operation results in the memory 902 based on the address information of the output data and the information on the number of the output data received from the controller 906. Here, the check node operation has been described above based on FIG. 6.

The output processor 910 performs a hard decision on whether information word bits of a codeword on a transmitting side were 0 or 1 based on the data received from the variable node operator 904, outputs a result of the hard decision, and an output value of the output processor 910 finally becomes a decoded value. In this case, the hard decision may be performed based on a value obtained by adding all message values (an initial message value and all message values input from a check node) input to one variable node in FIG. 6.

Meanwhile, the memory 902 of the decoding device 900 may store information on a code rate of an LDPC code, a codeword length, and a parity check matrix, and the LDPC decoder 830 may perform LDPC decoding by using the information. However, this is merely an example, and the corresponding information may be provided from the transmitting side.

For reference, in the present disclosure, the description is limited to the LDPC code as a forward error correction (FEC) scheme of a communication system, but in general, FEC encoding and decoding of a communication system may be subdivided into a form of a concatenated code such as an outer code and an inner code. According to definitions of the outer code and the inner code, a transmitter performs inner encoding after outer encoding, and a receiver performs outer decoding after inner decoding.

In a case of the outer code, an algebraic code capable of relatively simple error detection or correction, such as a cyclic redundancy check (CRC) code, a Bose-Chaudhuri-Hocquenghem (BCH) code, and a Reed-Solomon (RS) code, is widely utilized, but it does not necessarily need to be limited thereto, and overlapping application of a plurality of codes is also possible.

In a case of the inner code, an encoding scheme having a relatively complex but excellent error correction capability, such as an LDPC code, a Turbo code, and a Polar code, is widely utilized, but it does not necessarily need to be limited thereto. (For example, a tail-biting convolutional code or another algebraic code may be used, and overlapping application of a plurality of codes is also possible.) For reference, in a 3GPP 5G system, a CRC code is used as the outer code, an LDPC code is used as the inner code for a data channel, and a Polar code is used as the inner code for a control channel.

Various broadcasting systems and communication systems use an LDPC code optimized for each system, and although the present disclosure basically describes a system using an LDPC code defined based on a parity check matrix having the same structure as the LDPC code used in the 3GPP 5G system, it does not necessarily need to be limited thereto. In addition, in a communication system including a 5G or 6G system, rate matching may be applied in a transmitter and rate dematching may be applied in a receiver to support various code rates and various code lengths, but in a system performing encoding/decoding based on a fixed LDPC code like some broadcasting systems, all or a part of other operations as well as rate matching or rate dematching may be omitted.

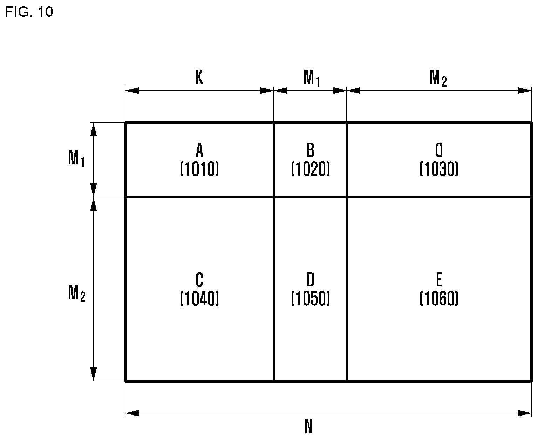

FIG. 10 illustrates a general structure of a parity check matrix of an LDPC code which is an inner code applied to an FEC encoding unit (not illustrated) and an FEC decoding unit (not illustrated) to be described in the present disclosure.

The number of columns of the parity check matrix illustrated in FIG. 10 is N, and the number of rows is (M₁ + M₂) (where M₁, M₂ ≥ 0, M₁ + M₂ > 0). In general, when a parity check matrix has a full rank, the number of columns corresponding to information word bits in the parity check matrix is equal to a number obtained by subtracting the total number of rows from the total number of columns. That is, if the parity check matrix of FIG. 10 has a full rank (M₁ + M₂), it means that a number K of information word bits becomes N - (M₁ + M₂). In the present disclosure, for convenience, only a case where the parity check matrix of FIG. 10 has a full rank is described, but it does not necessarily need to be limited thereto.

First, the parity check matrix of FIG. 10 may be classified into a first part of a parity check matrix composed of submatrices A 1010 and B 1020, and a second part of the parity check matrix composed of submatrices C 1040, D 1050, and E 1060 (where in a case that one of M1 and M2 is 0, it may not be classified into the first part and the second part). A submatrix O 1030 means a zero-matrix having a size of (M1 × M2). Since the submatrix O 1030 is a zero-matrix having a size of (M1 × M2), even if it is included in the first part of the parity check matrix, it does not affect an operation of the matrix. For this reason, in the present disclosure, for convenience, the first part of the parity check matrix is defined as a matrix composed of the submatrices A 1010 and B 1020 excluding the zero-matrix having a size of (M₁ × M₂), but if necessary, the first part of the parity check matrix may include the zero-matrix having a size of (M₁ × M₂).

If the parity check matrix of FIG. 10 is defined as a QC LDPC code having a lifting size or a block size of Z, the parity check matrix of FIG. 10 may correspond to a base matrix or a weight matrix having a size of *m_{b}* × *n_{b}* for *k_{b} = K*/*Z, n_{b}* = *N*/*Z,* and *m_{b}* = (*M₁* + *M₂*)/*Z* = *m_{b1}* + *m_{b2}* (*m_{b1}* = *M*/*Z, m_{b2}* = *M₂*/*Z*). Similarly, the first part of the parity check matrix composed of the submatrices A 1010 and B 1020 corresponds to a submatrix of a base matrix or a weight matrix having a size $\left(\frac{{M}_{1}}{Z}\right) \times \left(\frac{K + {M}_{1}}{Z}\right)$ or *m_{b1}* × (*k_{b}* + *m_{b1}*), and the second part of the parity check matrix composed of the submatrices C 1040, D 1050, and E 1060 corresponds to a submatrix of a base matrix or a weight matrix having a size $\left(\frac{{M}_{2}}{Z}\right) \times \left(\frac{K + {M}_{1} + {M}_{2}}{Z}\right)$ or *m_{b2}* × (*k_{b}* + *m_{b1}* + *m_{b2}*) = *m_{b2}* × *n_{b}.*

For convenience, let the parity check matrix of FIG. 10 be H, let information word bits (or an information word bit vector) corresponding to the submatrix A 1010 or C 1040 be ***i*** = (*i₀, i₁, i₂, ... , i_{K-1}),* let first parity bits (or a first parity bit vector) corresponding to the submatrix B 1020 or D 1050 be ***w*₁** = (*w_{1,0}, w_{1,1}, w_{1,2},* ... *, w_{1M₁-1}*), and let second parity bits (or a second parity bit vector) corresponding to the submatrix E 1060 be ***w*₂** = (*w_{2,0}, w_{2,1}, w_{2,2},* ... , *w_{2,M₂-1}*), then a relational expression such as Equation 13 below may be obtained from Equation 1. [Equation 3] $\begin{matrix}H ⋅ {c}^{T} = H ⋅ \left[\begin{matrix}{{i}_{¯}}^{T} \\ {{w}_{¯}}_{1}^{T} \\ {{w}_{¯}}_{2}^{T}\end{matrix}\right] = \left[\begin{matrix}A & B & O \\ C & D & E\end{matrix}\right] ⋅ \left[\begin{matrix}{{i}_{¯}}^{T} \\ {{w}_{¯}}_{1}^{T} \\ {{w}_{¯}}_{2}^{T}\end{matrix}\right] \\ = \left\{\begin{matrix}A ⋅ {{i}_{¯}}^{T} + B ⋅ {{w}_{¯}}_{1}^{T} = 0 \\ C ⋅ {{i}_{¯}}^{T} + D ⋅ {{w}_{¯}}_{1}^{T} + E ⋅ {{w}_{¯}}_{2}^{T} = 0\end{matrix}\right.\end{matrix}$

With reference to Equation 13, the first parity vector ***w*₁** may be obtained (or calculated or determined) based on the information word bit vector i and the first part of the parity check matrix. In addition, after obtaining the parity vector ***w*₁**, a parity vector ***w*₂** may be obtained (or calculated or determined) based on the information word bit vector ***i***, the parity vector ***w*₁**, and the second part of the parity check matrix.

In the present disclosure, for convenience, the first part of the parity check matrix composed of A 1010 and B 1020 required to generate the first parity vector ***w*₁** based on the information word bit vector ***i*** may be referred to as a core part, a core matrix, a kernel part, a kernel matrix, a precoding part, or a precoding matrix. In addition, the second part of the parity check matrix composed of C 1040, D 1050, and E 1060 required to generate the second parity vector *w*₂ based on the information word bit vector ***i*** and/or the first parity vector ***w*₁** may be referred to as an extension part, a single parity-check extension part, or the like.

As a specific example, the core matrix parts of base matrix 1 *M*(**H_{BG1}**) and base matrix 2 *M*(***H_{BG2}***) defined in the aforementioned 3GPP 5G standard are respectively expressed as follows.

Core matrix of *M*(**H_{BG1}**):
0 1 2 3 5 6 9 10 11 12 13 15 16 18 19 20 21 22 23
0 2 3 4 5 7 8 9 11 12 14 15 16 17 19 21 22 23 24
0 1 2 4 5 6 7 8 9 10 13 14 15 17 18 19 20 24 25
0 1 3 4 6 7 8 10 11 12 13 14 16 17 18 20 21 22 25

Core matrix of *M*(**H_{BG2}**):
0 1 2 3 6 9 10 11
0 3 4 5 6 7 8 9 11 12
0 1 3 4 8 10 12 13
1 2 4 5 6 7 8 9 10 13

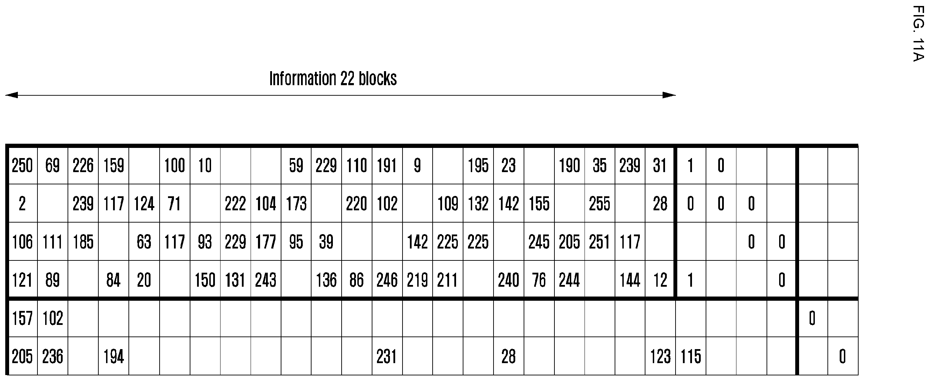

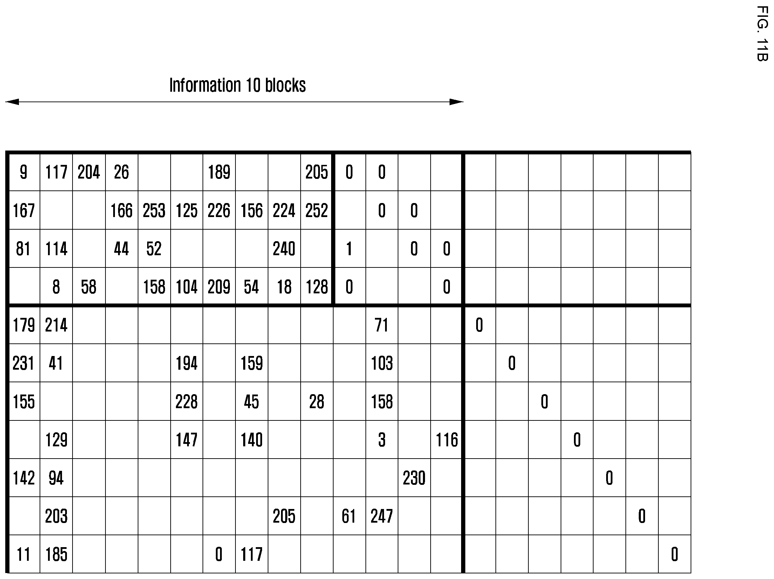

A size of the core matrix of *M*(**H_{BG1}**) is 4×26, and a size of the core matrix of *M*(H**_{BG2}**) is 4×14. In addition, based on a parity check matrix, sizes of the core matrices are 4Z×26Z and 4Z×14Z, respectively. As a specific example, a part of an exponent matrix of an LDPC code defined for a case where a lifting size set index *i_{LS} =* 0 in the 3GPP 5G specification TS 38.212 is illustrated in FIGS. 11A and 11B. In FIGS. 11A and 11B, parts corresponding to a core matrix of a base matrix or a parity check matrix are as follows.

Core matrix of *V*(**H₁**) for *i_{LS}* = 0:
250 69 226 159 100 10 59 229 110 191 9 195 23 190 35 239 31 1 0
2 239 117 124 71 222 104 173 220 102 109 132 142 155 255 28 0 0 0
106 111 185 63 117 93 229 177 95 39 142 225 225 245 205 251 11700
121 89 84 20 150 131 243 136 86 246 219 211 240 76 244 144 12 1 0

Core matrix of *V*(**H₂**) for *i_{LS}* = *0*:
9 117 204 26 189 205 0 0
167 166 253 125 226 156 224 252 0 0
81 114 44 52 240 1 0 0
8 58 158 104 209 54 18 128 0 0

Meanwhile, in the present disclosure, a parity check matrix based on the following conditions may be considered for the parity check matrix corresponding to FIG. 10.

Hereinafter, the submatrix A 1010 and the submatrix B 1020 may be referred to as a first submatrix and a second submatrix, respectively. In addition, hereinafter, a circulant permutation matrix may mean a circulant permutation matrix having a size of *Z* × *Z* determined based on a lifting size Z, and for example, may be configured as in Equation 5 or Equation 6. In addition, in the present disclosure, a circulant matrix may mean a matrix in which circulant permutation matrices are overlapped.

**Condition 1(a)**: When the submatrix B 1020 does not include a circulant matrix in which circulant permutation matrices having a size of *Z* × *Z* are overlapped in the parity check matrix for the QC-LDPC code of FIG. 10, a weight of all column blocks of the submatrix B 1020 is 2 or more, and at least one column block having an odd weight of 3 or more may be included in the submatrix B 1020. In addition, a weight of all columns of a base matrix *M*(**B**) corresponding to the submatrix B 1020 is 2 or more, and at least one column having an odd weight of 3 or more may be included in the base matrix *M*(**B**).

**Condition 1(b)**: When the submatrix B 1020 includes at least one circulant matrix in which circulant permutation matrices having a size of *Z* × *Z* are overlapped in the parity check matrix for the QC-LDPC code of FIG. 10, a weight of all column blocks of the submatrix B 1020 is 2 or more, and at least one column block having an odd weight of 3 or more is included in the submatrix B 1020. In addition, a sum of elements of all columns in a weight matrix *W*(**B**) corresponding to the submatrix B 1020 is 2 or more, and at least one column in which a sum of elements of a column is an odd number of 3 or more is included in the weight matrix *W*(**B**). (A weight of a column block including a circulant matrix in which circulant permutation matrices having a size of *Z* × *Z* are overlapped may be 2, or 3 or more.)

**Condition 2**: All column weights and row weights of the submatrix E 1060 of FIG. 10 are 1. In addition, column weights and row weights of a submatrix of a base matrix and a weight matrix corresponding to the submatrix E 1060 are all 1. Therefore, E 1060 and a submatrix of a base matrix and a weight matrix corresponding to E 1060 are an identity matrix, or a matrix transformed into an identity matrix when an appropriate column permutation or row permutation is applied. (That is, it means that E 1060 is an identity matrix or a matrix having the same equivalent algebraic characteristics.) If the parity check matrix of FIG. 10 is defined as a quasi-cyclic parity check matrix, the submatrix E may be divided into a plurality of identity matrices having a size of *Z* × *Z*.

FIGS. 11A and 11B are embodiments of a parity check matrix satisfying at least one of Condition 1(a), Condition 1(b), or Condition 2. As briefly described above, FIG. 11A is an example of a case where K = 22*Z, M₁ = 4*Z, M₂ = 2*Z in FIG. 10, and FIG. 11B is an example of a case where K = 10*Z, M₁ = 4*Z, M₂ = 7*Z in FIG. 10. Since a code rate of an LDPC code corresponding to the parity check matrices of FIGS. 10, 11A, and 11B is K/N, it is noted that a codeword of a lower code rate can be generated as M₂ decreases. In other words, according to the present disclosure, LDPC encoding and decoding may be performed based on a parity check matrix capable of supporting a lower code rate by further extending columns having a degree of 1 while including FIGS. 11A and 11B.

If a lifting size set is used for LDPC encoding or decoding for a parity check matrix of a quasi-cyclic LDPC code, the number of columns constituting one column block of the parity check matrix is greater than or equal to a minimum value of a lifting size. For example, when values of Table 6 are used as a lifting size, the number of columns constituting one column block of the parity check matrix may be at least 4 or more. Therefore, in a communication system to which the lifting size of Table 6 is substantially applied to a parity check matrix of an LDPC code having a structure as shown in FIGS. 10, 11A, and 11B satisfying at least one of Condition 1(a), Condition 1(b), or Condition 2, it means that the number of columns having a degree of 3 in the submatrix B 1020 is at least 4 or more.

For reference, a core matrix in a parity check matrix, a base matrix, or a weight matrix may be defined in a form satisfying at least one of Condition 1(a), Condition 1(b), or Condition 2 by further adding one or two rows as follows.

Core matrix of *M*(**H_{BG1}**):
0 1 2 3 5 6 9 10 11 12 13 15 16 18 19 20 21 22 23
0 2 3 4 5 7 8 9 11 12 14 15 16 17 1921 222324
0 1 2 4 5 6 7 8 9 10 13 14 15 17 18 19 20 24 25
0 1 3 4 6 7 8 10 11 12 13 14 16 17 18 20 21 22 25
0 1 26

Core matrix of *M*(**H_{BG2}**):
0 1 2 3 6 9 10 11
0 3 4 5 6 7 8 9 11 12
0 1 3 4 8 10 12 13
1 2 4 5 6 7 8 9 10 13
0 1 11 14

However, in the present disclosure, for convenience, a parity check matrix [A(1010) B(1020)] including a submatrix B satisfying only Condition 1(a) or Condition 1(b) is regarded as a core matrix (or a kernel matrix or a precoding matrix). That is, in the present invention, a first part of a base matrix, a first part of a parity check matrix, or a core matrix/part or a kernel matrix/part means a submatrix from which columns corresponding to parity bits having a degree of 1 and rows directly related to the parity bits having a degree of 1 are excluded.

As an embodiment of the present disclosure, a method for improving performance of an LDPC code according to a weight matrix and a method for improving a decoding convergence speed will be described.

First, a core matrix of base matrix 2 *M*(**H_{BG2}**) defined in **[Base Matrix Determination Method]** is composed of 4 rows, which can also be expressed as a weight matrix such as Equation 14. Since an LDPC code defined by base matrix 1 *M*(**H_{BG1}**) or base matrix 2 *M*(**H_{BG2}**) defines one circulant permutation matrix to correspond to one block of a size of *Z* × *Z*, a base matrix and a weight matrix are basically identical. [Equation 14] $W \left({H}_{BG 2}\right) = \left[\begin{matrix}1 & 1 & 1 & 1 & 0 & 0 & 1 & 0 & 0 & 1 & 1 & 1 & 0 & 0 \\ 1 & 0 & 0 & 1 & 1 & 1 & 1 & 1 & 1 & 1 & 0 & 1 & 1 & 0 \\ 1 & 1 & 0 & 1 & 1 & 0 & 0 & 0 & 1 & 0 & 1 & 0 & 1 & 1 \\ 0 & 1 & 1 & 0 & 1 & 1 & 1 & 1 & 1 & 1 & 1 & 0 & 0 & 1\end{matrix}\right]$

An LDPC code designed such that at most one circulant permutation matrix corresponds to one block of a size of *Z* × *Z* in this manner has a structure suitable for performing layered decoding in units of one row block during decoding. That is, it means that a structure of an LDPC code is a structure suitable for performing decoding through a parallel processing processor of a Z-unit. Layered decoding means an operation of sequentially performing decoding for each layer. Therefore, decoding may be sequentially performed in units of one row block, or decoding may be performed for each layer by configuring a plurality of row blocks as one layer. Meanwhile, in the present disclosure, layered decoding is defined as an operation of sequentially performing decoding for each layer, but performing decoding sequentially only means performing decoding for each layer, and does not mean that decoding should be performed in an index order of layers. In addition, a meaning of sequentially performing decoding in the present disclosure may mean sequentially performing decoding according to a layered decoding order or pattern (or sequence) to be described later. In addition, according to a structure of one parity check matrix, some layers may be composed of one row block, and other layers may be composed of a plurality of row blocks.

Since this layered decoding scheme typically performs parallel processing using a layer composed of one row block or a plurality of row blocks as a basic unit, if decoding is performed as many as the total number of row blocks, it may be determined that one iteration decoding is completed. This means that if parallel processing processors are sufficient, a decoding throughput through layered decoding is inversely proportional to the number of row blocks. However, when a parity check matrix having a small number of row blocks is used to support the same code length, it means that a lifting size Z value further increases, so that an amount of parallel processing processors required to simultaneously perform decoding on one row block increases.

For example, the weight matrix *W*(**H_{BG2}**) consists of 4 rows and 14 columns, and a weight of each column is 3, 3, 2, 3, 3, 2, 3, 2, 3, 3, 3, 2, 2, 2. If a weight matrix $W \left({H}_{BG 2}^{′}\right)$ consists of 3 rows and 13 columns and a weight distribution is similar to *W*(**H_{BG2}**), and a weight matrix $W \left({H}_{BG 2}^{"}\right)$ consists of 2 rows and 12 columns and a weight distribution is similar to *W*(**H_{BG2}**), they may be configured as follows.$W \left({H}_{BG 2}^{′}\right) = \left[\begin{matrix}1 & 1 & 1 & 1 & 1 & 1 & 1 & 0 & 1 & 1 & 1 & 1 & 0 \\ 1 & 1 & 0 & 1 & 1 & 1 & 1 & 1 & 1 & 1 & 1 & 1 & 1 \\ 1 & 1 & 1 & 1 & 1 & 0 & 1 & 1 & 1 & 1 & 1 & 0 & 1\end{matrix}\right] ,$$W \left({H}_{BG 2}^{"}\right) = \left[\begin{matrix}2 & 1 & 1 & 2 & 1 & 1 & 2 & 1 & 1 & 2 & 1 & 1 \\ 1 & 2 & 1 & 1 & 2 & 1 & 1 & 1 & 2 & 1 & 2 & 1\end{matrix}\right] .$

If an LDPC code having the same code length can be generated using each of the weight matrices *W*(**H_{BG2})**, $W \left({H}_{BG 2}^{′}\right)$, and $W \left({H}_{BG 2}^{"}\right)$, and a lifting size corresponding to each parity check matrix is *Z₁, Z₂,* and *Z*₃, there is a relationship of ${Z}_{3} = \frac{14}{12} {Z}_{1}$ and ${Z}_{2} = \frac{13}{12} {Z}_{1}$*.* In addition, if each of *Zᵢ* parallel processing processors is allowed in an LDPC decoder, an approximate decoding throughput of $W \left({H}_{BG 2}^{′}\right)$ may be 1.5 times that of *W*(**H_{BG2}**), and that of $W \left({H}_{BG 2}^{"}\right)$ may be 2 times that of *W*(**H_{BG2}**).

As described above, when a sufficient number of parallel processing processors is allowed, if the number of row blocks is reduced, a decoding throughput can be increased in inverse proportion thereto. Therefore, in a case of a system requiring a very high decoding throughput, if more parallel processing processors can be applied, it is advantageous to keep the number of rows of a base matrix or a weight matrix, that is, the number of row blocks of a parity check matrix, small.

Keeping the number of rows of a base matrix or a weight matrix, that is, the number of row blocks of a parity check matrix, small may be good from a standpoint of a decoding throughput, but when the number of row blocks is set too small, severe constraints occur in algebraic characteristics such as a cycle characteristic or a minimum distance characteristic of an LDPC code, thereby causing performance degradation. Therefore, a base matrix or a weight matrix should be determined by simultaneously considering a target throughput and a target error correction capability of a system.

As an embodiment of the present disclosure, a method for improving performance of a code while having a high decoding throughput is proposed. In particular, the present disclosure proposes algebraic characteristics that a core matrix part of a base matrix or a weight matrix closely related to a maximum decoding throughput or a peak data rate of a system should satisfy. Of course, when a parity check matrix does not include a second part of a parity check matrix composed of submatrices C 1040, D 1050, and E 1060 of FIG. 10, a core matrix may be identical to a base matrix or a weight matrix.

One of conditions that a core matrix of a parity check matrix should satisfy is that when two columns having only one non-zero element in a weight matrix corresponding to the core matrix are selected, non-zero elements should not be included in only one row such as $\left[\begin{matrix}0 & 0 \\ ⋮ & ⋮ \\ {w}_{1} & {w}_{2} \\ ⋮ & ⋮ \\ 0 & 0\end{matrix}\right]$ (*w₁, w₂* ≥ 1). As a simple example, $\left[\begin{matrix}{w}_{1} & {w}_{2} \\ 0 & 0\end{matrix}\right] , \left[\begin{matrix}0 & 0 \\ {w}_{1} & {w}_{2}\end{matrix}\right] , \left[\begin{matrix}{w}_{1} & {w}_{2} \\ 0 & 0 \\ 0 & 0\end{matrix}\right] , \left[\begin{matrix}0 & 0 \\ {w}_{1} & {w}_{2} \\ 0 & 0\end{matrix}\right]$, ... correspond thereto. Since a minimum distance of a parity check matrix corresponding to a weight matrix or a core matrix thereof including such a structure is *w₁* + *w₂* or less, an error floor phenomenon is highly likely to occur easily. Therefore, non-zero elements in any two columns having only one non-zero element, such as $\left[\begin{matrix}{w}_{1} & 0 \\ 0 & {w}_{2}\end{matrix}\right] , \left[\begin{matrix}{w}_{1} & 0 \\ 0 & {w}_{2} \\ 0 & 0\end{matrix}\right] , \left[\begin{matrix}{w}_{1} & 0 \\ 0 & 0 \\ 0 & {w}_{2}\end{matrix}\right]$, ... must be located in different rows. This means that even for a base matrix, non-zero elements located in columns having a weight of 1 are all located in different rows. The above details may be defined as Conditions 3(a) and 3(b) below.

**Condition 3(a)**: Columns of a base matrix or a weight matrix corresponding to a core matrix all have a weight of 2 or more, or the number of columns having a weight of 1 is at most one.

**Condition 3(b)**: When the number of columns having a weight of 1 among columns of a base matrix or a weight matrix corresponding to a core matrix is two or more, non-zero elements included in the columns having a weight of 1 are located in different rows.

Condition 3(a) and Condition 3(b) mean that the number of column blocks composed of only one circulant permutation matrix or circulant matrix included in a core matrix is at most one, or when two or more column blocks composed of only one circulant permutation matrix or circulant matrix are included in the core matrix, the circulant permutation matrices or circulant matrices having a size of *Z* × *Z* must be included in different row blocks. In addition, Condition 3(a) and Condition 3(b) are structures for preventing a severe error floor phenomenon, and in order to obtain a better error floor characteristic than this, the following Condition 4 may be further added. As described above, the circulant permutation matrix and the circulant matrix may have a size of *Z* × *Z*.

**Condition 4**: A weight of a column corresponding to an information bit (or an input bit or a code block) in a parity check matrix corresponding to a core matrix is 3 or more.

Condition 4 does not have a case where a weight of a column corresponding to an information bit is 2 like a parity check matrix corresponding to base matrix 2 *M*(**H_{BG2}**) of Equation 14, so that an encoding gain may be reduced, but it can be applied to improve an error floor phenomenon.

Condition 4 means that when a submatrix A 1010 does not include a circulant matrix in which circulant permutation matrices having a size of *Z* × *Z* are overlapped in a parity check matrix for a QC-LDPC code, a weight of all column blocks of the submatrix A 1010 is 3 or more, and a weight of all columns of a base matrix *M*(**A**) corresponding to the submatrix A 1010 is 3 or more. In addition, it means that when a submatrix A 1010 includes at least one circulant matrix in which circulant permutation matrices having a size of *Z* × *Z* are overlapped in a parity check matrix for a QC-LDPC code, a weight of all column blocks of the submatrix A 1010 is 3 or more, and a sum of elements of all columns in a weight matrix *W*(**A**) corresponding to the submatrix A 1010 is 3 or more.

As another condition that a core matrix of a parity check matrix should satisfy, a condition in which an element of 3 or more is not included in a weight matrix corresponding to the core matrix may be considered. In general, when an element which is an integer of 3 or more is included in a core matrix of a weight matrix, it means that three or more circulant permutation matrices correspond to a corresponding location. When three or more circulant permutation matrices constituting a circulant matrix of a size of *Z*×*Z* are overlapped, a maximum length of a cycle is limited to 6 regardless of a Z value. When a cycle length is short, a performance improvement effect by iterative decoding is reduced, so a parity check matrix corresponding to a weight matrix or a core matrix including a value of 3 or more as an element is suitable for use when a code length is short or a code rate is relatively high. Since the present disclosure deals with a design method for an LDPC code supporting various code rates and various code lengths, an element of 3 or more is prevented from being included in a core matrix of a weight matrix. (Of course, it may be included in a part corresponding to a single parity-check extension part.) The above details may be defined as Condition 5 below.

**Condition 5:** A weight matrix corresponding to a core matrix is composed of only 0 and 1, or composed of only 0, 1, and 2.

As another condition that a core matrix should satisfy, a submatrix B 1020 of FIG. 10 corresponding to a first parity vector ***w*₁** should have a full rank to enable efficient encoding, and a restrictive structure as follows is preferable to prevent severe degradation of cycle characteristics.

**Condition 6(a):** When a weight matrix corresponding to a core matrix is composed of 4 rows, a submatrix corresponding to B 1020 in a weight matrix and a base matrix is one of the following:
$\left[\begin{matrix}1 & 1 & 0 & 0 \\ 1 & 1 & 1 & 0 \\ 0 & 0 & 1 & 1 \\ 1 & 0 & 0 & 1\end{matrix}\right] , \left[\begin{matrix}1 & 1 & 0 & 0 \\ 0 & 1 & 1 & 0 \\ 1 & 0 & 1 & 1 \\ 1 & 0 & 0 & 1\end{matrix}\right] , \left[\begin{matrix}1 & 1 & 0 & 0 \\ 1 & 1 & 1 & 0 \\ 0 & 0 & 1 & 1 \\ 1 & 0 & 1 & 1\end{matrix}\right] , \left[\begin{matrix}1 & 1 & 0 & 0 \\ 0 & 1 & 1 & 0 \\ 1 & 1 & 1 & 1 \\ 1 & 0 & 1 & 1\end{matrix}\right] ,$
$\left[\begin{matrix}1 & 1 & 0 & 0 \\ 0 & 1 & 1 & 0 \\ 1 & 1 & 1 & 1 \\ 1 & 0 & 1 & 1\end{matrix}\right] , \left[\begin{matrix}1 & 1 & 0 & 0 \\ 0 & 1 & 1 & 0 \\ 1 & 0 & 1 & 1 \\ 1 & 1 & 1 & 1\end{matrix}\right]$

**Condition 6(b):** When a weight matrix corresponding to a core matrix is composed of 3 rows, a submatrix of a base matrix corresponding to a submatrix B 1020 is $\left[\begin{matrix}1 & 1 & 0 \\ 1 & 1 & 1 \\ 1 & 0 & 1\end{matrix}\right]$, and a weight matrix is one of the following:
$\left[\begin{matrix}1 & 1 & 0 \\ 1 & 1 & 1 \\ 1 & 0 & 1\end{matrix}\right] , \left[\begin{matrix}1 & 1 & 0 \\ 0 & 1 & 1 \\ 2 & 0 & 1\end{matrix}\right] , \left[\begin{matrix}2 & 1 & 0 \\ 0 & 1 & 1 \\ 1 & 0 & 1\end{matrix}\right] , \left[\begin{matrix}1 & 2 & 0 \\ 0 & 1 & 1 \\ 2 & 0 & 1\end{matrix}\right] , \left[\begin{matrix}1 & 2 & 0 \\ 0 & 1 & 2 \\ 2 & 0 & 1\end{matrix}\right] .$

Condition 6(c): When a weight matrix corresponding to a core matrix is composed of 2 rows, a submatrix of a base matrix corresponding to a submatrix B 1020 is $\left[\begin{matrix}1 & 1 \\ 1 & 1\end{matrix}\right]$, and a weight matrix is one of the following: $\left[\begin{matrix}1 & 1 \\ 2 & 1\end{matrix}\right] , \left[\begin{matrix}1 & 2 \\ 2 & 1\end{matrix}\right]$.

For reference, Condition 6(a) illustrates a case where a weight matrix and a base matrix are identical, and Condition 6(b) has the same form as a base matrix only when a weight matrix is $\left[\begin{matrix}1 & 1 & 0 \\ 1 & 1 & 1 \\ 1 & 0 & 1\end{matrix}\right]$. In a base matrix or a weight matrix shown in Condition 6(a), 6(b), and 6(c), 0 means a zero-matrix of a size of *Z* × *Z,* 1 means an identity matrix *I* = (*P*⁰) of a size of *Z* × *Z* or a circulant permutation matrix *P^{v}* (v > 0). In addition, 2 means a circulant matrix (*P^{v₁} + P^{v₂}*) of a size of *Z* × *Z* (*v₁, v₂* ≥ *0, v₁ ≠ v₂*)*.*

In general, an upper bound on a cycle length can be predicted from a base matrix or a weight matrix, but a cycle characteristic of a parity check matrix corresponding to the base matrix or the weight matrix cannot be known. For example, if a submatrix B 1020 is $\left[\begin{matrix}I & I \\ {P}^{{v}_{1}} + {P}^{{v}_{2}} & I\end{matrix}\right]$ or $\left[\begin{matrix}I & I & 0 \\ {P}^{{v}_{1}} & I & I \\ {P}^{{v}_{2}} & 0 & I\end{matrix}\right]$*,* a base matrix or a weight matrix is identical as $\left[\begin{matrix}1 & 1 \\ 2 & 1\end{matrix}\right]$ or $\left[\begin{matrix}1 & 1 & 0 \\ 1 & 1 & 1 \\ 1 & 0 & 1\end{matrix}\right]$ regardless of v1 and v2 values in each case, but cycle characteristics differ significantly. In a case of $\left[\begin{matrix}I & I \\ {P}^{{v}_{1}} + {P}^{{v}_{2}} & I\end{matrix}\right]$, when at least one of v1 and v2 is 0 or ${v}_{1} ≡ {v}_{2} \left(mod\frac{Z}{2}\right)$ (or ${v}_{1} - {v}_{2} ≡ \frac{Z}{2} \left(mod Z\right)$), a large number of 4-cycles are generated, so basically v1 and v2 are set to integers satisfying *v₁, v₂*(mod Z) > *0* , ${v}_{1} ≢ {v}_{2} \left(mod\frac{Z}{2}\right)$ (or ${v}_{1} - {v}_{2} ≢ \frac{Z}{2} \left(mod Z\right)$ ). Similarly, in a case of $\left[\begin{matrix}I & I & 0 \\ {P}^{{v}_{1}} & I & I \\ {P}^{{v}_{2}} & 0 & I\end{matrix}\right]$, when v1 = 0, a large number of 4-cycles are generated, so basically v1 is set to an integer satisfying *v₁*(mod *Z*) ≥ 1, and v2 is set to an integer satisfying *v₂*(mod *Z*) ≥ *0*. The above is only a method for removing 4-cycles, and v1 and v2 values may be restricted in various ways to obtain longer cycles.

If a communication system applies puncturing of information word bits described in [Table 9], a condition that a core matrix should satisfy may be further added as follows.

**Condition 7**: In an LDPC encoding system to which puncturing of information word bits is applied, a submatrix of a core matrix composed of only columns corresponding to the punctured information word bits has at least one row having a row weight of 1.

Since a punctured bit in a receiver is regarded as an erased bit in a reception process, it is determined that a probability that the punctured bit is 0 and a probability that the punctured bit is 1 are identical. This typically means 1 when decoding is performed using an LR value, and means 0 when decoding is performed using an LLR value, but it may be determined in another form based on values used in a decoding process. When LDPC decoding is performed based on a parity check matrix that does not satisfy Condition 7, the punctured information word bits may not be decoded unless a maximum likelihood (ML) decoding or a pseudo ML decoding scheme is used. Since an ML or pseudo ML decoding scheme is not commonly used due to complexity, a parity check matrix may be determined to satisfy Condition 7 to guarantee decoding success.

If an LDPC code is a QC-LDPC code, since the parity check matrix can be expressed based on a lifting size Z value, a base matrix, and/or a weight matrix, and/or an exponent matrix, etc., it may be expressed as Condition 8 below.

**Condition 8**: In a QC-LDPC encoding system to which puncturing of information word bits is applied in units of a lifting size Z or a multiple thereof, a submatrix of a base matrix composed of only a columns corresponding to a submatrix of a core matrix composed of only a*Z (a: an integer of 1 or more) columns corresponding to the punctured a*Z information word bits has at least one row having a weight of 1. In addition, a submatrix of a weight matrix composed of a columns corresponding to the submatrix of the core matrix composed of only a*Z columns has at least one row having a weight of 1 and an element of 1.

For example, in a QC-LDPC encoding system where puncturing of 2Z bits of information word bits is always applied, it means that a = 2 in Condition 8.

Meanwhile, in the present disclosure, at least one of the conditions may be used to configure a parity check matrix. That is, a parity check matrix may be determined to satisfy one of the conditions or determined to satisfy a combination of at least two or more of the conditions.

As an embodiment of the present disclosure, a method for improving an error floor performance of an LDPC code is proposed. In general, an error floor phenomenon of an LDPC code is significantly affected by a cycle characteristic of a Tanner graph. However, since a cycle characteristic on a Tanner graph of a QC LDPC code is determined according to a relationship between a base matrix and an exponent value or a circular shift value of a circulant permutation matrix, not only a location of a circulant permutation matrix constituting a parity check matrix but also a circular shift value should be appropriately selected.

The present disclosure proposes algebraic characteristics that a submatrix B 1020 corresponding to first parity bits (or a first parity bit vector) ***w*₁** *=* (*w_{₁,0}, w_{1,1}, w_{1,2}, ..., w_{1,M₁-1}*) in a first part of a parity check matrix composed of submatrices A 1010 and B 1020 in FIG. 10 should satisfy.

A size of the submatrix B 1020 is *M₁* × *M₁* (or *m_{b1}Z* × *m_{b1}Z*), and the submatrix B 1020 corresponds to a base matrix or a weight matrix having a size of $\left(\frac{{M}_{1}}{Z}\right) \times \left(\frac{{M}_{1}}{Z}\right)$ (or *m_{b1}* × *m_{b1}*). In addition, a first column block of the submatrix B 1020 is composed of three circulant permutation matrices. In this case, the circulant permutation matrix may include an identity matrix. That is, in the present disclosure, a circulant permutation matrix is defined as a matrix in a form in which each element of an identity matrix is circularly shifted by i, and when an i value is 0, a circulant permutation matrix may be an identity matrix. This can be applied throughout the detailed description of the present disclosure. In addition, remaining column blocks of the submatrix B 1020 are composed of two circulant permutation matrices or identity matrices. In the present invention, for convenience, the remaining column blocks express only a case where identity matrices are configured in a dual diagonal structure, but in general, it does not need to be limited thereto.

A specific example of the submatrix B 1020 is shown in Equation 15 below. The submatrix B 1020 may be determined based on at least one of matrices included in Equation 15 below. However, an embodiment of the present disclosure is not limited thereto, and various matrices satisfying the above characteristics (a first column block is composed of three circulant permutation matrices, and remaining column blocks are composed of two circulant permutation matrices or identity matrices) may be considered. [Equation 15] $\begin{matrix}{B}_{1} = \left[\begin{matrix}{P}^{a} & I & O \\ {P}^{b} & I & I \\ {P}^{c} & O & I\end{matrix}\right] , {B}_{2,1} = \left[\begin{matrix}{P}^{a} & I & O & O \\ {P}^{b} & I & I & O \\ O & O & I & I \\ {P}^{c} & O & O & I\end{matrix}\right] , \\ {B}_{2,2} = \left[\begin{matrix}{P}^{a} & I & O & O \\ O & I & I & O \\ {P}^{b} & O & I & I \\ {P}^{c} & O & O & I\end{matrix}\right] , {B}_{3} = \left[\begin{matrix}{P}^{a} & I & O & O & O \\ O & I & I & O & O \\ {P}^{b} & O & I & I & O \\ O & O & O & I & I \\ {P}^{c} & O & O & O & I\end{matrix}\right] \\ M \left({B}_{1}\right) = \left[\begin{matrix}1 & 1 & 0 \\ 1 & 1 & 1 \\ 1 & 0 & 1\end{matrix}\right] , M \left({B}_{2,1}\right) = \left[\begin{matrix}1 & 1 & 0 & 0 \\ 1 & 1 & 1 & 0 \\ 0 & 0 & 1 & 1 \\ 1 & 0 & 0 & 1\end{matrix}\right] , \\ M \left({B}_{2,2}\right) = \left[\begin{matrix}1 & 1 & 0 & 0 \\ 0 & 1 & 1 & 0 \\ 1 & 0 & 1 & 1 \\ 1 & 0 & 0 & 1\end{matrix}\right] , M \left({B}_{3}\right) = \left[\begin{matrix}1 & 1 & 0 & 0 & 0 \\ 0 & 1 & 1 & 0 & 0 \\ 1 & 0 & 1 & 1 & 0 \\ 0 & 0 & 0 & 1 & 1 \\ 1 & 0 & 0 & 0 & 1\end{matrix}\right] , \\ M \left({B}_{4,1}\right) = \left[\begin{matrix}1 & 1 & 0 & 0 & 0 & 0 \\ 0 & 1 & 1 & 0 & 0 & 0 \\ 1 & 0 & 1 & 1 & 0 & 0 \\ 0 & 0 & 0 & 1 & 1 & 0 \\ 0 & 0 & 0 & 0 & 1 & 1 \\ 1 & 0 & 0 & 0 & 0 & 1\end{matrix}\right] , M \left({B}_{4,2}\right) = \left[\begin{matrix}1 & 1 & 0 & 0 & 0 & 0 \\ 0 & 1 & 1 & 0 & 0 & 0 \\ 0 & 0 & 1 & 1 & 0 & 0 \\ 1 & 0 & 0 & 1 & 1 & 0 \\ 0 & 0 & 0 & 0 & 1 & 1 \\ 1 & 0 & 0 & 0 & 0 & 1\end{matrix}\right] \\ V \left({B}_{2,1}\right) = \left[\begin{matrix}a & 0 & - 1 & - 1 \\ b & 0 & 0 & - 1 \\ - 1 & - 1 & 0 & 0 \\ c & - 1 & - 1 & 0\end{matrix}\right] , V \left({B}_{3}\right) = \left[\begin{matrix}a & 0 & - 1 & - 1 & - 1 \\ - 1 & 0 & 0 & - 1 & - 1 \\ b & - 1 & 0 & 0 & - 1 \\ - 1 & - 1 & - 1 & 0 & 0 \\ c & - 1 & - 1 & - 1 & 0\end{matrix}\right]\end{matrix}$

In Equation 15, *B₁* , *B*_{*2*,*1*} , *B*_{*2*,*2*} , and *B₃* have a first column block composed of three different circulant permutation matrices *P^{a}*, *P^{b}*, and *P^{c}* . In addition, Equation 15 illustrates only cases where a *m_{b1}* value is 3, 4, and 5 for convenience, but a submatrix B 1020 may be similarly defined for an integer greater than or equal thereto. In addition, matrices transformable into the submatrix B 1020 of the above form through an appropriate invertible transform process may be regarded as algebraically identical matrices.

The present disclosure proposes a method for improving a cycle characteristic not only for *B₁*, *B*_{*2*,*1*}, *B*_{*2*,*2*}, and *B₃* of Equation 15 but also for a larger submatrix B 1020 of a similar form. For convenience, a method for analyzing a cycle characteristic of a QC LDPC code and detailed descriptions of some algebraic characteristics are omitted in the present disclosure, but reference is made to details of reference document [Myung2005].

### [Myung2005]

S. Myung, K. Yang, and J. Kim, "Quasi-Cyclic LDPC Codes for Fast Encoding," IEEE Transactions on Information Theory, vol. 51, No.8, pp. 2894-2901, Aug. 2005.

Conventionally, when remaining column blocks except for a first column block in a submatrix B 1020 have a dual diagonal structure of a size composed of identity matrices as in Equation 15, at least two values among exponents (or circular shift values) *a*, *b*, and *c* of circulant permutation matrices of a first column block were set to the same value for convenience of encoding. In this case, a *ϕ* matrix of a size of Z × *Z* used in an encoding process becomes an identity matrix *I* or a simple circulant permutation matrix *P^{x},* and an inverse matrix *ϕ⁻¹* of *ϕ* is simplified like an identity matrix *I* or *P^{-x} ,* thereby rendering an encoding process concise. (Refer to [Myung2005] for a detailed encoding process of a QC LDPC code) As a specific example, when setting *a = c*, *ϕ* becomes *P^{b},* and *ϕ*⁻¹ becomes *P^{-b} ,* so that efficient encoding can be performed. Similarly, when setting *a = b, ϕ* becomes *P^{c}*, and *ϕ*⁻¹ becomes *P^{-c}*, so that efficient encoding can be performed.

However, when *a = c* ≠ *b,* due to a structure shown in Equation 16 below, Z cycles having a length of *2m_{b1}* always exist on a Tanner graph. In other words, if a value of *m_{b1}* is fixed, a cycle having a length of *2m_{b1}* always exists regardless of a lifting size Z and an exponent *a*(*= c*) value. (Refer to [Myung2005] for detailed cycle characteristics of a QC LDPC code)

[Equation 16] $\left[\begin{matrix}{P}^{a} & I & ∗ & ∗ & ∗ \\ ∗ & I & I & ∗ & ∗ \\ ∗ & ∗ & ⋱ & ⋱ & ∗ \\ ∗ & ∗ & ∗ & I & I \\ {P}^{a} & ∗ & ∗ & ∗ & I\end{matrix}\right]$

Not only that, but when *a* = *b*, due to a structure such as Equation 17 below, a cycle shorter than *2m_{b1}* always exits regardless of a lifting size Z and an exponent *a*(*= b*) value. [Equation 17] $\left[\begin{matrix}{P}^{a} & I & ∗ \\ {P}^{b} & I & ∗ \\ ∗ & ∗ & ∗\end{matrix}\right] , \left[\begin{matrix}{P}^{a} & I & ∗ & ∗ \\ ∗ & I & I & ∗ \\ {P}^{b} & ∗ & I & ∗ \\ ∗ & ∗ & ∗ & ∗\end{matrix}\right]$

If *m_{b1}* value is appropriately large, cycle characteristics of a Tanner graph corresponding to structures such as Equation 16 and Equation 17 may not significantly affect performance of an LDPC code. However, when *m_{b1}* value is relatively small, a BLER may increase due to an error floor phenomenon, and this becomes a problem that cannot be ignored as a target BLER of a system decreases.

To solve this problem, the present invention proposes a method for improving a cycle characteristic by limiting exponents (or circular shift values) *a*, *b*, and *c* of circulant permutation matrices constituting a first column block of a submatrix B 1020 having a structure as in Equation 15 to satisfy a specific algebraic condition. In addition, it is described that the method increases an operation complexity related to *ϕ*⁻¹ matrix required in an LDPC encoding process to a reasonable level while improving a cycle characteristic.

When a lifting size *Z* for a parity check matrix of a QC LDPC code is let be *Z* = *p* · *2^{L}* (p is an odd number, *L* is an integer of 0 or more), exponents (or circular shift values) *a, b*, and *c* of circulant permutation matrices constituting a first column block of a submatrix B 1020 are different integers, and satisfy at least a part or all of the following conditions:

**Exponent Condition 1a:** At least one of differences between two exponents (circular shift values) has a greatest common divisor with a lifting size *Z of 1* or a smallest number among divisors of *Z* greater than 1. (That is, it is relatively prime to *Z* or has a minimum divisor of *Z* greater than 1 as a greatest common divisor.)

**Exponent Condition 1b:** Two of differences between two exponents have a common divisor with a lifting size *Z* of 1 or a smallest number among divisors of *Z* greater than 1.

**Exponent Condition 2a:** At least one of differences between two exponents is $\frac{Z}{{2}^{i}} \left(0\leq i\leq L\right)$.

**Exponent Condition 2b:** At least one of differences between two exponents is $\frac{Z}{{2}^{i}} \left(1\leq i<L\right)$. when *p* is 1 and *L >* 1, and is $\frac{Z}{{2}^{i}} \left(1\leq i\leq L\right)$ when *p* is an odd number of 3 or more and *L >* 0.

For reference, a difference between exponents used in the exponent conditions means |*a - b*|, |*b* -*c*|, |*c - a*|, or the like.

According to Exponent Condition 1a, when a difference between two exponents is relatively prime to *Z,* a length of a cycle determined by a circulant permutation matrix related to the two exponents is maximized. For example, when a value of |*a - b*| is relatively prime to *Z,* a length of a cycle on a Tanner graph determined by $\left[\begin{matrix}{P}^{a} & I & ∗ \\ {P}^{b} & I & ∗ \\ ∗ & ∗ & ∗\end{matrix}\right]$ of Equation 17 becomes *4Z.* If a greatest common divisor of |*a - b*| and *Z* is *D,* a cycle length becomes *4Z*/*D.* As a result, as *Z* value increases, a length of a cycle also increases together.

As another example, when a value of |*a - c*| is relatively prime to *Z,* a cycle length determined by a structure of Equation 16 becomes *2m_{b1}Z.* If a greatest common divisor of |*a - c*| and *Z* is *D,* a cycle length becomes *2m_{b1}Z*/*D.* As a result, a cycle length is not fixed regardless of a *Z* value, but it can be seen that a cycle length also increases as a *Z* value increases. Considering only a cycle characteristic, it is preferable that a difference between exponents is relatively prime to *Z,* but depending on situations, an exponent may be selected such that a greatest common divisor D is small (for example, to be a minimum divisor of *Z* greater than 1) by another condition. For example, when a characteristic that a difference between exponents is relatively prime to Z cannot be satisfied, it is preferable that an exponent having a small greatest common divisor *D* is selected.

Exponent Condition 1b is a condition for further improving a cycle characteristic by limiting an exponent condition more than Exponent Condition 1a. For example, when values of |*a - b*| and |*b* - *c*| are relatively prime to *Z,* a cycle characteristic related to exponents a and b is improved like $\left[\begin{matrix}{P}^{a} & I & ∗ \\ {P}^{b} & I & ∗ \\ ∗ & ∗ & ∗\end{matrix}\right]$*,* and a cycle characteristic related to exponents b and c is likewise improved like $\left[\begin{matrix}∗ & ∗ & ∗ \\ {P}^{b} & ∗ & I \\ {P}^{c} & ∗ & I\end{matrix}\right]$*.* (The same holds true for Equation 15 and another form of a submatrix B extended based on Equation 15.)

In Equation 15 and another form of a submatrix B extended based on Equation 15, when *a, b*, and *c* are all different, *ϕ* matrix required in an encoding process is defined as *ϕ* = *P^{a} + P^{b} + P^{c}.* Such *ϕ* matrix is not easy to obtain *ϕ*⁻¹, but a density of weights of *ϕ*⁻¹ matrix also generally has a high-density characteristic rather than a low-density characteristic. That is, there is a characteristic that *ϕ* matrix having a low-density characteristic does not guarantee a low-density characteristic of *ϕ*⁻¹ matrix. Since such a high-density characteristic of *ϕ*⁻¹ matrix is a cause of increasing encoding complexity, a density of *ϕ*⁻¹ matrix is preferably as low as possible, and *ϕ*⁻¹ matrix preferably has a simple structure.

Exponent Condition 2a and 2b are conditions for simplifying *ϕ*⁻¹ matrix as much as possible for efficient LDPC encoding. For example, when letting $\left|a-c\right| = \frac{Z}{{2}^{i}}$ in Exponent Condition 2a,
it becomes *ϕ*^{2*ⁱ*} = *P^{2ⁱₐ}* + *P^{2ⁱb}* + *P^{2ⁱc}* = *P^{2ⁱa}* (*I* + *P^{2^{í}(c-a)}*) + *P^{2ⁱb}* = *P^{2^{i·}b},*
thereby becoming *ϕ*⁻¹ = *P^{-2ⁱb}* · *ϕ*^{2*ⁱ*-1}. Here, since *ϕ^{2ⁱ-1}* is as
   $\begin{matrix}{ϕ}^{{2}^{i} - 1} = {ϕ}^{{2}^{i - 1}} ⋅ {ϕ}^{{2}^{i - 2}} ⋅ ⋯ ⋅ {ϕ}^{2} ⋅ ϕ = \left({P}^{{2}^{\left(i-1\right)} a}+{P}^{{2}^{\left(i-1\right)} b}+{P}^{{2}^{\left(i-1\right)} c}\right) \left({P}^{{2}^{\left(i-2\right)} a}+{P}^{{2}^{\left(i-2\right)} b}+{P}^{{2}^{\left(i-2\right)} c}\right) ⋅ ⋯ ⋅ \\ \left({P}^{2 a}+{P}^{2 b}+{P}^{2 c}\right) ⋅ \left({P}^{a}+{P}^{b}+{P}^{c}\right) ,\end{matrix}$
*ϕ⁻¹* can be determined relatively simply, but it can be seen that an operation complexity by *ϕ⁻¹* increases as *i* value increases. Therefore, a value of *i* may be appropriately limited and used according to a complexity allowable in a system. Typically, a value of i is preferably used in a range of *0* ≤ *i* ≤ *4*, but a larger value may be used according to an allowable range of a system.

For reference, an operation *P^{x} . v^{T}* of multiplying a circulant permutation matrix *P^{x}* of a size of *Z* × Z for an arbitrary bit string *v^{T}* having a length of Z is identical to a circular shift of a bit string *v^{T}* by *x* bits rather than an actual matrix multiplication operation. That is, since it can be implemented as a bit shift operation rather than a matrix multiplication in reality, the operation means an operation or action having a very low complexity. Not only that, but also in a process of operating *ϕ*^{2*ⁱ*-1} · *v^{T},* instead of developing and operating each term of *ϕ^{2ⁱ-1},* an operation complexity can be minimized through a step-by-step calculation such as *ϕ^{2ⁱ-1·} v^{T} = ϕ^{2ⁱ-1}* (... (*ϕ²*(*ϕ . v^{T}*))) *.* As a simple example, an operation can be performed in the following manner:
$\begin{matrix}\left({P}^{2 a}+{P}^{2 b}+{P}^{2 c}\right) ⋅ \left({P}^{a}+{P}^{b}+{P}^{c}\right) ⋅ {{v}_{¯}}^{T} = {P}^{3 a} \left(I+{P}^{2 \left(b-a\right)}+{P}^{2 \left(c-a\right)}\right) ⋅ \left(I+{P}^{b - a}+{P}^{c - a}\right) ⋅ {{v}_{¯}}^{T} = \\ {P}^{3 a} \left(I+{P}^{2 \left(b-a\right)}+{P}^{2 \left(c-a\right)}\right) ⋅ \left({{v}_{¯}}^{T}+{P}^{b - a}⋅{{v}_{¯}}^{T}+{P}^{c - a}⋅{{v}_{¯}}^{T}\right) = {P}^{3 a} \left(I+{P}^{2 \left(b-a\right)}+{P}^{2 \left(c-a\right)}\right) ⋅ {{v}_{¯}}_{1}^{T} = \\ {P}^{3 a} \left({{v}_{¯}}_{1}^{T}+{P}^{2 \left(b-a\right)}⋅{{v}_{¯}}_{1}^{T}+{P}^{2 \left(c-a\right)}⋅{{v}_{¯}}_{1}^{T}\right) = {P}^{3 a} ⋅ {{v}_{¯}}_{2}^{T} .\end{matrix}$

In Exponent Condition 2a, even when $\left|a-b\right| = \frac{Z}{{2}^{i}}$ or $\left|b-c\right| = \frac{Z}{{2}^{i}}$, *ϕ⁻¹* can be determined in a similar manner to perform encoding. However, when all differences between two exponents are of a form of $\frac{Z}{{2}^{i}}$, a cycle characteristic is highly likely to deteriorate. Therefore, for efficient encoding and a good cycle characteristic, a method may be considered in which at least one of differences between two exponents satisfies a characteristic of being $\frac{Z}{{2}^{i}}$( *0* ≤ *i* ≤ *L* ), and remaining exponent differences satisfy Exponent Condition 1a or Exponent Condition 1b. In addition, if there is a case where a difference between two exponents is $\frac{Z}{{2}^{i}}$ and satisfies at least one of Exponent Condition 1a or Exponent Condition 1b, the exponents may be selected.

Exponent Condition 2b is a condition for further improving a cycle characteristic while enabling efficient encoding by limiting an exponent condition more than Exponent Condition 2a. When Exponent Condition 2b is satisfied, encoding complexity slightly increases compared to an existing 5G LDPC code, but there is an advantage that a cycle characteristic is improved. Of course, if there is no case satisfying Exponent Condition 2b, exponents may be determined in consideration of Exponent Condition 2a. For reference, except for a case satisfying $\frac{Z}{{2}^{i}} = 1$ in Exponent Condition 2a, it can be seen that a difference between two exponents is not always relatively prime to *Z.* That is, *Z* and a difference between two exponents have a common divisor greater than 1. A fact that there is *i* satisfying $\frac{Z}{{2}^{i}} = 1$ means Z = *2^{L},* which satisfies Exponent Condition 2b so that a difference between *Z* and two exponents is not relatively prime and has 2^{*L*-*i*} as a common divisor by the condition of *1* ≤ *i < L.*

As an embodiment of the present disclosure, a more specific example of configuring a submatrix B 1020 of FIG. 10 using the exponent conditions will be described.

First, as shown in Table 3 to Table 8 like 5G, a lifting size set is defined, and a communication system or a broadcasting system to which only a lifting size included in a lifting size set can be applied is considered. In addition, a separate parity check matrix or exponent matrix may be defined for each lifting size set. That is, in a case of Table 3 to Table 8, a parity check matrix, an exponent matrix, or the like may be defined for each of a total of 8 set indexes.

In Equation 15 and another form of a submatrix B extended based on Equation 15, let *a*, *b*, and *c* be determined as follows. In general, since values of exponents *a*, *b*, and *c* for a submatrix B of a parity check matrix corresponding to *i_{LS} = k* (*k* = *0, 1, 2, ...*) may be all different, they are expressed as *aₖ, bₖ,* and *cₖ* for convenience.

### Exponent Selection Example 1 (i_{LS} = k)

- *aₖ* is an arbitrary integer
- *bₖ* is *bₖ* = *aₖ* + *sₖ*, where *sₖ* is an integer satisfying gcd(*sₖ*,*Zₖ*) = *1,* that is, among exponents corresponding to a submatrix B, *aₖ* and *bₖ* are integers satisfying gcd(|*aₖ* - *bₖ*|*,Zₖ*) =*1*. Here, gcd(*x,y*) means a greatest common divisor of *x* and *y*, and *Zₖ* means an arbitrary lifting size belonging to a lifting size set corresponding to *i_{LS} = k.*
- *cₖ* is *cₖ = aₖ + tₖ,* where *tₖ* is one of lifting sizes smaller than a maximum lifting size *Z*_{*k,*max} among lifting size values belonging to a lifting size set corresponding to *i_{LS} = k.*

When a difference between each exponent is obtained for a submatrix B determined through Exponent Selection Example 1, since |*aₖ - bₖ*| = |*sₖ*| to an arbitrary lifting size *Zₖ* so that Exponent Condition 1a is satisfied. In |*bₖ* - *cₖ*| = |*sₖ-tₖ*|*, tₖ* is one of *Zₖ* values and respective *Zₖ* values are in a multiple relationship (a multiple relationship of 2*ⁱ*), so according to a definition of *sₖ,* 1 = gcd(*sₖ*,*Zₖ*) = gcd(*sₖ* - *Zₖ,Zₖ)* = gcd(*sₖ* - *tₖ*,*Zₖ*) holds, thereby satisfying Exponent Condition 1b. However, since $\left|{c}_{k}-{a}_{k}\right| = {t}_{k} = \frac{{Z}_{max}}{{2}^{i}} = p ⋅ {2}^{\left(L-i\right)}$, whether Exponent Condition 2a and Exponent Condition 2b are satisfied varies depending on a lifting size *Zₖ*. For example, when *Zₖ* > *tₖ*, Exponent Condition 2a and Exponent Condition 2b are always satisfied, but when *Zₖ* ≤ *tₖ*, circulant permutation matrices *P^{aₖ}* and *P^{cₖ}* of a size of *Zₖ* × *Zₖ* become virtually identical because *cₖ* ≡ *aₖ + tₖ* ≡ *aₖ* (mod *Zₖ*) holds, so that Exponent Condition 2a and Exponent Condition 2b may not be satisfied. In other words, when *Zₖ* ≤ *tₖ*, a structure becomes as in Equation 16, which means that a cycle characteristic is not improved. In conclusion, to improve a cycle characteristic for lifting sizes of various lengths, *tₖ* value is preferably determined to be as small a value as possible.

However, when a lifting size *Zₖ* value for LDPC encoding is relatively larger than *tₖ* value (that is, when *i* value is large in $\frac{{Z}_{k}}{{t}_{k}} = {2}^{i}$ ), an encoding complexity is highly likely to increase significantly due to operations related to a *ϕ*⁻¹matrix. Therefore, *tₖ* value may be selected in consideration of a cycle characteristic and an encoding complexity. When only a cycle characteristic improvement is considered, a minimum lifting size among lifting size values belonging to a lifting size set corresponding to *i_{LS} = k* may be selected as *tₖ*. In addition, when a limited encoding complexity increase is considered, a lifting size larger than a minimum lifting size and smaller than a maximum lifting size among lifting size values belonging to a lifting size set corresponding to *i_{LS} = k* may be selected as *tₖ*. Typically, when lifting sizes included in a lifting size set are let be *Z₁ = p · 2^{j₁}, Z₂* = *p* · *2^{j₂},* ..., *Z*ₘₐₓ = *p* · 2^{*j*ₘₐₓ} (*j₁ < j₂ <* ... < *j*ₘₐₓ), *tₖ* value may be set to *tₖ = p · 2ⁱ* (*j₁* < *i* < *j*ₘₐₓ). In general, if values of *j₁, j₂,* ..., *j*ₘₐₓ are not continuous integer values, *i* value may be selected as an integer other than *j₂, j₃,....* In addition to the above embodiment, for other embodiments, *tₖ* may be selected through various conditions as described above, but detailed descriptions may be omitted for convenience of description.

As a specific example of an exponent selection method, an example of exponent selection when setting *a* = *1,* that is, *P^{a} = P¹,* for convenience, is shown below.

### Exponent Selection Example 2 (i_{LS} = k)

- ${a}_{k} = 1 \left(\to {P}^{a}=P\right)$
- *bₖ* = *0* (if setting *sₖ* = -1, gcd(|*aₖ* - *bₖ*|*,Zₖ*) = 1, *P^{b} = I*)
- *cₖ* is *cₖ = 1 + tₖ* (or *cₖ = 1 - tₖ*), where *tₖ* is one of lifting sizes smaller than a maximum lifting size *Z*_{*k*,max} among lifting size values belonging to a lifting size set corresponding to *i_{LS} = k.*

When a difference between each exponent is obtained for a submatrix B determined through Exponent Selection Example 2, since |*aₖ* - *bₖ*| = 1, gcd(|*aₖ* - *bₖ*|*,Zₖ*) = 1 always holds for an arbitrary lifting size *Zₖ*, and since |*bₖ - cₖ*| *= 1 + tₖ,* 1 = gcd(1,*Zₖ*) = gcd(1 + *Zₖ,Zₖ*) = gcd(*1* + *tₖ*,*Zₖ*) holds, thereby satisfying Exponent Condition 1a and Exponent Condition 1b. Like Exponent Selection Example 2, when *bₖ* = 0, Exponent Condition 1a and Exponent Condition 1b can be satisfied even for an arbitrary *aₖ* satisfying gcd(*aₖ*,*Zₖ*) = 1 in general as well as *aₖ =* 1. That is, for an integer *a* which is gcd(*a*, *Zₖ*) = 1, a submatrix B set as *aₖ = a, bₖ = 0, cₖ = a + tₖ* satisfies Exponent Condition 1a and Exponent Condition 1b. In addition, since $\left|{c}_{k}-{a}_{k}\right| = {t}_{k} = \frac{{Z}_{max}}{{2}^{i}} = p ⋅ {2}^{\left(L-i\right)}$ *,* whether Exponent Condition 2a and Exponent Condition 2b are satisfied varies depending on a lifting size *Zₖ*. *tₖ* (or cₖ) may be selected based on various conditions in consideration of a cycle characteristic improvement and an encoding complexity as described above.

A specific embodiment related to Exponent Selection Example 2 will be described below.

When a lifting size set as in Table 8 is given, a specific example of a submatrix B is shown in Equation 18 below. Equation 18 illustrates an example of a submatrix B in a parity check matrix for *i_{LS} =* 0 of Table 8. (This is an example of setting (*P^{a}, P^{b}, P^{c}*) of matrices of Equation 15.) The submatrix B may be determined based on at least one of matrices included in Equation 18 below. However, an embodiment of the present disclosure is not limited thereto. That is, the following embodiment describes a case where 32 is selected among lifting sizes as an example, but any one of lifting sizes included in Table 8 may be selected. Therefore, various matrices may be considered based on c determined according to a lifting size. [Equation 18] $\begin{matrix}- a = 1 , b = 0 , c = 1 + 32 = 33 \left(32 selected among lifting sizes\right) \\ {B}_{1} = \left[\begin{matrix}{P}^{1} & I & O \\ I & I & I \\ {P}^{33} & O & I\end{matrix}\right] , {B}_{2,1} = \left[\begin{matrix}{P}^{1} & I & O & O \\ I & I & I & O \\ O & O & I & I \\ {P}^{33} & O & O & I\end{matrix}\right] , {B}_{2,2} = \left[\begin{matrix}{P}^{1} & I & O & O \\ O & I & I & O \\ I & O & I & I \\ {P}^{33} & O & O & I\end{matrix}\right] , {B}_{3} = \left[\begin{matrix}{P}^{1} & I & O & O & O \\ O & I & I & O & O \\ I & O & I & I & O \\ O & O & O & I & I \\ {P}^{33} & O & O & O & I\end{matrix}\right] , \\ {B}_{4,1} = \left[\begin{matrix}{P}^{1} & I & O & O & O & O \\ O & I & I & O & O & O \\ O & O & I & I & O & O \\ I & O & O & I & I & O \\ O & O & O & O & I & I \\ {P}^{33} & O & O & O & O & I\end{matrix}\right] , \\ {B}_{4,2} = \left[\begin{matrix}{P}^{1} & I & O & O & O & O \\ O & I & I & O & O & O \\ I & O & I & I & O & O \\ O & O & O & I & I & O \\ O & O & O & O & I & I \\ {P}^{33} & O & O & O & O & I\end{matrix}\right] .\end{matrix}$

In a case of Equation 18, when a lifting size *Z* value is selected to be 32 or less such as 8, 16, and 32 in a 0-th lifting size set, *P³³ = P¹* holds from *33* ≡ *1* (mod *Z*), so that *ϕ* matrix virtually becomes an identity matrix *I* and *ϕ⁻¹* also becomes an identity matrix *I,* which renders an encoding process concise, whereas there is a disadvantage that a cycle characteristic is not improved. When considering a limited encoding complexity increase while improving a cycle characteristic, an exponent pair (*a, b, c*) corresponding to (*P^{a}, P^{b}, P^{c}*) in a submatrix having a structure of Equation 18 may have combinations as follows.

**[Table 10]**

| ***Set index (**i_{LS}**)*** | (***a, b***) | ***c*** |
|---|---|---|
| 0 | | 17 or 33 or 65 (or 129) |
| 1 | | 25 or 49 or 97 (or 193) |
| 2 | | 21 or 41 or 81 (or 161) |
| 3 | (*a, b*) = (*1,0*) | 15 or 29 or 57 (or 113) |
| 4 | | 19 or 37 or 73 (or 145) |
| 5 | | 23 or 45 or 89 (or 177) |
| 6 | | 27 or 53 (or 105) |
| 7 | | 31 or 61 (or 121) |

Table 10 is merely an example, and in general, *c = t +* 1 may be determined by selecting one *t* among lifting size values smaller than Zmax.

As an embodiment of the present disclosure, the *c* value may be determined based on a maximum lifting size among lifting sizes smaller than a specific reference value. Specifically, if a reference value is set to 96, numbers less than or equal to 96 in each lifting size set are 64, 96, 80, 56, 72, 88, 52, and 60 in order in a system using a lifting size set such as [Table 3] to [Table 8]. Therefore, if *c* value corresponding to a parity check matrix defined according to each lifting size set index is determined based on a given reference value in each lifting size set, the *c* value may be defined as 65, 97, 81, 57, 73, 89, 53, and 61 in order according to each lifting size set index. If a reference value is set to 48, in a similar manner, the *c* value may be defined as 33, 49, 41, 29, 37, 45, 27, and 31 in order according to each lifting size set index. For reference, when using a lifting size set excluding numbers in parentheses in [Table 3] or [Table 8], if an i-th largest lifting size among lifting sizes included in a lifting size set with *i_{LS} =* 1 is determined as a reference value, a *c* value corresponding to a parity check matrix defined according to each lifting size set index has a characteristic of being determined as an integer obtained by adding 1 to an i-th largest lifting size in each set.

In addition, for uniformity of an encoding method, an i-th largest lifting size in each lifting size set may be selected (i = 2, 3, 4, ...). For example, in a system using a lifting size set such as [Table 3], a 5th largest number in each lifting size set is 16, 24, 20, 14, 18, 22, 13, and 15. Therefore, if value corresponding to a parity check matrix defined according to each lifting size set index is determined based on a 5th largest number in each lifting size set (i=5), the value may be defined as 17, 25, 21, 15, 19, 23, 14, and 16 in order according to each lifting size set index. In a similar manner, if value corresponding to a parity check matrix defined according to a lifting size set index is determined based on a 4th largest number in each lifting size set (i=4), *c* value may be defined as 33, 49, 41, 29, 37, 45, 27, and 31 in order according to a lifting size set index. In a similar manner, if *c* value corresponding to a parity check matrix defined according to a lifting size set index is determined based on a 3rd largest number in each lifting size set (i=3), *c* value may be defined as 65, 97, 81, 57, 73, 89, 53, and 61 in order according to a lifting size set index. In a similar manner, if *c* value corresponding to a parity check matrix defined according to a lifting size set index is determined based on a 2nd largest number in each lifting size set (i=2), *c* value may be defined as 129, 193, 161, 113, 145, 177, 105, and 121 in order according to a lifting size set index.

In a system using a lifting size set of values excluding values in parentheses in [Table 8], a 5th largest number in each lifting size set is 32, 48, 40, 28, 36, 44, 26, and 30. Therefore, if *c* value corresponding to a parity check matrix defined according to each lifting size set index is determined based on a 5th largest number in each lifting size set (i=5), the *c* value may be defined as 33, 49, 41, 29, 37, 45, 27, and 31 in order according to the lifting size set index. In a similar manner, if *c* value corresponding to a parity check matrix defined according to a lifting size set index is determined based on a 4th largest number in each lifting size set (i=4), *c* value may be defined as 65, 97, 81, 57, 73, 89, 53, and 61 in order according to a lifting size set index. In a similar manner, if *c* value corresponding to a parity check matrix defined according to a lifting size set index is determined based on a 3rd largest number in each lifting size set (i=3), *c* value may be defined as 129, 193, 161, 113, 145, 177, 105, and 121 in order according to a lifting size set index. In a similar manner, if *c* value corresponding to a parity check matrix defined according to a lifting size set index is determined based on a 2nd largest number in each lifting size set (i=2), *c* value may be defined as 257, 385, 321, 225, 289, 353, 209, and 241 in order according to a lifting size set index.

In addition, according to a pair (*P^{a},P^{b},P^{c}*) *=* (*P,I,P^{c}*) shown in Equation 18, Table 10, and embodiments corresponding thereto, *ϕ* matrix becomes *ϕ* = *P + I + P^{c}.* When a lifting size *Zₖ* value is less than or equal to (*c* - *1*) according to Exponent Selection Example 2, *c* ≡ 1 (mod *Zₖ*) holds, so that eventually *P^{a} = P =P^{c}* holds. Therefore, although a cycle characteristic is not improved, by using a fact that *ϕ = I + P + P^{c} = I = ϕ⁻¹* holds, efficient LDPC encoding is possible. When a lifting size *Zₖ* value is greater than (*c* - *1*), there exists i satisfying (*P*)^{2*ⁱ*} = (*P^{c}*)^{2*ⁱ*} , so that *ϕ^{2ⁱ} = I* holds (*i* ≥ 1), and therefore, although encoding complexity increases by using a property of being *ϕ*⁻¹ = *ϕ^{ⁱ-1}* = *ϕ^{2ⁱ-1}* . *ϕ^{2ⁱ-2}* · ··· · *ϕ*² . *ϕ*, efficient LDPC encoding is possible. Here, a length of a cycle determined by *P^{a}* and *P^{c}* increases from the existing *2m_{b1}* to *2m_{b1} · Z*/*D = 2m_{b1} · 2ⁱ = 2ⁱ⁺¹ · m_{b1}.* Since a length of a cycle determined by *P^{a}* and *P^{b}* or *P^{b}* and *P^{c}* satisfies Exponent Condition 1a and Exponent Condition 1b, it increases significantly in proportion to Z value.

As a specific example of an exponent selection method, an example of exponent selection when setting *a* = 0, that is, *P^{a} = I,* for convenience, is shown below.

### Exponent Selection Example 3 (i_{LS} = k)

- ${a}_{k} = 0 \left(\to {P}^{a}=I\right)$
- *bₖ* = *1* (if setting *sₖ* = *1*, gcd(|*aₖ* - *bₖ*|*,Zₖ*) = *1,P^{b} = P* )
- *cₖ* is *cₖ = tₖ* (or *cₖ = -tₖ*)*,* where *tₖ* is one of lifting sizes smaller than a maximum lifting size *Z*_{*k,*max} among lifting size values belonging to a lifting size set corresponding to *i_{LS} = k.*

When a difference between each exponent is obtained for a submatrix B determined through Exponent Selection Example 3, since l*aₖ* - *bₖ*| = *1,* gcd(|*aₖ* - *bₖ*|*,Zₖ*) = *1* always holds for an arbitrary lifting size *Zₖ*, and since |*bₖ* - *cₖ*| *= tₖ - 1,* 1 = gcd(*1,Zₖ*) = gcd(*Zₖ* - *1,Zₖ*) = gcd(*tₖ*- *1, Zₖ*) holds, thereby satisfying Exponent Condition 1a and Exponent Condition 1b. Like Exponent Selection Example 3, when *aₖ =* 0, Exponent Condition 1a and Exponent Condition 1b can be satisfied even for an arbitrary *bₖ* satisfying gcd(*bₖ*,*Zₖ*) = *1* in general as well as *bₖ = 1.* That is, for an integer *b* which is gcd(*b,Zₖ*) = 1, a submatrix B set as *aₖ = 0, bₖ* = *b, cₖ = tₖ* satisfies Exponent Condition 1a and Exponent Condition 1b. In addition, since $\left|{c}_{k}-{a}_{k}\right| = {t}_{k} = \frac{{Z}_{max}}{{2}^{i}} = p ⋅ {2}^{\left(L-i\right)}$, whether Exponent Condition 2a and Exponent Condition 2b are satisfied varies depending on a lifting size *Zₖ*. *tₖ* (or *cₖ*) may be selected based on various conditions in consideration of a cycle characteristic improvement and an encoding complexity as described above.

A specific embodiment related to Exponent Selection Example 3 will be described below.

When a lifting size set as in Table 8 is given, a specific example of a submatrix B is shown in Equation 19 below. Equation 19 illustrates an example of a submatrix B in a parity check matrix for *i_{LS} = 0* of Table 8. (This is an example of setting (*P^{a}, P^{b}, P^{c}*) of matrices of Equation 15.) The submatrix B may be determined based on at least one of matrices included in Equation 19 below. However, an embodiment of the present disclosure is not limited thereto. That is, the following embodiment describes a case where 32 is selected among lifting sizes as an example, but any one of lifting sizes included in Table 8 may be selected. Therefore, various matrices may be considered based on c determined according to a lifting size. [Equation 19] $\begin{matrix}- a = 0 , b = 1 , c = 32 \left(32 selected among lifting sizes\right) \\ {B}_{1} = \left[\begin{matrix}I & I & O \\ P & I & I \\ {P}^{32} & O & I\end{matrix}\right] , {B}_{2,1} = \left[\begin{matrix}I & I & O & O \\ P & I & I & O \\ O & O & I & I \\ {P}^{32} & O & O & I\end{matrix}\right] , {B}_{2,2} = \left[\begin{matrix}I & I & O & O \\ O & I & I & O \\ P & O & I & I \\ {P}^{32} & O & O & I\end{matrix}\right] , {B}_{3} = \left[\begin{matrix}I & I & O & O & O \\ O & I & I & O & O \\ P & O & I & I & O \\ O & O & O & I & I \\ {P}^{32} & O & O & O & I\end{matrix}\right] , \\ {B}_{4,1} = \left[\begin{matrix}I & I & O & O & O & O \\ O & I & I & O & O & O \\ O & O & I & I & O & O \\ P & O & O & I & I & O \\ O & O & O & O & I & I \\ {P}^{32} & O & O & O & O & I\end{matrix}\right] , \\ {B}_{4,1} = \left[\begin{matrix}I & I & O & O & O & O \\ O & I & I & O & O & O \\ O & O & I & I & O & O \\ P & O & O & I & I & O \\ O & O & O & O & I & I \\ {P}^{32} & O & O & O & O & I\end{matrix}\right] , \\ {B}_{4,2} = \left[\begin{matrix}I & I & O & O & O & O \\ O & I & I & O & O & O \\ P & O & I & I & O & O \\ O & O & O & I & I & O \\ O & O & O & O & I & I \\ {P}^{32} & O & O & O & O & I\end{matrix}\right] .\end{matrix}$

In a case of Equation 19, when a lifting size *Z* value is selected to be 32 or less such as 8, 16, and 32 in a 0-th lifting size set, *P³² = p⁰=I* holds from 32 ≡ *0* (mod *Z*), so that *ϕ* matrix virtually becomes a circular permutation matrix *P* and *ϕ⁻¹* also becomes a circular permutation matrix *P*⁻¹, which renders an encoding process concise, whereas there is a disadvantage that a cycle characteristic is not improved. When considering a limited encoding complexity increase while improving a cycle characteristic, an exponent pair (*a, b, c*) corresponding to (*P^{a}, P^{b}, P^{c}*) in a submatrix having a structure of Equation 18 may have combinations as follows.

**[Table 11]**

| ***Set index (**i_{LS}**)*** | (***a, b***) | ***c*** |
|---|---|---|
| 0 | | 16 or 32 or 64 (or 128) |
| 1 | | 24 or 48 or 96 (or 192) |
| 2 | | 20 or 40 or 80 (or 160) |
| 3 | (*a, b*) *=* (*0,1*) | 14 or 28 or 56 (or 112) |
| 4 | | 18 or 36 or 72 (or 144) |
| 5 | | 22 or 44 or 88 (or 176) |
| 6 | | 26 or 52 (or 104) |
| 7 | | 30 or 60 (or 120) |

Table 11 is merely an example, and in general, *c = t* may be determined by selecting one *t* among lifting size values smaller than *Z*max.

As an embodiment of the present disclosure, the *c* value may be determined based on a maximum lifting size among lifting sizes smaller than a specific reference value. Specifically, if a reference value is set to 96, numbers less than or equal to 96 in each lifting size set are 64, 96, 80, 56, 72, 88, 52, and 60 in order in a system using a lifting size set such as [Table 3] to [Table 8]. Therefore, if *c* value corresponding to a parity check matrix defined according to each lifting size set index is determined based on a given reference value in each lifting size set, the*c* value may be defined as 64, 96, 80, 56, 72, 88, 52, and 60 in order according to each lifting size set index. If a reference value is set to 48, in a similar manner, the *c* value may be defined as 32, 48, 40, 28, 36, 44, 26, and 30 in order according to each lifting size set index. When using a lifting size set excluding numbers in parentheses in [Table 3] or [Table 8], if an i-th largest lifting size among lifting sizes included in a lifting size set with *i_{LS}* = 1 is determined as a reference value, a *c* value corresponding to a parity check matrix defined according to each lifting size set index has a characteristic of being determined as the i-th largest lifting size in each set.

In addition, for uniformity of an encoding method, an i-th largest lifting size in each lifting size set may be selected (i = 2, 3, 4, 5, 6, ...). For example, in a system using a lifting size set such as [Table 3], a 5th largest number in each lifting size set is 16, 24, 20, 14, 18, 22, 13, and 15. Therefore, if *c* value corresponding to a parity check matrix defined according to each lifting size set index is determined based on a 5th largest number in each lifting size set (i=5), the *c* value may be defined as 16, 24, 20, 14, 18, 22, 13, and 15 in order according to a lifting size set index. In a similar manner, if *c* value corresponding to a parity check matrix defined according to a lifting size set index is determined based on a 4th largest number in each lifting size set (i=4), value may be defined as 32, 48, 40, 28, 36, 44, 26, and 30 in order according to a lifting size set index. In a similar manner, if *c* value corresponding to a parity check matrix defined according to a lifting size set index is determined based on a 3rd largest number in each lifting size set (i=3), *c* value may be defined as 64, 96, 80, 56, 72, 88, 52, and 60 in order according to a lifting size set index. In a similar manner, if *c* value corresponding to a parity check matrix defined according to a lifting size set index is determined based on a 2nd largest number in each lifting size set (i=2), *c* value may be defined as 128, 192, 160, 112, 144, 176, 104, and 120 in order according to a lifting size set index.

In a system using a lifting size set of values excluding values in parentheses in [Table 8], a 5th largest number in each lifting size set is 32, 48, 40, 28, 36, 44, 26, and 30. Therefore, if *c* value corresponding to a parity check matrix defined according to each lifting size set index is determined based on a 5th largest number in each lifting size set (i=5), the *c* value may be defined as 32, 48, 40, 28, 36, 44, 26, and 30 in order according to the lifting size set index. In a similar manner, if *c* value corresponding to a parity check matrix defined according to a lifting size set index is determined based on a 4th largest number in each lifting size set (i=4), *c* value may be defined as 64, 96, 80, 56, 72, 88, 52, and 60 in order according to a lifting size set index. In a similar manner, if *c* value corresponding to a parity check matrix defined according to a lifting size set index is determined based on a 3rd largest number in each lifting size set (i=3), *c* value may be defined as 128, 192, 160, 112, 144, 176, 104, and 120 in order according to a lifting size set index. In a similar manner, if *c* value corresponding to a parity check matrix defined according to a lifting size set index is determined based on a 2nd largest number in each lifting size set (i=2), *c* value may be defined as 256, 384, 320, 224, 288, 353, 208, and 240 in order according to a lifting size set index.

In addition, according to a pair (*P^{a},P^{b},P^{c}*) *=* (*I, P, P^{c}*) shown in Equation 19, Table 11, and embodiments corresponding thereto, *ϕ* matrix becomes *ϕ* = *I + P + P^{c}.* When a lifting size *Zₖ* value is less than or equal to *c* according to Exponent Selection Example 3, *c* ≡ *0* (mod *Zₖ*) holds, so that eventually *P^{a} = I = P^{c}* holds. Therefore, although a cycle characteristic is not improved, by using a fact that *ϕ* = *P* and *ϕ⁻¹ = P⁻¹* hold, efficient LDPC encoding is possible. When a lifting size *Zₖ* value is greater than *c*, there exists *i* satisfying (*P^{c}*)^{2ⁱ} *= I,* so that *ϕ^{2ⁱ} = I* holds (*i* ≥ *1*), and therefore, although encoding complexity increases by using a property of being *ϕ*⁻¹ = *ϕ^{2ⁱ-1}* = *ϕ*^{2*i*- 1} *· ϕ*^{*2ⁱ*-2} · ··· · *ϕ*². *ϕ*, efficient LDPC encoding is possible. Here, a length of a cycle determined by *P^{a}* and *P^{c}* increases from the existing *2m_{b1}* to *2m_{b1}* · *Z*/*D = 2m_{b1}* · *2 = 2^{i +1}* · *m_{b1}*. Since a length of a cycle determined by *P^{a}* and *P^{b}* or *P^{b}* and *P^{c}* satisfies Exponent Condition 1a and Exponent Condition 1b, it increases significantly in proportion to *Z* value.

The Exponent Selection Example 1, the Exponent Selection Example 2, and the Exponent Selection Example 3 are an exponent selection method for some circulant permutation matrices constituting the submatrix B 1020 in the parity check matrix of FIG. 10 considering both the improvement in cycle characteristics and the encoding complexity. The exponent selection examples propose a method in which the cycle characteristics are not improved when a code length is short due to a small lifting size, but the encoding complexity is very low, and as the lifting size increases, the cycle characteristics are improved instead of a slight increase in the encoding complexity. In general, since an LDPC code can be more sensitively affected by an error floor phenomenon due to the cycle characteristics as a length thereof is longer, the methods in which the cycle characteristics are further improved as the length of the code increases with an increase in the lifting size can be said to be a method capable of improving the error floor phenomenon to match the length of the LDPC code.

Of course, when the lifting size is small and the code length is short, the cycle characteristics do not significantly affect the error floor phenomenon, but a method for improving the cycle characteristics even when the lifting size is small may be applied.

A method for improving the cycle characteristics when the code length is short will be described as an embodiment of the present disclosure.

### Exponent Selection Example 4 (i_{LS} = k)

- *aₖ* is an arbitrary integer
- *bₖ* is *bₖ = aₖ* + *sₖ*, where *sₖ* is an integer satisfying gcd(*sₖ*,*Zₖ*) = *1*, that is, among exponents corresponding to a submatrix B, *aₖ* and *bₖ* are integers satisfying gcd(|*aₖ* - *bₖ*|*,Zₖ*) =*1*. Here, gcd(*x,y*) means a greatest common divisor of *x* and *y*, and *Zₖ* means an arbitrary lifting size belonging to a lifting size set corresponding to *i_{LS} = k.* (*Zₖ = pₖ* · *2^{Lk}, pₖ* is an odd number, *Lₖ ≥ 0*)
- ${c}_{k} is {c}_{k} = {a}_{k} + \frac{{Z}_{k}}{{2}^{min \left(J, {L}_{k}\right)}} = {a}_{k} + {p}_{k} ⋅ {2}^{{L}_{k} - {2}^{min \left(J, {L}_{k}\right)}}$
or ${c}_{k} = \left\{\begin{matrix}{a}_{k} + {p}_{k} , & {L}_{k} < J \\ {a}_{k} + \frac{{Z}_{k}}{{2}^{J}} , & {L}_{k} \geq J\end{matrix}\right. \left(=\left\{\begin{matrix}{a}_{k} + {p}_{k} , & {L}_{k} < J \\ {a}_{k} + {p}_{k} ⋅ {2}^{{L}_{k} - J} , & {L}_{k} \geq J\end{matrix}\right.\right) .$

If a size of *Zₖ* supported by the system is always equal to or greater than *pₖ · 2^{J}*, it can be simply expressed as ${c}_{k} = {a}_{k} + \frac{{Z}_{k}}{{2}^{J}} \left(={a}_{k}+{p}_{k}⋅{2}^{{L}_{k} - J}\right)$*.*

The Exponent Selection Example 4 describes a method in which respective exponents of the circulant permutation matrix (*P^{a}, P^{b}, P^{c}*) are not all fixed values but are variably determined based on at least one lifting size *Z*. Therefore, the method proposed in the present disclosure can be applied not only to the lifting size sets of [Table 3] to [Table 8] but also to various other lifting size sets defined.

If *Lₖ < J* in *Zₖ* = *pₖ* · *2^{Lₖ},* since $\frac{{Z}_{k}}{{2}^{J}}$ is not an integer, it may be set to be *cₖ* = *aₖ + pₖ* in the above example. That is, a *cₖ* value may be variably determined according to *Zₖ* values supported by the system and a given J value. In a case that the *Zₖ* value supported by the system is greater than or equal to *pₖ · 2^{J}*, since $\frac{{Z}_{k}}{{2}^{J}}$ is always an integer, it can be determined by a single method such as ${c}_{k} = {a}_{k} + \frac{{Z}_{k}}{{2}^{J}}$*.*

The method for Exponent Selection Example 4 satisfies Exponent Condition 1a and Exponent Condition 1b, and whether Exponent Condition 2a and Exponent Condition 2 are satisfied varies depending on the lifting size *Zₖ*. For example, when a range of the supported *Zₖ* value is equal to or greater than *pₖ · 2^{J}*, Exponent Condition 2a and Exponent Condition 2b are satisfied, and when it is smaller than *pₖ · 2^{J}*, they are not satisfied.

According to the embodiment of Exponent Selection Example 4, when *Zₖ* ≥ *pₖ* · *2^{J}* (or *Lₖ* ≥*J*), the cycle length determined by *P^{a}* and *P^{c}* increases from the existing *2m_{b1}* to *2^{J+1}* · *m_{b1},* and when *Zₖ* < *pₖ* · 2*^{J}* (or *Lₖ < J* ), it increases to *2^{Lₖ+1}* · *m_{b1}.* (In a case of *Lₖ = 0,* it does not increase.) Since a length of a cycle determined by *P^{a}* and *P^{b}* or *P^{b}* and *P^{c}* satisfies Exponent Condition 1a and Exponent Condition 1b, it increases significantly in proportion to Z value.

In addition, in a case of *Zₖ* ≥ *pₖ* · 2*^{J}* (or *Lₖ ≥ J*), *ϕ* matrix is as
$ϕ = {P}^{{a}_{k}} + {P}^{{a}_{k} + {s}_{k}} + {P}^{{a}_{k} + \frac{Z}{{2}^{J}}} = {P}^{{a}_{k}} \left(I+{P}^{{s}_{k}}+{P}^{\frac{Z}{{2}^{J}}}\right) ,$
so that LDPC encoding is possible by using
${ϕ}^{{2}^{J}} = {P}^{{a}_{k} ⋅ {2}^{J}} ⋅ \left(I+{P}^{{s}_{k} ⋅ {2}^{J}}+{P}^{Z}\right) = {P}^{\left({a}_{k}+{s}_{k}\right) ⋅ {2}^{J}}$
${ϕ}^{- 1} = {P}^{- \left({a}_{k}+{s}_{k}\right) ⋅ {2}^{J}} ⋅ {ϕ}^{{2}^{J} - 1} = {P}^{- \left({a}_{k}+{s}_{k}\right) ⋅ {2}^{J}} ⋅ {ϕ}^{{2}^{J - 1}} ⋅ {ϕ}^{{2}^{J - 2}} . … . {ϕ}^{2} ⋅ ϕ$

In a case of *Zₖ* < *pₖ* · 2*^{J}* (or *Lₖ < J*), *ϕ* matrix is as
$ϕ = {P}^{{a}_{k}} + {P}^{{a}_{k} + {s}_{k}} + {P}^{{a}_{k} + {p}_{k}} = {P}^{{a}_{k}} \left(I+{P}^{{s}_{k}}+{P}^{{p}_{k}}\right) ,$
so that an integer *j* (*j* < J) satisfying *ϕ*²*^{ⱼ} = P^{aₖ·2ⱼ} (I* + *P^{sₖ·2ⱼ}* + *P^{z}*) *= P^{(aₖ+sₖ)·2ⱼ}* exists, and thus LDPC encoding can be performed in a similar manner.

While the method for the Exponent Selection Example 4 has a disadvantage that a maximum value of the cycle length that can be improved according to the J value is fixed regardless of the lifting size *Z,* it has an advantage that the cycle characteristics are improved even when the lifting size *Z* is small. In other words, respective exponents of the circulant permutation matrix (*P^{a}, P^{b}, P^{c}*) are not all fixed integer values, but at least one of the respective exponents of the circulant permutation matrix is variably determined based on the lifting size Z, whereby the cycle characteristics can be improved for various lifting sizes.

An example of exponent selection when *a* = *1*, that is, *P^{a} = P¹* is set for convenience as a specific example for Exponent Selection Example 4, is shown below.

### Exponent Selection Example 5 (i_{LS} = k)

- ${a}_{k} = 1 \left({P}^{a}=P\right)$
- ${b}_{k} = 0 \left({P}^{b}=I\right)$
- ${c}_{k} is {c}_{k} = 1 + \frac{{Z}_{k}}{{2}^{min \left(J, {L}_{k}\right)}} = 1 + {p}_{k} ⋅ {2}^{{L}_{k} - {2}^{min \left(J, {L}_{k}\right)}}$
or ${c}_{k} = \left\{\begin{matrix}1 + {p}_{k} , & {L}_{k} < J \\ 1 + \frac{{Z}_{k}}{{2}^{J}} , & {L}_{k} \geq J\end{matrix}\right. \left(=\left\{\begin{matrix}1 + {p}_{k} , & {L}_{k} < J \\ 1 + {p}_{k} {2}^{{L}_{k} - J} , & {L}_{k} \geq J\end{matrix}\right.\right) .$

If a size of *Zₖ* supported by the system is always equal to or greater than *pₖ · 2^{J}*, it can be simply expressed as ${c}_{k} = 1 + \frac{{Z}_{k}}{{2}^{J}} \left(=1+{p}_{k}⋅{2}^{{L}_{k} - J}\right)$*.*

Like Exponent Selection Example 5, when *bₖ* = *0,* Exponent Condition 1a and Exponent Condition 1b are satisfied not only for *aₖ = 1* but also for an arbitrary *aₖ* satisfying gcd(*aₖ*,*Zₖ*) *= 1.* That is, for an integer *a* where gcd(*a*,*Zₖ*) = 1, the submatrix B set as *aₖ = a, bₖ = 0, cₖ = 1* + *pₖ* · 2^{max(*Lₖ*-*J,*0)} (or ${c}_{k} = \left\{\begin{matrix}a + {p}_{k} , & {L}_{k} < J \\ a + \frac{{Z}_{k}}{{2}^{J}} , & {L}_{k} \geq J\end{matrix}\right.$ ) satisfies Exponent Condition 1a and Exponent Condition 1b.

According to a method such as Exponent Selection Example 5,
${ϕ}^{{2}^{J}} = {P}^{a ⋅ {2}^{J}} + I + {P}^{a ⋅ {2}^{J} + Z} = I holds ,$
so that efficient encoding is possible by using *ϕ⁻¹* = *ϕ^{2^{J}-1}* . *ϕ^{2^{J}-2} · ··· · ϕ² · ϕ.*

An example of exponent selection when *a* = *0*, that is, *P^{a} = I* is set for convenience as a more specific example for Exponent Selection Example 4, is shown below.

### Exponent Selection Example 6 (i_{LS} = k)

- ${a}_{k} = 0 \left({P}^{a}=I\right)$
- ${b}_{k} = 1 \left({P}^{b}=P\right)$
- *cₖ* is ${c}_{k} = \frac{{Z}_{k}}{{2}^{min \left(J, {L}_{k}\right)}} = {p}_{k} ⋅ {2}^{{L}_{k} - {2}^{min \left(J, {L}_{k}\right)}}$
or ${c}_{k} = \left\{\begin{matrix}{p}_{k} , & {L}_{k} < J \\ \frac{{Z}_{k}}{{2}^{J}} , & {L}_{k} \geq J\end{matrix}\right. = \left\{\left.\begin{matrix}{p}_{k} , & {L}_{k} < J \\ {p}_{k} ⋅ {2}^{{L}_{k} - J} , & {L}_{k} \geq J\end{matrix}\right)\right.$

If a size of *Zₖ* supported by the system is always equal to or greater than *pₖ · 2^{J},* it can be simply expressed as ${c}_{k} = \frac{{Z}_{k}}{{2}^{J}} \left(={p}_{k}⋅{2}^{{L}_{k} - J}\right)$*.*

Like Exponent Selection Example 6, when *aₖ = 0,* Exponent Condition 1a and Exponent Condition 1b are satisfied not only for *bₖ* = *1* but also for an arbitrary *bₖ* satisfying gcd(*bₖ*, *Zₖ*) = *1*. That is, for an integer *b* where gcd(*b*,*Zₖ*) = *1*, the submatrix B set as *aₖ = 0, bₖ = b , cₖ = pₖ* · *2*^{max(*Lₖ-J,0*)} (or ${c}_{k} = \left\{\begin{matrix}{p}_{k} , & {L}_{k} < J \\ \frac{{Z}_{k}}{{2}^{J}} , & {L}_{k} \geq J\end{matrix}\right.$ ) satisfies Exponent Condition 1a and Exponent Condition 1b.

According to a method such as Exponent Selection Example 6,
efficient encoding is possible based on
${ϕ}^{{2}^{J}} = I + {P}^{b ⋅ {2}^{J}} + {P}^{Z} = {P}^{b ⋅ {2}^{J}}$
${ϕ}^{- 1} = {P}^{- b ⋅ {2}^{J}} ⋅ {ϕ}^{{2}^{J} - 1} = {P}^{- b ⋅ {2}^{J}} ⋅ {ϕ}^{{2}^{J - 1}} ⋅ {ϕ}^{{2}^{J - 2}} . … . {ϕ}^{2} ⋅ ϕ$

The exponent selection methods of Exponent Selection Example 4, Exponent Selection Example 5, and Exponent Selection Example 6 enable the cycle length to be improved up to a maximum of *2^{J+1}* · *m_{b1}* when efficient encoding is considered. If the *m_{b1}* value is relatively large, the cycle characteristics can be sufficiently improved even if the J value is not large. Typically, the J value may be determined in consideration of a target BLER value and a parameter *m_{b1}* value indicating a number of rows of a core matrix portion in a parity check matrix given by the system. For example, when the target BLER is relatively high or the *m_{b1}* value of the core matrix is large, J = 1, 2 may be sufficient, but when the target BLER is relatively low or the *m_{b1}* value of the core matrix is small, it is preferable to set J = 2, 3, 4, ....

In general, since an extent to which performance of a code is affected by the cycle characteristics varies according to the length of the code, it is also possible to set the J value differently according to the lifting size. That is, at least one of the exponents is determined according to the lifting size, but the *J₁* value may be set to be small when the lifting size is relatively small, and the *J₂* value may be set to be large when the lifting size is relatively large (*J₁* < *J₂*). When the J value is set differently according to the lifting size, a reference lifting size and appropriate *J₁* and *J₂* values should be determined.

Various possible exponent selection methods including Exponent Selection Example 1 to Exponent Selection Example 6 may be variably applied according to the target BLER and/or the lifting size of the system. For example, when the target BLER of the system is high, since the cycle characteristics do not significantly affect decoding performance of the code, encoding may be performed using a conventional method having the highest encoding efficiency even if the cycle characteristics are not improved, but when the target BLER is low, the exponent selection methods proposed in the present disclosure may be applied. Here, whether the target BLER is high or low may be relatively determined when a plurality of target BLERs applicable in the system exist. For example, when a first target BLER is *10⁻¹* and a second target BLER is *10⁻⁵*, the first target BLER can be said to be higher than the second target BLER. When the first target BLER is *10⁻¹*, the second target BLER is *10⁻⁵*, and a third target BLER is *10⁻⁶* (or *10⁻⁷*), it may be determined that the first target BLER is higher than the second target BLER and the third target BLER, and it may also be determined that the first target BLER and the second target BLER are higher than the third target BLER. As described above, when a plurality of target BLERs applicable in the system exist, whether the BLER is high or low is determined based on a specific BLER value, and then the exponent selection method proposed in the present disclosure can be variably applied based thereon.

However, this is an embodiment of the present invention, and the exponent selection method proposed in the present disclosure may be applied when the target BLER is high or regardless of the target BLER, and may be variably applied based on other factors. In addition, since the exponent selection method described throughout the present disclosure means a method for selecting an exponent of a circulant permutation matrix included in a submatrix (specifically, the submatrix B) of a parity check matrix, the exponent selection method for the present disclosure may be described as a method for determining a parity check matrix or a method for determining a submatrix included in a parity check matrix. In addition, since the lifting size is closely related to a code length, a TBS, etc., all processes determined based on the lifting size among the embodiments disclosed in the present invention may be changed to a method determined based on the code length or the TBS. In addition, although the lifting size *Zₖ* in Exponent Selection Example 1 to Exponent Selection Example 6 is expressed as "*Zₖ* = *pₖ* · 2*^{Lₖ}*, *Lₖ* ≥ *0, pₖ* is an odd number" for convenience, the exponent selection methods can be generally applied in a similar manner even when *pₖ* is not limited to an odd number, such as "*Zₖ* = *pₖ* · *2^{ₖ}*, *Lₖ* ≥ 0, *pₖ* is a smallest lifting size in a k-th lifting size set" as shown in [Table 7-1] or [Table 7-2].

As a specific example for an application of the J value in Exponent Selection Example 4 to Exponent Selection Example 6, when it is determined that the system target BLER is high, the J value may be set to be small as *J₁*, and when it is determined that the system target BLER is low, the J value may be set to a relatively large value as *J₂* (*J₁* < *J₂*). In addition, the exponent selection method or a determination on the J value may be determined by considering the lifting size together. In general, the BLER and/or the lifting size serving as a reference may be set to A pieces, and may be classified into a total of (A+1) different J values. For example, if there are a first reference value, a second reference value,..., J values may be subdivided into *J₁ < J₂, J₁ < J₂* < *J₃*,.... In general, J may also be set to 0, which means a conventional method in which *P^{a} = P^{c}* holds, so that the cycle characteristics are not improved and the simplest encoding is possible.

For reference, a method for determining the target BLER in a terminal or a base station may be variously applied according to the system. For example, the system target BLER may be directly indicated from higher layer signaling such as set RRC (radio resource control) information, the target BLER may be indirectly indicated according to a set CQI table or MCS table, and the target BLER may be indirectly indicated according to a set service scenario.

As an embodiment of the present invention, a method for variably applying puncturing to reduce a decoding latency of a terminal or a base station in a system that transmits and receives data by puncturing information word bits corresponding to some columns of a base matrix or a parity check matrix, like 3GPP 5G standard technology, will be described.

A technique in which a part of input bits or code block bits is punctured in a transmitter and is not transmitted to a receiver is a method usually applied to obtain a high encoding gain. In addition, unlike a method for puncturing a part of parity bits corresponding to columns having a relatively small weight in a parity check matrix, the input bits or the code block bits to be punctured correspond to columns having a high weight. For example, as shown in [Table 9], in an encoding process of a 5G NR system, first 2*Z_{c}* bits *i₀,i₁,i₂,...,i_{2Z_{c}-1}* among the input bits or the code block bits are bits that are not transmitted, and front two columns of a base matrix *M*(**H_{BG1}**) or *M*(**H_{BG2}**) corresponding to the punctured information word bits are columns having a relatively high weight in the entire base matrix. Specifically, a weight of *Z_{c}* columns corresponding to a first column of the base matrix *M*(**H_{BG1}**) in the parity check matrix is 30, a weight of *Z_{c}* columns corresponding to a second column is 28, a weight of *Z_{c}* columns corresponding to a first column of the base matrix *M*(**H_{BG2}**) in the parity check matrix is 22, and a weight of *Z_{c}* columns corresponding to a second column is 23. As described above, front *2Z_{c}* columns of the parity check matrix corresponding to the base matrix *M*(**H_{BG1}**) or *M*(**H_{BG2}**) are columns having a significantly higher weight than other columns in the entire parity check matrix.

In general, the punctured information word bits correspond to columns having a highest weight in the base matrix or the parity check matrix. Usually, in order to obtain a large encoding gain, the weight of the corresponding columns is preferably at least 3 times or more a total average column weight of the parity check matrix, and in some cases, a case where it exceeds 5 times or 6 times the average column weight may be considered. Furthermore, an optimized constraint on the weight of columns corresponding to the punctured information word bits may be set differently according to a code rate. In addition, columns having a highest weight or degree in the base matrix or the parity check matrix are arranged at the front for convenience, but the arrangement is not necessarily limited thereto, and they may be arranged in the middle or at the back of the parity check matrix to meet requirements of the system.

In general, when parity bits corresponding to columns having a weight or degree of 1 in the base matrix or the parity check matrix of the LDPC code are punctured, a decoding process is not affected at all. Therefore, since a decoding operation is performed excluding columns corresponding to the corresponding parity bits and rows directly connected to the columns, decoding complexity is reduced. However, even if the punctured information word bits are not actually transmitted from the transmitter to the receiver, the receiver considers the punctured information word bits as erased bits and must perform decoding, so that the decoding complexity is not reduced.

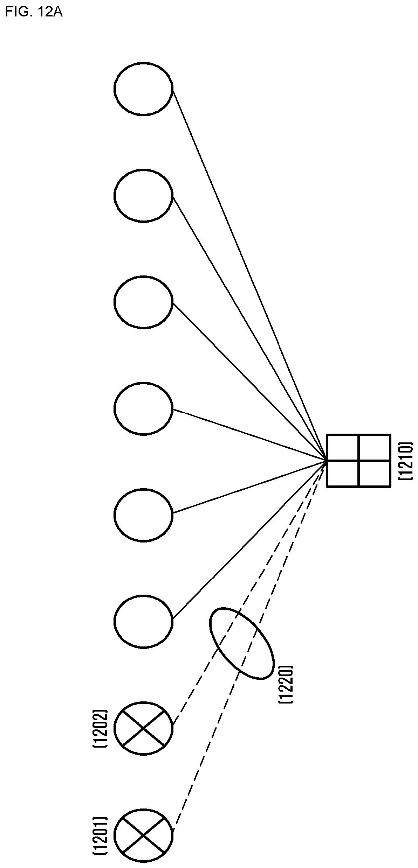

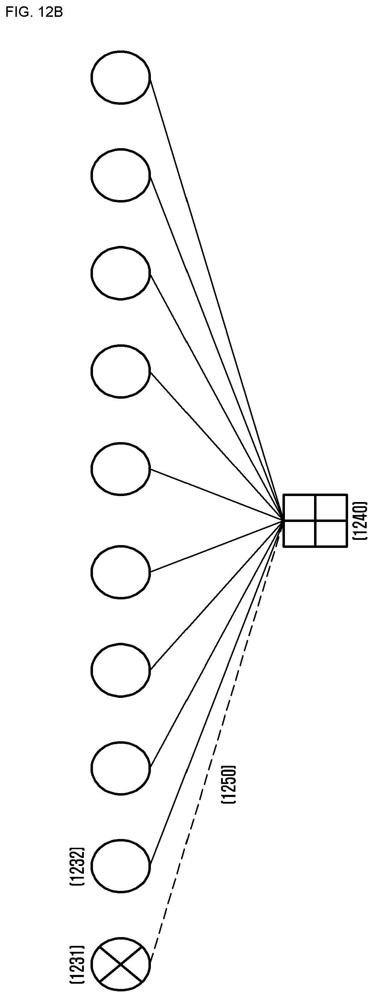

When LDPC decoding is performed in a system to which such puncturing of information word bits is applied, there may be a problem in a decoding convergence speed depending on a decoding method. In order to explain this problem, features of the decoding process for a case where a part of information word bits or a code block is punctured when LDPC encoding and decoding are performed using a part of the base matrix of Equation 20 are briefly shown in FIG. 12A and FIG. 12B. For reference, Equation 20 is a base matrix obtained by selecting 6 rows from the top in the base matrix *M*(**H_{BG2}**), and it is assumed that information word bits corresponding to front 2 columns are not transmitted. A method in which the information word bits corresponding to the 2 columns are not transmitted may be performed through a rate matching method, or may be performed through puncturing of LDPC encoded bits separately from the rate matching. [Equation 20] $\left[\begin{matrix}1 & 1 & 1 & 1 & 0 & 0 & 1 & 0 & 0 & 1 & 1 & 1 & 0 & 0 & 0 & 0 \\ 1 & 0 & 0 & 1 & 1 & 1 & 1 & 1 & 1 & 1 & 0 & 1 & 1 & 0 & 0 & 0 \\ 1 & 1 & 0 & 1 & 1 & 0 & 0 & 0 & 1 & 0 & 1 & 0 & 1 & 1 & 0 & 0 \\ 0 & 1 & 1 & 0 & 1 & 1 & 1 & 1 & 1 & 1 & 1 & 0 & 0 & 1 & 0 & 0 \\ 1 & 1 & 0 & 0 & 0 & 0 & 0 & 0 & 0 & 0 & 0 & 1 & 0 & 0 & 1 & 0 \\ 1 & 1 & 0 & 0 & 0 & 1 & 0 & 1 & 0 & 0 & 0 & 1 & 0 & 0 & 0 & 1\end{matrix}\right]$

FIG. 12A and FIG. 12B are exemplary diagrams showing a case where 1 and 2 punctured bits are connected to one check node, respectively.

FIG. 12A is a diagram showing a Tanner graph corresponding to a first row in the base matrix of Equation 20. In FIG. 12A, 8 variable nodes and one check node 1210 are shown for convenience, but since the base matrix of Equation 20 represents a quasi-cyclic LDPC code having a block size of Z, the first row actually means that 8*Z variable nodes are connected to Z check nodes.

If two or more punctured variable nodes are connected to one check node as in 1201 and 1202 of FIG. 12A, an LLR value corresponding to the corresponding variable node is set to 0, and these values are transmitted to the check node 1210 along each line 1220 connected to the variable node. Referring to a decoding algorithm presented in the reference "Frank R. Kschischang, Brendan J. Frey, and Hans-Andrea Loeliger, 'Factor Graphs and the Sum-Product Algorithm,' IEEE TRANSACTIONS ON INFORMATION THEORY, VOL. 47, NO. 2, FEBRUARY 2001, pp498-519" to describe the decoding process in FIG. 12A and FIG. 12B, when a decoding update equation based on a product rule using a tanh(.) function is applied in the check node, tanh(0) = 0 is satisfied. Therefore, a case where tanh(0) = 0 is satisfied necessarily occurs at least once in the update equation, and thus a multiplication equation always becomes 0, so that the LLR value of the variable node (i.e., bit) is not updated even if an update process is performed for any variable node. In other words, if two or more punctured variable nodes (i.e., bits) are connected to one check node, the LLR values for all variable nodes are not updated by the update rule based on the product rule. Here, the product rule and the update rule for the LLR value have been described for convenience, but the reliability of the variable node is similarly not updated even if any update rule and a message value (that is, a value obtained through demodulation to perform decoding, which means a decoder input value) are applied.

FIG. 12B is a diagram illustrating a Tanner graph corresponding to a second row block in the base matrix of Equation 20. In FIG. 12B, 10 variable nodes and one check node 1240 are shown for convenience, but since the base matrix of Equation 20 represents the quasi-cyclic LDPC code having the block size of Z, the second row actually means that 10*Z variable nodes are connected to Z check nodes.

If only one punctured variable node is connected to one check node as in 1231 of FIG. 12B, an LLR value corresponding to the corresponding variable node is set to 0, and this value is transmitted to the check node 1240 along the line 1250. In other words, when an update method based on the product rule is applied in a process in which a check node processor calculates an update LLR value corresponding to remaining lines excluding the line 1250, the LLR values corresponding to variable nodes excluding 1231 connected to lines other than the line 1250 are not updated by the LLR = 0 value corresponding to the line 1250. However, since an update of the LLR value corresponding to the variable node corresponding to the line 1250 is performed based on values corresponding to lines excluding the line 1250, the LLR value corresponding to the variable node 1231 may be updated to a value other than 0, which was set due to puncturing. Further, after the LLR value corresponding to the variable node(1231) is updated to a value other than 0, a meaningful reliability value (e.g., an LLR value) is set for all variable nodes, so that the LLR values for all variable nodes (i.e., bits) can be updated in a subsequent iterative decoding process.

When LDPC decoding applying a flooding scheduling method in which decoding is simultaneously performed for all rows using the base matrix of Equation 20 is performed, there is no update by rows excluding the second and fourth rows in an initial iterative decoding process, and only the reliability (e.g., LLR) corresponding to bits corresponding to the front 2 columns of the base matrix is updated by an update by the second and fourth rows. That is, in a 0-th iterative decoding process, remaining bits excluding the bits corresponding to the front 2 columns are not updated at all, and an update for all bits proceeds from a 1-st iterative decoding process, so that an essential number of iterative decodings required for successful LDPC decoding is at least 1. (A first decoding performed based on an LLR value obtained through demodulation from an initially received signal is regarded as the 0-th iterative decoding.) Although the number of iterative decodings for successful decoding may vary depending on channel conditions, it means that at least one iterative decoding is always required regardless of the channel conditions.

Equation 21 simply expresses a base matrix obtained by selecting 6 rows from the top in the base matrix *M*(**H_{BG1}**), and it is assumed that information word bits corresponding to front 2 columns are not transmitted. A method in which the information word bits corresponding to the 2 columns are not transmitted may be performed through a rate matching method, or may be performed through puncturing of LDPC encoded bits separately from the rate matching. [Equation 21] $\left[\begin{matrix}1 & 1 & 1 & 1 & & 1 & 1 & 1 & 0 & 0 & 0 & 0 \\ 1 & 0 & 1 & 1 & … & 1 & 1 & 1 & 1 & 0 & 0 & 0 \\ 1 & 1 & 1 & 0 & & 0 & 0 & 0 & 1 & 1 & 0 & 0 \\ 1 & 1 & 0 & 1 & … & 1 & 1 & 0 & 0 & 1 & 0 & 0 \\ 1 & 1 & 0 & 0 & & 0 & 0 & 0 & 0 & 0 & 1 & 0 \\ 1 & 1 & 0 & 1 & & 1 & 1 & 0 & 0 & 0 & 0 & 1\end{matrix}\right]$

In the base matrix of Equation 21, all rows excluding the second row may have a variable node corresponding to two punctured bits connected to one check node similarly to FIG. 12A, and FIG. 12 is a diagram illustrating a Tanner graph therefor.

If LDPC decoding applying the flooding scheduling method in which decoding is simultaneously performed for all rows using the base matrix of Equation 21 is performed, there is no update by other rows excluding the second row in the initial iterative decoding process, and only the reliability (e.g., LLR) corresponding to bits corresponding to a first column of the base matrix is updated by an update by the second row. That is, in the 0-th iterative decoding process, remaining bits excluding the bits corresponding to the first 1 column are not updated at all.

When the 0-th iterative decoding process is completed, bits corresponding to a second column are still considered to be erased. Therefore, in the 1-st iterative decoding process, all bits connected to the bits corresponding to the second column are still not updated. However, since bits corresponding to all columns excluding the second column acquire a meaningful reliability (e.g., an LLR value) in the 0-th iterative decoding process, the bits corresponding to the second column acquire a meaningful reliability value through the 1-st iterative decoding process. That is, since a meaningful reliability value is set for all bits when the 1-st iterative decoding process is completed, an update for all bits proceeds from a 2-nd iterative decoding process, so that an essential minimum number of iterative decodings required for successful LDPC decoding is at least 2. Although the number of iterative decodings for successful decoding may vary depending on channel conditions, it means that at least 2 iterative decodings are always required regardless of the channel conditions.

State-of-the-art communication systems including a 5G system support various service scenarios, among which a service transmitting high-speed and high-capacity data requires fast data processing in a decoder. In particular, the 5G system is a system designed considering a peak data rate of 20 Gbps, and a next-generation communication system such as a 6G system considers supporting a service having a peak data rate several times to several tens of times higher than this.

As the number of iterative decodings to achieve an error correction performance required by the system increases, an operation time of the decoder also increases linearly, so that the number of iterative decodings and a size of information throughput of the decoder are in an inverse relationship. Therefore, in an environment where high information throughput is required, the number of iterative decodings should be small to obtain a high data rate. As described above, a decoding convergence speed is expressed as being fast as the number of iterative decodings required to achieve the error correction performance required by the system or the operation time of the decoder taken according to the number is small, and the decoding convergence speed is expressed as being slow as the number of iterative decodings or the operation time of the decoder taken according to the number is relatively large.

Since the conventional 5G system characterized by a part of information word bits being always punctured and not transmitted to obtain an excellent encoding gain, a receiver applying a decoding algorithm such as the flooding method requires at least 2 or more iterative decodings, which may be disadvantageous in terms of the decoding convergence speed depending on a communication environment of the system. In other words, while puncturing the information word bits provides an excellent encoding gain in a situation where a sufficient number of iterative decodings can be applied, the encoding gain obtained from the information word puncturing may not be sufficient in a situation where fast data decoding is required (that is, when the number of iterative decodings is limited).

The present disclosure proposes a method capable of efficient operation of the system by variably performing information puncturing according to a situation required by the system.

In a conventional encoding process, a part of information word bits was always excluded in a process of defining encoded bits as shown in [Table 9] to apply puncturing of the information word bits. Meanwhile, the present disclosure proposes a method for variably performing puncturing of the information word bits, and when puncturing of the information word bits is not applied, an operation that is simply modified from the operation of [Table 9] may be performed as shown in [Table 12] below.

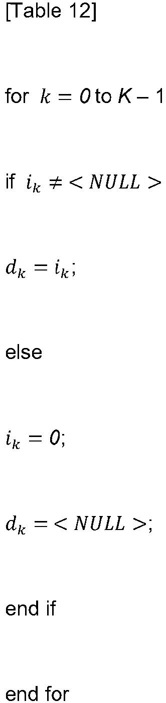

With reference to [Table 12], when input bits or code block bits are denoted by *i₀,i₁,i₂,* ..., *i_{K-1}* and encoded bits are denoted by *d₀,d₁,d₂,* ..., *d_{N-1}*, *N* = 68*Z_{c}* when a base matrix 1 *M*(**H_{BG1}**) or a base matrix having the same size as the base matrix 1 is applied, and *N* = 52*Z_{c}* when a base matrix 2 *M*(**H_{BG2}**) or a base matrix having the same size as the base matrix 2 is applied.

According to a configuration of the system including the terminal or the base station, [Table 9] may be applied when puncturing of the information word bits is applied, and [Table 12] may be applied when puncturing of the information word bits is not applied. In the present disclosure, a configuration instructing to perform puncturing of the information word bits as shown in [Table 9] may be expressed as a first configuration, and a configuration instructing not to apply puncturing of the information word bits as shown in [Table 12] may be expressed as a second configuration.

The configuration may be determined based on a higher layer parameter (for example, an RRC parameter). For example, when a situation requiring a high encoding gain or a specific service corresponding thereto is configured through the parameter (when the first configuration is indicated), an operation of [Table 9] is performed, and when a situation requiring high information throughput or a specific service corresponding thereto is configured (when the second configuration is indicated), an operation of [Table 12] is performed.

In addition, the situation or service requiring a high encoding gain or the situation or service requiring high information throughput may be indicated or configured based on separate signaling or parameters, but may also be indicated or configured based on other existing signaling information or parameters. For example, variable puncturing of the information word bits may be performed based on at least one of a set CQI or MCS index. The MCS index indicates a spectral efficiency of the system by indicating a combination of a modulation order and a code rate. Usually, when a high spectral efficiency is configured, it means that a channel condition is good, so that high information throughput is likely to be required rather than an encoding gain. Therefore, puncturing of the information word bits may be variably applied according to a value of the set CQI or MCS index. In addition, puncturing of the information word bits may be variably applied according to a range of a value based on at least one of the modulation order or the code rate determined from the CQI or the MCS index. For example, whether the first configuration or the second configuration is applied may be configured according to the value of the CQI or the MCS index (for example, in a form of a table), and the configuration according to the indicated CQI or MCS index value may be applied.

The above examples are merely examples, and a criterion for variably applying puncturing of the information word bits can be variously applied. For example, puncturing of the information word bits may be variably applied based on a set UE category, and puncturing of the information word bits may be variably applied according to whether it is a downlink or an uplink.

Alternatively, although the present disclosure describes a case where the first configuration or the second configuration described above is configured in the terminal as an example, as another embodiment, puncturing of the information word bits is basically applied as shown in [Table 9], but when a configuration instructing not to apply puncturing of the information word bits is included, puncturing of the information word bits may not be applied based on the configuration. That is, puncturing of the information word bits may not be applied depending on whether the configuration instructing not to apply puncturing of the information word bits is included.

[Table 9] and [Table 12] may be expressed in an integrated form as shown in [Table 13] below.

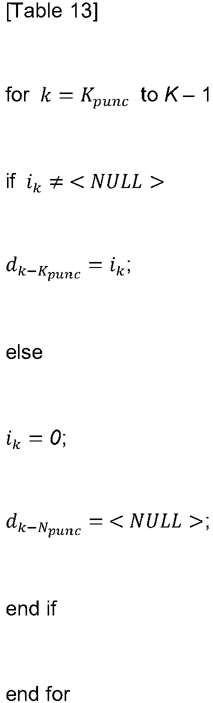

In [Table 13], *K_{punc}* denotes a number of punctured information word bits, and when input bits or code block bits are denoted by *i₀,i₁,i₂,...,i_{K-1}* and encoded bits are denoted by *d₀,d₁,d₂,...,d_{N-1}*, *N =* 68*Z_{c}* - *K_{punc}* when the base matrix 1 *M*(**H_{BG1}**) or the base matrix having the same size as the base matrix 1 is applied, and *N* = 52*Z_{c} - K_{punc}* when the base matrix 2 *M*(**H_{BG2}**) or the base matrix having the same size as the base matrix 2 is applied. As a specific example, when information puncturing of 2*Z_{c}* bits is applied, *K_{punc} =* 2*Zc* may be set, and when information puncturing is not applied, *K_{punc}* = *0* may be set.

In general, the number of the encoded bits *N* may be defined as a difference between a maximum number of encoded bits determined according to *Z_{c}*, that is, a total number of columns of a parity check matrix determined according to *Z_{c}* and the number of punctured information word bits. In addition, when the parity check matrix is determined, a number of parity bits that can be generated is equal to the difference between the maximum number of encoded bits determined according to *Z_{c}*, that is, the total number of columns of the parity check matrix and a number of given input bits (= code block bits). Therefore, the parity bits may be expressed as *w₀,w₁,w₂,...,w*_{68*Z_{c}-K-1*} when the base matrix 1 *M*(**H_{BG1}**) or the base matrix having the same size as the base matrix 1 is applied, and *w₀,w₁,w₂,...,w_{52_{c}-K-1}* when the base matrix 2 *M*(**H_{BG2}**) or the base matrix having the same size as the base matrix 2 is applied, or may be expressed as *w₀,w₁,w₂,* ..., *w_{N+_{punc-}K-1}*. Therefore, an encoding bit corresponding to the parity bit can be expressed as follows:
for *k = K* to *N + K_{punc} - 1*
${d}_{k - {K}_{punc}} = {w}_{k - K} ;$
end for

In the above examples, a method for applying variable puncturing for the same number of information word bits regardless of the base matrix has been proposed for convenience, but *K_{punc}* may be defined as different values such as *K_{punc1}* and *K_{punc2}* according to the base matrix. In addition, if *K_{punc}* is set to a multiple of *Z_{c}*, it can be expressed in a form such as *K_{punc}* = *K_{punc,b}* · *Z_{c}* (*K_{punc,b}*: 1, 2, 3,...). When a total number of columns of a given base matrix (= a total number of column blocks of a parity check matrix) is denoted by *n_{b}*, there is generally a relationship of *n_{b}Z_{c} = N + K_{punc}*, so that it can be expressed in various forms such as *N = n_{b}Z_{c} - K_{punc}* or *N* = (*n_{b}* - *K_{punc,b}*)*Z_{c}*.

In addition, although only cases classified into *K_{punc}* = *0* or *K_{punc}* > *0* have been described in the examples of [Table 9] and [Table 12], variable puncturing of the information word bits may be applied in a more subdivided manner as described above. For example, variable puncturing of the information word bits can be applied in three stages, such as *K_{punc}* = *0*, *K_{punc,b1}* ·*Z_{c}*, or *K_{punc,b2}* · *Z_{c}* (*K_{punc,b1} < K_{punc,b2}*), and may be subdivided into more stages. In addition, depending on the system, a case where *K_{punc}* = *0* may not exist, and in this case, it may be expressed as $N = {n}_{b}^{′} {Z}_{c} - {K}_{punc} \left({n}_{b}>{n}_{b}^{′}\right)$. That is, in the embodiment of the present disclosure, the second configuration may mean a configuration instructing not to apply puncturing of the information word bits, or instructing to puncture a part of the information word bits (for example, when the number of punctured information word bits is *2Z_{c}* bits or less). In other words, when the second configuration is indicated, it means that at least a part of information bits to be punctured in an encoding process or a rate matching process when the first configuration is indicated is not punctured in the encoding process or the rate matching process. Alternatively, it may mean that when the second configuration is indicated, the number of information bits to be punctured in the encoding process or the rate matching process is smaller than the number of information bits to be punctured in the encoding process or the rate matching process when the first configuration is indicated, or is 0. Alternatively, it may mean that when the first configuration is indicated, an input bit of a first length among input bits is not included in the encoding bit, and when the second configuration is indicated, an input bit of a second length among the input bits is not included in the encoding bit, and the second length is 0 or smaller than the first length.

That is, a feature that the number of information word bits to be punctured is absent or smaller when a situation requiring high information throughput or a specific service corresponding thereto is configured (the second configuration), compared to a case where a situation requiring a high encoding gain or a specific service corresponding thereto is configured (the first configuration), is maintained.

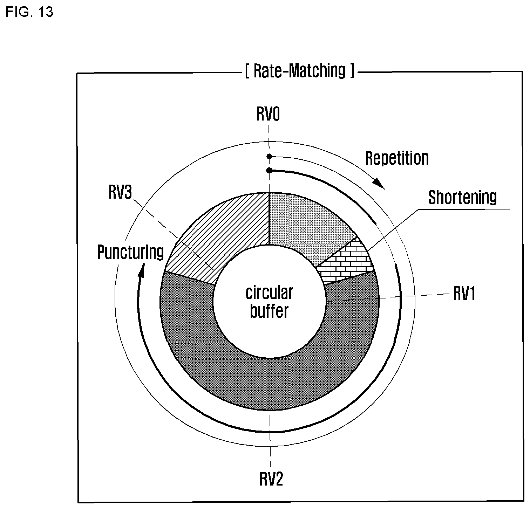

Specific rate matching and/or a retransmission process may also be affected according to puncturing of the information word bits. With reference to FIG. 13, in an LDPC encoding process, not only techniques such as appropriate shortening, puncturing, and repetition are applied, but also a starting position of bits transmitted based on an RV value is determined. As a specific example, a rate matching process of a 5G system can be expressed as follows.

### [Example of Rate Matching Process]

(1) encoded bits *d*₀*,d₁,d₂, ..., d_{N-1}* corresponding to an r-th code block may be stored in a circular buffer having a length of *N_{cb}*. (The circular buffer may mean an actual physical buffer, but may also mean a logical buffer.)
(2) For the r-th code block, if limited buffer rate-matching (LBRM) is not applied (*I_{LBRM} = 0*), it is set to *N_{cb} = N,* and if limited buffer rate-matching (LBRM) is applied (*I_{LBRM} =* 1), it is set to *N_{cb}* = min(*N*,*N_{ref}*). Here, ${N}_{ref} = \left⌊\frac{{TBS}_{LBRM}}{C ⋅ {R}_{LBRM}}\right⌋$ is satisfied, and *R_{LBRM}* = 2/3 and *TBS_{LBRM}* mean a TBS calculated based on parameters limited for a case of applying LBRM.
(3) When an RV number for current transmission or retransmission is denoted by rv_{id} (rv_{id} = 0, 1, 2 or 3), output bits *e*₀*,e₁,e₂, ..., e_{E-1}* after rate matching are determined based on the following process.

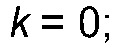

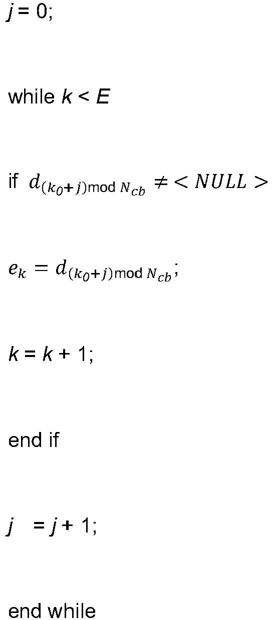

Here, *k₀* is a value indicating the location of a bit at which transmission starts determined according to rv_{id}, a base matrix, and Table 14 below.

**[Table 14]**

| rV_{id} | *k₀* | |
|---|---|---|
| | LDPC base graph 1 | LDPC base graph 2 |
| 0 | 0 | 0 |
| 1 | $\left⌊\frac{17 {N}_{cb}}{66 {Z}_{c}}\right⌋ {Z}_{c}$ | $\left⌊\frac{13 {N}_{cb}}{50 {Z}_{c}}\right⌋ {Z}_{c}$ |
| 2 | $\left⌊\frac{33 {N}_{cb}}{66 {Z}_{c}}\right⌋ {Z}_{c}$ | $\left⌊\frac{25 {N}_{cb}}{50 {Z}_{c}}\right⌋ {Z}_{c}$ |
| 3 | $\left⌊\frac{56 {N}_{cb}}{66 {Z}_{c}}\right⌋ {Z}_{c}$ | $\left⌊\frac{43 {N}_{cb}}{50 {Z}_{c}}\right⌋ {Z}_{c}$ |

Table 14 shows values determined considering *K_{punc}* = 2, and it can be seen by looking at a fact that a denominator of a calculation formula is 66 (= 68 - 2) in a case of the base matrix 1, and the denominator of the calculation formula is 50 (= 52 - 2) in a case of the base matrix 2. That is, since the conventional rate matching in the 5G system does not input punctured information word bits themselves to the circular buffer, the *k₀* value can be determined based on a value smaller than numbers of columns 68 and 52 of an actual base matrix.

However, when information word puncturing is not applied, all information word bits should be input to the circular buffer, so that the above calculated value is also changed. First, in the case of the base matrix 1, the value of the denominator in the calculation formula may be changed to 68, and in the case of the base matrix 2, the value of the denominator in the calculation formula may be changed to 52. In other words, the location of the bit at which transmission starts may be determined based on the RV value and the total number of columns of the base matrix.

As a specific example, Table 15 shows a method for determining *k₀* value when information word puncturing is not applied.

**[Table 15]**

| rv_{id} | *k₀* | |
|---|---|---|
| | LDPC base graph 1 | LDPC base graph 2 |
| 0 | 0 | 0 |
| 1 | $\left⌊\frac{17 {N}_{cb}}{68 {Z}_{c}}\right⌋ {Z}_{c}$ | $\left⌊\frac{13 {N}_{cb}}{52 {Z}_{c}}\right⌋ {Z}_{c}$ |
| 2 | $\left⌊\frac{34 {N}_{cb}}{68 {Z}_{c}}\right⌋ {Z}_{c}$ | $\left⌊\frac{26 {N}_{cb}}{52 {Z}_{c}}\right⌋ {Z}_{c}$ |
| 3 | $\left⌊\frac{58 {N}_{cb}}{68 {Z}_{c}}\right⌋ {Z}_{c}$ | $\left⌊\frac{45 {N}_{cb}}{52 {Z}_{c}}\right⌋ {Z}_{c}$ |

When the RV value is 1, 2, or 3, the *k₀* value is calculated based on the total number of columns of the base matrix. In addition, at least for RV values 2 and 3, when the same base matrix, *N_{cb}*, *Z_{c}* is applied, it is preferable that the *k₀* value when information word puncturing is not applied is greater than the *k₀* value when information word puncturing is applied. For specific parameters, the two values may be equal, but in general, the *k₀* value when puncturing is not applied cannot be smaller, and there must exist a case where it is larger.

If information word puncturing is applied to only one column for the base matrix, that is, when *K_{punc} =* 1, the denominator in the formula of Table 15 should similarly be a value obtained by subtracting 1 from the total number of columns of the base matrix. In this case, at least for RV values 2 and 3, the *k₀* value when the same base matrix, *N_{cb}*, *Z_{c}*, is applied is preferably equal to or greater than that when Table 14 is applied, and equal to or less than that when Table 15 is applied.

The value of *K_{punc}* or *K_{punc,b}* may be determined based on a higher layer parameter (for example, an RRC parameter). For example, when a situation requiring a high encoding gain or a specific service corresponding thereto is configured through the parameter (when a first configuration is indicated), it is set to a value that is the first number of punctured bits (*K_{punc} > 0*). When a situation requiring a high information throughput or a specific service corresponding thereto is configured (when a second configuration is indicated), it may be set to *K_{punc}* = *0* or a value smaller than the first number of punctured bits corresponding to the first configuration (a second number of punctured bits).

However, embodiments of the present disclosure are not limited thereto, and the value of *K_{punc}* or *K_{punc,b}* may not be separately configured but may be predetermined for the first configuration or the second configuration. Accordingly, when receiving the first configuration or the second configuration, the terminal can determine the corresponding number of information word bits to be punctured (furthermore, when the number of bits to be punctured is 0, it can be expressed as determining not to perform puncturing).

In addition, the situation or service requiring a high encoding gain or the situation or service requiring high information throughput may be indicated or configured based on separate signaling or parameters, but may also be indicated or configured based on other existing signaling information or parameters. For example, puncturing of information word bits may be variably applied based on at least one of a configured CQI or MCS index. In addition, puncturing of the information word bits may be variably applied according to a range of a value based on at least one of the modulation order or the code rate determined from the CQI or the MCS index. For example, whether the first configuration or the second configuration is applied may be configured according to the CQI or MCS index value (for example, in the form of a table). Alternatively, the number of information word bits to be punctured may be configured according to the CQI or MCS index value (for example, in the form of a table), and the configuration according to the indicated CQI or MCS index value may be applied or puncturing of the information word bits may be performed.

In addition, puncturing of the information word bits may be variably applied according to a configured CQI or MCS table. In other words, among a plurality of CQI or MCS tables, some CQI or MCS tables correspond to a method for applying puncturing of information word bits, and some other CQI or MCS tables correspond to a method for not applying puncturing of information word bits or puncturing a smaller number of information word bits. Accordingly, the base station or the terminal can determine whether to apply puncturing of information word bits based on the configured CQI or MCS table. As a specific example, when a first CQI or a first MCS table is configured in the base station or the terminal, it is determined that puncturing is applied to a part of the information word bits, so that the encoding process of [Table 9] may be performed, or the encoding process may be performed for *K_{punc} > 0* in [Table 13]. If a second CQI or a second MCS table is configured, an encoding process to which puncturing of information word bits is not applied may be performed as shown in [Table 12], or encoding may be performed by applying puncturing to *K_{punc}* = *0* or a smaller number of information word bits than the number of information bits punctured when the first CQI or the first MCS table is configured in [Table 13].

The above examples are merely examples, and a criterion for variably applying puncturing of the information word bits can be variously applied. For example, when a specific CQI or MCS table is configured, puncturing of information word bits may be variably applied according to the CQI or MCS index, puncturing of information word bits may be variably applied based on a configured UE category, or puncturing of information word bits may be variably applied depending on whether it is downlink or uplink.

When puncturing of information word bits is variably applied as in the above examples, the receiver may apply a flooding decoding method, but may also apply a layered decoding method. The performance of the layered decoding method may vary depending on the order of layers or row blocks performing decoding. For example, assuming that layered decoding is performed based on a parity check matrix corresponding to the base matrix of Equation 21, and when each of 6 row blocks is divided into 6 layers, layered decoding can be performed in an order of [0, 1, 2, 3, 4, 5] from the 0-th row block (= layer) to the 5-th row block. In this case, numbers included in the order may correspond to row block indices of the parity check matrix or row indices of the base matrix, and the same applies hereinafter. However, if information word bits corresponding to the first two column blocks are punctured, decoding update does not proceed even if layered decoding is first performed on the 0-th, 2-th, 3-th, 4-th, and 5-th row blocks. Therefore, when information word puncturing is applied, it is preferable to perform layered decoding on the 1-st row block first. As a specific example, when layered decoding is performed in an order such as [1, 4, 5, 0, 2, 3], a faster decoding convergence effect can be achieved compared to performing layered decoding in an order such as [0, 1, 2, 3, 4, 5], so that superior decoding performance can be achieved when a small number of iterative decodings is applied.

On the other hand, when puncturing is not applied to the information word bits, there is no case where the decoding update does not proceed regardless of which row block or which layer is selected to perform layered decoding. Therefore, performing decoding on a row block other than the 1-st row block can support better performance and decoding convergence speed.

As described above, layered decoding scheduling, which means the order of row blocks or layers performing decoding, can be differently applied depending on whether puncturing is applied to information word bits or the size of punctured information word bits.

The present invention proposes a method for determining an order of layers (or row blocks when a layer is composed of one row block) to perform decoding in order to optimize the performance of layered decoding, and a specific embodiment thereof. To this end, various factors to be considered to determine the order of layers to perform decoding are examined, and a specific method for establishing appropriate decoding scheduling by combining these factors is proposed. In addition, for convenience of explanation, the present invention shows specific embodiments only for the case of using a quasi-cyclic LDPC code, but note that it is easily extendable to general LDPC codes.

### <Conditions for Determining Layered Decoding Scheduling>

When a high-order modulation scheme such as 16-QAM, 64-QAM, 256-QAM, 1024-QAM, or the like is applied, each bit configuring a modulation symbol has different reliability. For example, in each modulation symbol, most significant bits (MSBs) typically have a low bit error rate, that is, high reliability, and least significant bits (LSBs) typically have a high bit error rate, that is, low reliability. Therefore, a significant difference may occur in LDPC decoding performance depending on how LDPC codeword bits to be transmitted are mapped to a modulation symbol. When a mapping rule to a modulation symbol is predetermined, an order of layers to initially perform decoding may vary according to a modulation scheme (or order) and the mapping rule in order to maximize performance.

Condition 1) When a part of information word bits (or a code block) is punctured and transmitted, initial decoding for a row block corresponding to a row having a degree or weight of 0 or 1 within a submatrix configured only of a column or column blocks corresponding to the punctured information word bits in a base matrix is prioritized. When there is no information word puncturing, Condition 1) is ignored.

Condition 2) Decoding for a row block in which theoretical decoding performance is maximized is prioritized in consideration of a degree or weight distribution, a modulation order, or modulation schemes. In many cases, in an initial decoding process, the decoding performance can be significantly improved as a check node degree, that is, a row weight, is lower. In addition, since reliability or a bit error rate of each bit configuring a modulation symbol varies depending on a modulation scheme, an optimized scheduling method may vary according to a modulation scheme. For the theoretical performance, various methods such as a density evolution analysis or an extrinsic information transfer (EXIT) chart analysis may be applied.

Condition 3) A row block to perform decoding is prioritized in consideration of a part of a base matrix or a parity check matrix of an LDPC code that is substantially used in decoding or affects performance according to a code rate or rate matching. That is, the order of layers to be decoded may be changed according to a code rate or rate matching.

Condition 4) A row block to perform decoding is prioritized in consideration of a part of a base matrix or a parity check matrix of an LDPC code that is substantially used or affects performance according to a TBS or a CBS. That is, the order of layers to be decoded may be changed according to a TBS size.

Condition 1) is substantially a condition for fast decoding convergence in consideration of a limited number of decoding iterations depending on whether information word bit puncturing is applied. In the case of an LDPC code, puncturing of a parity part is variable, and when a parity having a degree of 1 is punctured, a part of a parity check matrix corresponding thereto may be excluded from a decoding process to perform decoding.

When a high-order modulation scheme such as 16-QAM, 64-QAM, 256-QAM, 1024-QAM, or the like is applied, each bit constituting a modulation symbol has different reliability. For example, in each modulation symbol, most significant bits (MSBs) typically have a low bit error rate, that is, high reliability, and least significant bits (LSBs) typically have a high bit error rate, that is, low reliability. Therefore, a significant difference may occur in LDPC decoding performance depending on how LDPC codeword bits to be transmitted are mapped to a modulation symbol. When a mapping rule to a modulation symbol is predetermined, an order of layers to initially perform decoding may vary according to a modulation scheme (or order) and the mapping rule in order to maximize performance.

In a communication system applying appropriate rate matching to support a variable code rate, since a submatrix of a parity check matrix corresponding to the rate matching substantially affects performance, the Condition 3) may be considered to reflect such a characteristic. For example, in an LDPC encoding/decoding system using a parity check matrix corresponding to the base matrix of Equation 21, if a high code rate close to 1 is supported, some parity bits corresponding to the last one or two column blocks in a core part of the parity check matrix may be punctured by rate matching. In this case, obviously, initial decoding should be performed on a first row block to minimize an invalid decoding process.

On the other hand, when a code rate is relatively low, a best encoding/decoding performance may be supported when initial decoding is preferentially applied to a row block other than the 1-st row block. For example, since the 6-th row block, the 10-th row block, etc. of the parity check matrix corresponding to M(BG1) correspond to a row block having a degree or weight of 0 or 1 within a submatrix consisting only of columns or column blocks corresponding to punctured information word bits, when applying LDPC encoding based on M(BG1), if the code rate is lower than 22/(22 + 6 - 2) or 22/(22 + 7 - 2), performing decoding first on a row block other than the 1-st row block may support good encoding/decoding performance. Similarly, when applying LDPC encoding based on M(BG2), if the code rate is equal to or greater than 10/(10 + 6 - 2), it is preferable to perform decoding first on one of the 1-st or 4-th row blocks in the parity check matrix. However, if the code rate is lower than 10/(10 + 6 - 2) or 10/(10 + 7 - 2), performing decoding first on a row block other than the 1-st or 4-th row block may support good encoding/decoding performance. When performing LDPC encoding based on M(BG2), since the size of the TBS varies the number of columns used among 10 columns corresponding to information word bits, the criteria for the code rate may vary, and for convenience, it may be classified by the number of rows of the base matrix used or the number of row blocks of the parity check matrix. For example, in M(BG2), if the number of rows actually used for decoding is 6 or 7 or less, it is preferable to perform decoding first on one of the 1-st or 4-th row blocks. If the number of rows actually used for decoding is 6 or 7 or more, it may be preferable to perform decoding first on a row block other than the 1-st or 4-th row block. Similarly, when applying LDPC encoding/decoding using M(BG1), the number of rows of the base matrix or the number of row blocks of the parity check matrix may be judged based on 6 or 7. In a case that the code rate supported by the system is not variable, the optimal decoding scheduling order may be determined as one.

As described above, since the size and range of a submatrix affecting performance in a parity check matrix vary depending on whether puncturing is applied and/or the code rate, etc., applying one fixed layered decoding scheduling method is easy to implement, but performance may be somewhat lost. Therefore, if implementation is possible, encoding/decoding performance is improved when variable decoding scheduling is applied based on whether puncturing is applied, a maximum code rate or a minimum code rate that can be supported, or an actually supported code rate, a modulation order, and the like.

For reference, as the code rate used in Condition 3), an effective code rate obtained by dividing the number of information word bits or a code block size by the number of transmitted bits may be used. Alternatively, a code rate defined from MCS or CQI (channel quality indicator) related system information (for example, an MCS index or a CQI index, etc.) may be used. Using the effective code rate has an advantage of defining a scheduling order or pattern capable of more accurate performance prediction, whereas an additional process of calculating the effective code rate may be required. When a code rate defined in an MCS or a CQI is used, an additional operation may not be required, but performance degradation may occur because it may differ from a code rate optimized for a predetermined scheduling order or pattern.

Condition 4) may be applied when a part of a base matrix or a parity check matrix of an LDPC code substantially used for decoding or affecting performance is different according to a TBS or a CBS. Actually, according to the TS 38.212 document, which is a 3GPP 5G standard specification, when a code block (or information word bits) is mapped to a submatrix corresponding to information word in a parity check matrix, a range thereof is set differently according to a CBS. For example, when encoding is performed based on a second base matrix BG2 defined in the TS 38.212 (in TS 38.212, a base matrix is expressed as a base graph), if a CBS or TBS length is greater than 640, K_{b} = 10 column blocks are selected; if it is 640 or less and greater than 560, K_{b} = 9 column blocks are selected; if it is 560 or less and greater than 192, K_{b} = 8 column blocks are selected; and if it is 192 or less, K_{b} = 6 column blocks are selected, and then encoding is performed based on the K_{b} column blocks. Therefore, remaining column blocks except for the K_{b} column blocks in the submatrix of the parity check matrix corresponding to information word bits or a code block may not be used in the encoding process. Not using a part of a given parity check matrix in the encoding process in this manner is an operation such as shortening, which means that a degree distribution substantially affecting performance is changed. Therefore, as mentioned in Condition 2), since there can be a significant impact on theoretical performance of an LDPC code, an optimal scheduling order or pattern may vary depending on a TBS or CBS length.

An optimal layered decoding order or pattern may differ from each other according to the number of row blocks actually utilized for decoding in a parity check matrix. However, when the code rate is low, the performance difference decreases, and when the code rate is high, the performance difference is relatively large. Therefore, if a layered decoding order or pattern is optimized for a high code rate using a greedy algorithm and then an order or pattern for a low code rate is optimized based on the result, a semi-optimized order or pattern can be derived as a sequence in a simple form. The present invention presents a Nested-Sequence Approach (NSA) layered decoding method as a method for maximizing performance although complexity increases somewhat, in which a layered decoding order or pattern is stored using a sequence having a Nested structure (or overlapping structure) based on a length of a rate-matched bit string, i.e., a transmitted total codeword length *Eᵣ*, and RV values, and then decoding is performed.

A receiving unit of a terminal or a base station performs a desegmentation process including a process of determining a TBS or CBS value, a process of determining which base matrix between *M*(**H_{BG1}**) or *M*(**H_{BG2}**) was used, a process of determining a block size (Z), and the like, and then can determine the number of codeword bits *Eᵣ* transmitted after rate matching for an r-th code block in consideration of the determined value, allocated resources, a modulation scheme, and the like. However, in a 3GPP 5G communication system, when transmission is required for a case where the number of ACK or NACK bits, which are acknowledgment signals, is 1 or 2, an effect such as puncturing of some of CSI-part2 (channel state information part2) and/or UL-SCH (Uplink Shared Channel) data bits may occur, so some of *Eᵣ* bits may not actually be transmitted. However, the receiver considers that corresponding transmission codeword bits have also been transmitted, but sets codeword bits at corresponding locations to LLR = 0 to process them like punctured bits.

In other words, the value of the number of transmitted codeword bits *Eᵣ* may mean the number of bits physically and actually transmitted from a transmitter, but in some cases, it may mean the number of codeword bits that can be determined to have been transmitted by a receiver.

The number of row blocks of a parity check matrix or the number of rows of a base matrix *N_{RowBlk}* effective (or actually affecting performance) in an encoding/decoding process may be determined based on the number of codeword bits *Eᵣ*. For example, the number of row blocks of a parity check matrix or the number of rows of a base matrix *N_{RowBlk}* may be determined based on Equation 22. [Equation 22] ${N}_{RowBlk} = \left⌈\frac{{E}_{r} - \left({K}_{b}-{K}_{punc , b}\right) \times Z}{Z}\right⌉ = \left⌈\frac{{E}_{r}}{Z}\right⌉ - \left({K}_{b}-{K}_{punc , b}\right)$

Here, *K_{b}* means the number of column blocks actually used while corresponding to information word bits in a parity check matrix for LDPC encoding of a code block, given in a base matrix, and *K_{punc}* means the number of column blocks corresponding to bits to which puncturing is applied among information word bits or code blocks.

As a specific example, referring to the 3GPP standard specification document TS 38.212, it is assumed that TBS = 5632 bits (including 16 bits of CRC), a code rate according to an MCS index is greater than 2/3, and *Eᵣ* = 7632. Under these conditions, *M*(**H_{BG1}**) is determined as a base matrix for LDPC encoding, and a block size is determined as Z = 5632/22 = 256. In the case of the 3GPP standard specification TS 38.212, fixed to *K_{punc,b}* = 2, and when *M*(**H_{BG1}**) is used, *K_{b}* is always 22, thereby becoming ${N}_{RowBlk} = \left⌈\frac{11072}{256}\right⌉ - 20 = 10$. That is, a total of 10 row blocks in a parity check matrix substantially affect LDPC encoding/decoding performance.

When retransmission is performed, *Eᵣ* may be determined differently by RV values. For example, initial transmission was performed based on RV0, and when retransmission is performed based on RV2 or RV3, some of bits between RV1 and RV2 or between RV1 and RV3 may not actually have been transmitted. When parity bits corresponding to a second part of a parity check matrix are not transmitted, the rows corresponding to those parity bits have no effect on an LDPC decoding process. Therefore, the receiver may perform LDPC decoding by excluding the corresponding rows, but for convenience of implementation, *Eᵣ* may be determined based on a parity bit corresponding to a last column and row among transmitted parity bits. That is, a total number of columns from a 0-th column of a parity check matrix to a last column of actually transmitted parity bits may be determined as *Eᵣ*. A value *Eᵣ* required to obtain the number of row blocks required for LDPC decoding as in Equation 22 may be determined differently according to an RV value applied during transmission.

*Eᵣ* does not exceed a total number of columns of a parity check matrix of an LDPC code. For example, when applying *M*(**H_{BG1}**) or a base matrix of the same size or a parity check matrix corresponding thereto, a value *Eᵣ* does not exceed *N* = 68*Z_{c}*, and when applying *M*(**H_{BG2}**) or a base matrix of the same size or a parity check matrix corresponding thereto, a value *Eᵣ* does not exceed *N* = 52*Z_{c}* . When *Eᵣ* values are 68*Z_{c}* in 67*Z_{c}* + *1* or 52*Z_{c}* in 51*Z_{c}* + *1* , respectively, it means that LDPC decoding is performed using all rows of a base matrix or all row blocks of a parity check matrix from Equation 22.

If a greedy algorithm is appropriately used while considering all of Condition 1), Condition 2), Condition 3), and Condition 4) of <Conditions for Determining Layered Decoding Scheduling>, a decoding order or pattern of a Nested structure showing stable performance may be determined in consideration of at least a part of whether puncturing is applied, a modulation order, a TBS, or a code rate.

As a specific example, for a case where puncturing is applied, the sequence as follows is defined as a layered decoding order or pattern based on base matrix 1 *M*(**H_{BG1}**):
Pattern-1:
   [42, 40, 26, 34, 37, 45, 30, 32, 22, 28, 38, 44, 41, 20, 27, 25, 31, 36, 39, 13, 33, 35, 24, 29, 43, 17, 23, 18, 21, 14, 6, 10, 16, 1, 4, 19, 7, 12, 15, 9, 5, 11, 8, 0, 2, 3]
   Similarly, the sequence as follows is defined as a layered decoding order or pattern based on base matrix 2 *M*(**H_{BG2}**):
Pattern-2:
   [22, 37, 40, 31, 24, 29, 20, 12, 27, 25, 28, 35, 38, 41, 32, 23, 34, 39, 17, 16, 36, 21, 33, 18, 15, 9, 14, 30, 11, 19, 6, 7, 8, 26, 10, 13, 1, 4, 5, 0, 2, 3]

However, a decoding order or pattern of a Nested structure of the present invention is not limited to the above order or pattern. That is, it is obvious that embodiments of the present invention can be applied to a decoding order or pattern of a Nested structure generated using the greedy algorithm.

In addition, numbers included in the order or pattern may correspond to row block indices of a parity check matrix or row indices of a base matrix.

Hereinafter, a method for using Pattern-1 and Pattern-2 will be described in detail.

A receiver first determines the number of row blocks *N_{RowBlk}* substantially used or affecting performance in a given base matrix *M*(**H_{BG1}**) or *M*(**H_{BG2}**) and a parity check matrix corresponding thereto. Then, the receiver selects a sequence having values smaller than *N_{RowBlk}* from the sequence of Pattern-1 or Pattern-2, and applies the selected sequence as a layered decoding order or pattern used for actual decoding. Such a scheme is referred to as an NSA layered decoding method for convenience.

As a specific embodiment, for a case of performing LDPC decoding based on base matrix 2 *M*(**H_{BG2}**), it is assumed that input bits (TB+CRC) are 3840 bits (including 16 bits of CRC), a code rate according to an MCS index is less than 2/3, and *Eᵣ = 11072.* In the case of the 3GPP standard specification TS 38.212, under these conditions, *M*(**H_{BG2}**) is determined as a base matrix for LDPC encoding, a block size is determined as Z = 384, and fixed to *K_{punc,b} = 2.* In addition, when the number of input bits is 3840, since K_{b} = 10, thereby becoming ${N}_{RowBlk} = \left⌈\frac{11072}{384}\right⌉ - 8 = 21$ . That is, a total of 21 row blocks in a parity check matrix substantially affect LDPC encoding/decoding performance. In this case, the receiver selects a sequence consisting only of numbers smaller than the *N_{RowBlk}* value of 21 from the Pattern-2 sequence. That is, the receiver may determine a sequence (or pattern) consisting only of valid row block indices in the Pattern-2 sequence.

Valid row block indices in the Pattern-2 sequence are as shown below.
[22, 37, 40, 31, 24, 29, **20**, **12**, 27, 25, 28, 35, 38, 41, 32, 23, 34, 39, **17, 16**, 36, 21, 33, **18, 15**, **9**, **14**, 30, **11**, **19**, **6**, **7**, **8**, 26, **10, 13**, 1, 4, 5, 0, 2, **3]**

Accordingly, an order or pattern determined based on valid row block indices in the Pattern-2 sequence is as follows.
[20, 12, 17, 16, 18, 15, 9, 14, 11, 19, 6, 7, 8, 10, 13, 1, 4, 5, 0, 2, 3]

The selected sequence [20, 12, 17, 16, 18, 15, 9, 14, 11, 19, 6, 7, 8, 10, 13, 1, 4, 5, 0, 2, 3] means a layered decoding pattern to be applied in an LDPC decoder, which means performing one cycle of iterative decoding by sequentially performing layered decoding starting from layered decoding for a 20-th row block to a 3-rd row block.

The NSA layered decoding scheme may be modified into various forms as well as the above embodiment. For example, when a value *Eᵣ* is not a multiple of Z, since some of parity bits corresponding to a last (*N_{RowBlk} -* 1)-th row block correspond to an LLR = 0 value, the receiver selects a sequence consisting only of numbers smaller than (*N_{RowBlk} -* 1) for the NSA layered decoding scheme to perform corresponding layered decoding, but the (*N_{RowBlk} -* 1)-th row block may perform layered decoding based on a predefined order. For example, when it is assumed that layered decoding is always applied to a (*N_{RowBlk} -* 1)-th row block at an i-th (i>0) location, a value (*N_{RowBlk} -* 1) may be applied between an (i-1)-th number and an i-th number in an order or pattern configured of a sequence consisting only of numbers smaller than (*N_{RowBlk} - 1*).

As a specific embodiment, assume a case where it is promised in a system that the last (*N_{RowBlk} -* 1)-th row block is always applied to a 1-st location after 0-th layered decoding. In the same manner as the above-described embodiment, when it is assumed that TBS = 3840 bits (including 16 bits of CRC), a code rate according to an MCS index is less than 2/3, and *Eᵣ = 11072,* instead of applying [20, 12, 17, 16, 18, 15, 9, 14, 11, 19, 6, 7, 8, 10, 13, 1, 4, 5, 0, 2, 3] as a layered decoding order or pattern, the location of 20 may be changed like [12, **20,** 17, 16, 18, 15, 9, 14, 11, 19, 6, 7, 8, 10, 13, 1, 4, 5, 0, 2, 3] to apply row block 20, which is (*N_{RowBlk} -* 1)-th row block, to a 1-st location. As another embodiment, assume a case where it is promised in a system that the last (*N_{RowBlk} -* 1)-th row block is applied to a 2-nd location. In the same manner as the above-described embodiment, when it is assumed that TBS = 3840 bits (including 16 bits of CRC), a code rate according to an MCS index is less than 2/3, and *Eᵣ = 11072,* instead of applying **[20,** 12, 17, 16, 18, 15, 9, 14, 11, 19, 6, 7, 8, 10, 13, 1, 4, 5, 0, 2, 3] as a layered decoding order or pattern, the location of 20 may be changed with 17, which is a 2-nd location, like [17, 12, **20,** 16, 18, 15, 9, 14, 11, 19, 6, 7, 8, 10, 13, 1, 4, 5, 0, 2, 3] to apply row block 20, which is (*N_{RowBlk} -* 1)-th row block, to a 2-nd location. Alternatively, 20 is located at a 2-nd location like [12, 17, **20,** 16, 18, 15, 9, 14, 11, 19, 6, 7, 8, 10, 13, 1, 4, 5, 0, 2, 3], and the order of 12 and 17 may be advanced by one.

The method described above is merely an example, and there may exist an NSA layered decoding scheme appropriately combined with other techniques based on sequences of various Nested structures.

If implementation complexity is not a significant problem, a receiver can apply a layered decoding scheme using a plurality of orders or patterns optimized based on a base matrix or a code rate or a modulation order of each LDPC code.

For example, in the case of a system using an LDPC base matrix corresponding to base matrix 2 *M*(**H_{BG2}**) and using some of modulation schemes such as QPSK, 16QAM, 64QAM, 256QAM, and 1024QAM, LDPC decoding may be performed by applying the following sub-optimal layered decoding order or pattern (or sequence) according to each modulation scheme:
Pattern-2-1-4Q: Order or pattern for QPSK or 4QAM
   [37, 40, 29, 27, 25, 22, 31, 28, 36, 33, 32, 34, 24, 41, 38, 21, 20, 35, 18, 12, 23, 39, 17, 30, 16, 15, 9, 14, 7, 11, 19, 6, 8, 26, 13, 10, 1, 4, 5, 0, 2, 3]
Pattern-2-1-16Q: Order or pattern for 16-QAM
   [37, 40, 29, 27, 25, 22, 31, 34, 28, 33, 36, 24, 21, 32, 39, 20, 41, 38, 35, 18, 12, 23, 17, 16, 30, 15, 9, 14, 6, 11, 7, 19, 10, 8, 26, 1, 4, 5, 13, 0, 2, 3]
Pattern-2-1-64Q: Order or pattern for 64-QAM
   [37, 40, 33, 29, 25, 27, 32, 23, 22, 36, 31, 28, 24, 26, 34, 20, 18, 21, 39, 12, 41, 38, 35, 17, 30, 16, 14, 11, 15, 6, 7, 9, 19, 10, 8, 13, 1, 4, 5, 0, 2, 3]
Pattern-2-1-256Q: Order or pattern for 256-QAM
   [40, 37, 33, 32, 30, 29, 28, 41, 27, 26, 25, 39, 23, 22, 24, 38, 36, 21, 20, 18, 12, 35, 31, 17, 15, 9, 14, 34, 16, 6, 11, 7, 19, 10, 8, 1, 4, 5, 13, 0, 2, 3]
Pattern-2-1-1024Q: Order or pattern for 1024-QAM
   [41, 40, 39, 38, 37, 36, 35, 34, 33, 32, 31, 30, 29, 28, 27, 26, 25, 24, 23, 22, 21, 20, 18, 15, 12, 17, 11, 9, 16, 14, 6, 7, 1, 19, 10, 13, 4, 8, 5, 0, 2, 3]

A transmitter can transmit data bits according to each modulation scheme or order. Then, a receiver appropriately demodulates a received signal according to each modulation scheme or order to determine an LLR value for each received data bit, and then can perform layered decoding based on the LLR value and the patterns.

Meanwhile, for convenience of explanation, the patterns or Pattern-2-1-4Q to Pattern-2-1-1024Q are described as being defined for a specific modulation scheme, respectively, but embodiments of the present invention are not limited thereto. That is, it is obvious that the patterns or sequence Pattern-2-1-4Q to Pattern-2-1-1024Q can be applied to each modulation scheme or order according to a configuration of a transmitter or a receiver. For example, this means that the Pattern-2-1-4Q can be applied not only to a modulation scheme QPSK but also to 16QAM, 64QAM, 256QAM, and 1024QAM.

Meanwhile, as described above, embodiments of the present invention can be applied to a case where decoding is performed based on a layer composed of two or more row blocks. If a row block adjacent to a row block determined to apply layered decoding has an orthogonal or quasi-orthogonal property with the row block, decoding may be performed based on a layer including corresponding row blocks. In addition, it is obvious that row blocks having orthogonality or quasi-orthogonality constitute one layer to perform layered decoding even during subsequent sequential performance of decoding or reverse-order performance of decoding. When at least one layer is composed of two or more row blocks, the layered decoding orders or patterns may be defined as a sequence shorter than a total number of row blocks, and additional information on which row block is combined may be required for a layer in which a plurality of row blocks are combined.

Meanwhile, the above-described layered decoding may be implemented in various manners such as block parallel decoding, row-block parallel decoding (or row parallel decoding).

Here, the block parallel decoding is a layered decoding scheme typically performed based on one or a plurality of blocks, i.e., a cyclic permutation matrix having a size of Z*Z, in a parity check matrix. In addition, the row-block parallel decoding (or row parallel decoding) is a layered decoding scheme typically performed based on one row block.

Since the row-block parallel decoding scheme is a scheme for performing decoding on all blocks (cyclic permutation matrices) included in a given row block or a layer composed of a plurality of row blocks, it can be viewed as an extension of a block parallel decoding scheme in a broad sense. Further, although implementation complexity may increase compared to a block parallel decoding scheme based on one block (cyclic permutation matrix), a higher decoding throughput can be supported.

Block parallel decoding may be performed based on one block (circular permutation matrix), but in general, it may also be performed based on a plurality of blocks. Not only that, it may also be performed on a basis smaller than one block, and in this case, block parallel decoding can typically be performed based on a divisor of a block size Z. In performing block parallel decoding, when a layered decoding is implemented based on a plurality of blocks, implementation complexity increases, but decoding throughput also increases.

Operations of a receiver according to an embodiment of the present invention are summarized as follows. That is, a receiver receives a signal corresponding to input bits transmitted from a transmitter, and may check the number of input bits based on the signal. In addition, the receiver may check a size of a code block based on the number of input bits, and perform layered decoding based on a parity check matrix corresponding to the size of the code block. In this case, the layered decoding may be preferentially decoded for a layer corresponding to at least one of row blocks having a degree of 1 within a submatrix corresponding to a column block to be punctured. In addition, the layered decoding may be performed by combining the various embodiments of the present invention described above.

In addition, a receiver may receive a signal corresponding to input bits transmitted from a transmitter, and check the number of input bits based on the signal. In addition, the receiver checks a size of a code block based on the number of input bits, and may perform layered decoding based on a parity check matrix corresponding to the size of the code block. The layered decoding may be performed based on a decoding order or pattern such as Pattern-1 or Pattern-2. In addition, when different decoding scheduling is applied according to a modulation scheme, a process of determining or deciding a modulation scheme or a modulation order applied to encoding may be included, and a receiver may perform layered decoding based on a pattern (or sequence) corresponding to decoding scheduling among Pattern-2-1-4Q to Pattern-2-1-1024Q according to the modulation scheme or modulation order.

The modulation order may be determined based on an MCS index. In addition, a code rate may be determined based on an MCS index. Alternatively, the code rate may be determined based on an effective code rate value, and the effective code rate value may be determined based on the number of bits Er actually transmitted through allocated resources.

In addition, the receiver determines a base matrix based on the number of input bits and a code rate, and can determine a parity check matrix based on the determined base matrix and a lifting size.

In the above embodiments, description has been fundamentally made assuming a case where a part of information word bits (or code blocks) is always punctured. However, information word bit puncturing may not be applied depending on situations in a system. In such a case, an order or pattern for the proposed layered decoding scheduling may not be optimal. Therefore, when information word bit puncturing is not applied, a layered decoding order or pattern different from a case where information word bit puncturing is applied may be applied.

For example, when puncturing is not applied, since an LLR value is updated even if decoding is first performed on any layer, reverse-order direction layered decoding is performed (considering Condition 2) of <Conditions for Determining Layered Decoding Scheduling>), and if puncturing is applied, various methods proposed in the above embodiments and the like can be applied.

In conclusion, a first pattern or a second pattern may be applied depending on whether a part of information word bits or code blocks is punctured. Specifically, performance can be improved if layered decoding is applied based on a first pattern when at least a part of information word bits or code blocks is punctured, and based on a second pattern different from the first pattern when not punctured.

Meanwhile, in the present invention, an order or pattern determining a layered decoding order may be determined and used based on a base matrix (or a parity check matrix) of an LDPC code, a code rate (or the number of row blocks used), a modulation order, whether information word bits are punctured, or the number of punctured information word bits, but an order or pattern may also be determined based on two or more conditions. In addition, embodiments of the present invention may be applied independently of each other or in combination with each other. In addition, when entirely different decoding orders or patterns are applied according to at least a part of each base matrix, modulation order, code rate (or the number of row blocks used), whether information word bits are punctured, and the number of punctured information word bits, performance can be optimized but complexity may increase, so the same pattern may be applied in some cases.

For example, in a layered decoding pattern for the modulation order, it may be set such that any one pattern or order among patterns or orders determined for each modulation order is used for a case of being less than or equal to or greater than or equal to a predetermined modulation order. In addition, the method for the present invention may be executed by combining a part or all of contents included in each embodiment within a range that does not harm the essence of the invention.

Although the present invention has been described with preferred embodiments, various changes and modifications may be suggested to those skilled in the art. It is intended that such changes and modifications fall within the scope of the appended claims. In addition, operations expressed as different blocks in the operational flowchart of the present invention may be implemented separately by a plurality of processors in an actual system, for convenience of explanation, but it is obvious that they may be implemented integrally by one processor.

Meanwhile, an electronic device according to various embodiments disclosed in this document may be devices of various forms. An electronic device may include, for example, at least one of a portable communication device (e.g., a smartphone), a TV, a computer device, a portable multimedia device, a portable medical instrument, a camera, a wearable device, or a home appliance. An electronic device according to embodiments of this document is not limited to the above-mentioned devices. In addition, an operation of transmitting a frame means not only being transmitted through a wireless channel or the like, but may also mean that an interface for outputting a frame for transmission to various electronic devices is included. For example, a certain processor may output a frame to an RF front end for transmission through a bus interface. Similarly, an operation of receiving a frame from another device may mean that various electronic devices have an interface for obtaining a frame received from another device. For example, a certain processor means being able to receive or obtain a frame from an RF front end through a bus interface.

Various embodiments of this document and terms used therein are not intended to limit the technology described in this document to specific embodiments, and should be understood to include various modifications, equivalents, and/or alternatives of a corresponding embodiment.

In connection with the description of drawings, similar reference numerals may be used for similar components. A singular expression may include a plural expression unless contextually specified otherwise. In this document, expressions such as "A or B", "at least one of A and/or B", "A, B or C", or "at least one of A, B and/or C" may include all possible combinations of items listed together. Expressions such as "first", "second", "1st", or "2nd" can modify corresponding components regardless of order or importance, and are merely used to distinguish one component from another component and do not limit corresponding components. When it is mentioned that a certain (e.g., first) component is "(functionally or communicatively) connected to" or "coupled to" another (e.g., second) component, the first component may be directly connected to the second component, or may be connected through another component (e.g., a third component).

Also, the term "determining" may encompass various meanings, which may mean various actions, for example, depending on situations, identifying, calculating or computing, processing, deriving, investigating, estimating, looking up (e.g., in a database or another data structure), ascertaining, and the like.

Meanwhile, in drawings describing the method for the present disclosure, the order of description does not necessarily correspond to the order of execution, and the chronological relationship may be changed or executed in parallel.

Alternatively, drawings describing the method for the present disclosure may omit some components and include only some components within a range that does not harm the essence of the present disclosure.

In addition, the method for the present disclosure may be executed by combining a part or all of contents included in each embodiment within a range that does not harm the essence of the present disclosure.

Although the present disclosure has been described with preferred embodiments, various changes and modifications may be suggested to those skilled in the art. It is intended that such changes and modifications fall within the scope of the appended claims. In addition, operations expressed as different blocks in the operational flowchart of the present disclosure may be implemented separately by a plurality of processors in an actual system, for convenience of explanation, but it is obvious that they may be implemented integrally by one processor.

## Claims

1. A method performed by a receiving apparatus in a communication system, the method comprising:
receiving a signal corresponding to at least a part of encoded bits;
determining a number of input bits based on the signal;
determining a base matrix based on the number of input bits;
determining a lifting size (Z) based on at least one of the number of input bits or the base matrix;
determining a parity check matrix based on at least one of the base matrix or the lifting size (Z); and
performing decoding of the signal based on the parity check matrix,
wherein, for a first configuration, input bits of a first length among the input bits are not included in the encoded bits,
wherein, for a second configuration, input bits of a second length among the input bits are not included in the encoded bits, and
wherein the second length is 0 or smaller than the first length, and
wherein a layered decoding order related to the first configuration is different from a layered decoding order related to the second configuration.

2. The method of claim 1, wherein the first configuration or the second configuration is determined based on a higher layer parameter.

3. The method of claim 1, wherein the first configuration or the second configuration is determined based on at least one of a channel quality information (CQI) or a modulation and coding scheme (MCS) index.

4. The method of claim 1, wherein the first configuration or the second configuration is determined based on at least one of a modulation order or a code rate.

5. The method of claim 1, wherein the first configuration or the second configuration is determined based on user equipment (UE) category information.

6. A receiving apparatus in a communication system, the receiving apparatus comprising:
a receiver; and
a controller coupled with the receiver and configured to:
receive a signal corresponding to at least a part of encoded bits,
determine a number of input bits based on the signal,
determine a base matrix based on the number of input bits,
determine a lifting size (Z) based on at least one of the number of input bits or the base matrix,
determine a parity check matrix based on at least one of the base matrix or the lifting size (Z), and
perform decoding of the signal based on the parity check matrix,
wherein, for a first configuration, input bits of a first length among the input bits are not included in the encoded bits,
wherein, for a second configuration, input bits of a second length among the input bits are not included in the encoded bits, and
wherein the second length is 0 or smaller than the first length, and
wherein a layered decoding order related to the first configuration is different from a layered decoding order related to the second configuration.

7. The receiver of claim 6, wherein the first configuration or the second configuration is determined based on a higher layer parameter.

8. The receiver of claim 6, wherein the first configuration or the second configuration is determined based on at least one of a CQI or an MCS index.

9. The receiver of claim 6, wherein the first configuration or the second configuration is determined based on at least one of a modulation order or a code rate.

10. The receiver of claim 6, wherein the first configuration or the second configuration is determined based on user equipment (UE) category information.
